# NEUE EUROPÄISCHE PATENTSCHRIFT

(11) **EP 2 845 638 B2**
(45) Veröffentlichungstag und Bekanntmachung des Hinweises auf die Entscheidung über den Einspruch: **03.07.2024**
(45) Hinweis auf die Patenterteilung: 22.08.2018
(21) Anmeldenummer: 13183511.8
(22) Anmeldetag: 09.09.2013
(51) Int. Cl.: B01D 53/06

(54) **Verfahren zum Betreiben einer Adsorptionsvorrichtung, sowie Steuerungseinrichtung**
Method for operating an adsorbing device, and control device
Procédé de fonctionnement d'un dispositif d'adsorption et dispositif de commande

(43) Veröffentlichungstag der Anmeldung: 11.03.2015
(73) Patentinhaber: KAESER KOMPRESSOREN SE, 96450 Coburg (DE)
(72) Erfinder: Fredenhagen, Andreas, 96450 Coburg (DE)
(74) Vertreter: Eisenführ Speiser

(56) Entgegenhaltungen:
- EP-A1- 0 566 180
- EP-B1- 2 332 631
- WO-A1-00/74819
- WO-A1-02/47797
- CH-A5- 691 349
- US-A1- 2011 132 191
- US-B2- 7 569 095

## Beschreibung

### GEBIET DER ERFINDUNG

Die vorliegende Erfindung betrifft Verfahren zum Betreiben einer Adsorptionsvorrichtung. Darüber hinaus betrifft die Erfindung eine Steuerungseinrichtung, um eine Adsorptionsvorrichtung für einen Betrieb gemäß derartigen Verfahren zu steuern.

### TECHNISCHER HINTERGRUND

Wenngleich die Erfindung vorteilhaft in vielerlei Fällen Anwendung finden kann, in denen eine adsorbierbare und/oder kondensierbare Komponente eines Gasstroms aus diesem entfernt oder die Konzentration der Komponente in dem Gasstrom zumindest vermindert werden soll, sollen die Erfindung und die ihr zugrunde liegende Problematik nachfolgend beispielhaft anhand des Trocknens von Druckluft, mit anderen Worten, der Reduzierung der Wasserkonzentration in der Druckluft, näher erläutert werden. Es versteht sich, dass eine ähnliche Problematik auch bei der Entfeuchtung anderer Gase, insbesondere anderer unter Druck stehender Gase, wie etwa Stickstoff, Erdgas, oder Gase aus chemischen Produktionsprozessen, auftreten kann.

Eine Adsorptionstrocknungsvorrichtung zur Trocknung eines insbesondere verdichteten Gases, bei der sich das Adsorptionsmaterial in einer rotierenden Adsorptionskammer befindet, sowie ein Adsorptionstrocknungsverfahren, in Zusammenhang mit dem diese Adsorptionstrocknungsvorrichtung verwendet werden kann, werden zum Beispiel in der EP 2 332 631 B1 beschrieben.

Bei einem derartigen Adsorptionstrocknungsverfahren wird zur Adsorption ein Adsorptionsmaterial, beispielsweise ein Silicagel, verwendet. Solche Adsorptionsmaterialien sind in der Lage, aus einer Gasphase, wie zum Beispiel Druckluft, größere Mengen an Wasser aufzunehmen und zu binden, d. h. zu adsorbieren. Adsorptionsmaterialien, die Wasser adsorbiert haben, können dieses auch wieder an die Gasphase abgeben, d. h. desorbieren. Die Geschwindigkeit, mit der adsorbiert bzw. desorbiert wird, hängt im Allgemeinen von der Wasserkonzentration in der Gasphase, von der Beladung des Adsorptionsmaterials, d. h. dem Verhältnis von gebundener Wassermasse zur Masse des Adsorptionsmaterials, und von der Temperatur ab. Wenn die pro Zeiteinheit adsorbierten und desorbierten Wassermengen gleich groß sind, so dass die Wasserkonzentration in der Gasphase und die Beladung des Adsorptionsmaterials sich nicht ändern, spricht man vom Adsorptionsgleichgewicht. Die Konzentration in der Gasphase ist dann die zur Beladung korrespondierende Gleichgewichtskonzentration, die Beladung des Adsorptionsmaterials die zur Wasserkonzentration korrespondierende Gleichgewichtsbeladung. Wenn die Beladung des Adsorptionsmaterials geringer ist als die Gleichgewichtsbeladung, die sich bei der aktuellen Temperatur und Wasserkonzentration in der Gasphase ergäbe, kann das Adsorptionsmaterial Wasser aufnehmen und damit die Gasphase trocknen. Wenn dagegen die Beladung des Adsorptionsmaterials größer als die Gleichgewichtsbeladung ist, gibt das Adsorptionsmaterial Wasser an die Gasphase ab.

Die Gleichgewichtsbeladung des Adsorptionsmaterials bei einer bestimmten Wasserkonzentration in der Gasphase ist umso niedriger, je höher die Temperatur ist. Deshalb kann mit Wasser beladenes Adsorptionsmaterial bei hohen Temperaturen regeneriert werden, d. h. das Wasser an die Gasphase abgeben. Dadurch ist das Adsorptionsmaterial nach einem zwischenzeitlichen Abkühlen in der Lage, erneut Wasser aus der Gasphase aufzunehmen.

Bei der in der EP 2 332 631 B1 beschriebenen Vorrichtung durchläuft das Adsorptionsmaterial während eines Umlaufs drei verschiedene Sektoren. In einem Trocknungssektor wird das Adsorptionsmaterial von kühler, feuchter Druckluft durchströmt und nimmt von dieser Feuchtigkeit auf (Adsorption), so dass die Druckluft getrocknet wird. In einem darauffolgenden Regenerationssektor wird das Adsorptionsmaterial von heißer Druckluft durchströmt und dadurch erwärmt. Durch die Erwärmung gibt das Adsorptionsmaterial Feuchtigkeit an die Druckluft ab (Desorption). Das Adsorptionsmaterial hat nach dem Passieren des Regenerationssektors wieder eine geringe Feuchtebeladung und ist damit für den nächsten Durchgang des Trocknungssektors hinsichtlich der Feuchte regeneriert. Da das Adsorptionsmaterial nach dieser Regeneration aber noch heiß ist, wird es nach der Regeneration zunächst durch einen Kühlsektor bewegt, in dem es von getrockneter kühler Druckluft durchströmt und dadurch gekühlt wird. Das trockene und kühle Adsorptionsmaterial kann danach im Trocknungssektor wieder Feuchtigkeit von der zu trocknenden Druckluft aufnehmen.

Es hat sich gezeigt, dass das Trocknen von Druckluft mittels der vorstehend beschriebenen Adsorptionstrocknungsvorrichtung insbesondere dann gute Ergebnisse mit niedrigen Drucktaupunkten in einem Ausgangsgasstrom liefert, wenn die Adsorptionsvorrichtung im stationären Betrieb unter kontinuierlicher Förderung von Druckluft betrieben wird.

Wünschenswert wäre es aber, die Entfeuchtung in jenen Anwendungsfälle, in denen es zu einem intermittierenden oder stark intermittierenden Betrieb der Adsorptionsvorrichtung oder einer Anlage, in die die Adsorptionsvorrichtung integriert ist, kommt, noch weiter zu verbessern. Ein solcher stark intermittierender Betrieb ergibt sich zum Beispiel, wenn die Druckluftförderung, etwa wegen eines erheblich schwankenden Druckluftbedarfs, häufig unterbrochen und dann für relativ kurze Zeitintervalle wieder aufgenommen wird, um daraufhin erneut unterbrochen zu werden.

### ZUSAMMENFASSUNG DER ERFINDUNG

Vor diesem Hintergrund liegt der vorliegenden Erfindung somit die Aufgabe zugrunde, verbesserte Verfahren zum Betreiben einer Adsorptionsvorrichtung zu schaffen, welche insbesondere bei intermittierender Förderung eines Gasstroms, wie etwa von Druckluft oder eines anderen unter Druck stehenden Gases, ein verbessertes Entfernen einer adsorbierbaren und/oder kondensierbaren Komponente, wie zum Beispiel Wasserdampf, aus dem Gasstrom mit Hilfe der Adsorptionsvorrichtung ermöglichen. Ferner soll eine entsprechend verbesserte Steuerungseinrichtung angegeben werden.
Diese Aufgabe wird erfindungsgemäß durch ein erstes Verfahren mit den Merkmalen des Anspruchs 1 und/oder durch eine Steuerungseinrichtung mit den Merkmalen des Anspruchs 19 gelöst.

Bei den erfindungsgemäß vorgeschlagenen ersten Verfahren zum Betreiben einer Adsorptionsvorrichtung zum zumindest teilweisen Entfernen einer adsorbierbaren und/oder kondensierbaren Komponente aus einem Gasstrom beinhaltet die Adsorptionsvorrichtung ein Adsorptionsmaterial. Die Adsorptionsvorrichtung ist zudem derart eingerichtet, dass das Adsorptionsmaterial in einem Arbeitsbereich der Adsorptionsvorrichtung zum Entfernen der Komponente mit dem Gasstrom in Kontakt gebracht werden kann und dass das Adsorptionsmaterial in einem Regenerationsbereich der Adsorptionsvorrichtung durch Desorption der Komponente regeneriert werden kann. Hierzu können in einer Lastbetriebsphase der Adsorptionsvorrichtung aufeinanderfolgende Teilbereiche des Adsorptionsmaterials kontinuierlich in wiederkehrender Weise relativ zu dem Arbeitsbereich und dem Regenerationsbereich durch den Arbeitsbereich und den Regenerationsbereich hindurchbewegt werden.
Bei dem ersten erfindungsgemäßen Verfahren sind folgende Verfahrensschritte vorgesehen:
- der Gasstrom wird in der Weise durch die Adsorptionsvorrichtung gefördert, dass die Komponente zumindest teilweise aus dem Gasstrom entfernt wird und ein Ausgangsgasstrom, aus dem die Komponente zumindest teilweise entfernt ist, bereitgestellt wird; und
- bei einer zumindest zeitweiligen Unterbrechung oder Beendigung des Förderns des Gasstroms zur Bereitstellung des Ausgangsgasstroms wird eine Nachlaufbetriebsphase der Adsorptionsvorrichtung eingeleitet, wobei während der Nachlaufbetriebsphase ein Teilbereich des Adsorptionsmaterials durch eine Bewegung relativ zu dem Regenerationsbereich aus dem Regenerationsbereich herausbewegt wird.
Es sei erwähnt, dass die Einleitung der Nachlaufbetriebsphase bei der zumindest zeitweiligen Unterbrechung oder Beendigung des Förderns, wie dies vorstehend spezifiziert wurde, nicht notwendig unmittelbar beim Stoppen des Förderns des Gasstroms erfolgen muss, sondern dass zwischen dem Moment, in dem die Förderung unterbrochen oder beendet wird, und dem Moment des Beginns der Nachlaufbetriebsphase ein zeitlicher Abstand im Sinne einer Betriebspause auftreten kann.
Das zweite vorgeschlagene Verfahren zum Betreiben einer Adsorptionsvorrichtung weist die folgenden Verfahrensschritte auf:
- bei einem Beginn oder einer Wiederaufnahme eines Förderns des Gasstroms durch die Adsorptionsvorrichtung in der Weise, dass die Komponente zumindest teilweise aus dem Gasstrom entfernt wird und ein Ausgangsgasstrom, aus dem die Komponente zumindest teilweise entfernt ist, bereitgestellt wird, wird die Adsorptionsvorrichtung zunächst in einer Warmlaufbetriebsphase betrieben, wobei während der Warmlaufbetriebsphase das Adsorptionsmaterial relativ zu dem Arbeitsbereich und dem Regenerationsbereich stillsteht; und
- im Anschluss an die Warmlaufbetriebsphase wird eine Lastbetriebsphase eingeleitet, wobei während der Lastbetriebsphase aufeinanderfolgende Teilbereiche des Adsorptionsmaterials kontinuierlich in wiederkehrender Weise relativ zu dem Arbeitsbereich und dem Regenerationsbereich durch den Arbeitsbereich und den Regenerationsbereich hindurchbewegt werden.

Bei dem zweiten Verfahren erfolgt das Einleiten der Lastbetriebsphase in Abhängigkeit davon, ob Betriebsbedingungen vorliegen, die ein hinreichendes Regenerieren des Adsorptionsmaterials in dem Regenerationsbereich ermöglichen. Alternativ oder zusätzlich hierzu erfolgt bei dem zweiten Verfahren das Einleiten der Lastbetriebsphase, wenn ein Maß für die Bewegung, die das Adsorptionsmaterial während der Zeitdauer der Warmlaufbetriebsphase relativ zu dem Arbeitsbereich und dem Regenerationsbereich ausgeführt hätte, wenn die Adsorptionsvorrichtung statt in der Warmlaufbetriebsphase in einer Lastbetriebsphase betrieben worden wäre, einen vorgegebenen Wert überschreitet.
Die Erfindung schlägt ferner eine Steuerungseinrichtung vor, die dafür ausgebildet ist, eine Adsorptionsvorrichtung zum zumindest teilweisen Entfernen einer adsorbierbaren und/oder kondensierbaren Komponente aus einem Gasstrom zu steuern. Die zu steuernde Adsorptionsvorrichtung beinhaltet ein Adsorptionsmaterial und ist derart eingerichtet, dass das Adsorptionsmaterial in einem Arbeitsbereich der Adsorptionsvorrichtung zum Entfernen der Komponente mit dem Gasstrom in Kontakt gebracht werden kann und dass das Adsorptionsmaterial in einem Regenerationsbereich der Adsorptionsvorrichtung durch Desorption der Komponente regeneriert werden kann, und dass hierzu in einer Lastbetriebsphase der Adsorptionsvorrichtung aufeinanderfolgende Teilbereiche des Adsorptionsmaterials kontinuierlich in wiederkehrender Weise relativ zu dem Arbeitsbereich und dem Regenerationsbereich durch den Arbeitsbereich und den Regenerationsbereich hindurchbewegt werden können.
Die erfindungsgemäße Steuerungseinrichtung ist dafür ausgebildet, die Adsorptionsvorrichtung für einen Betrieb derselben gemäß dem ersten Verfahren zu steuern. Die Steuerungseinrichtung weist Steuerungsmittel
- zum Einleiten einer Nachlaufbetriebsphase der Adsorptionsvorrichtung und
- zum Ansteuern der Adsorptionsvorrichtung derart, dass während der Nachlaufbetriebsphase ein Teilbereich des Adsorptionsmaterials durch eine Bewegung relativ zu dem Regenerationsbereich aus dem Regenerationsbereich herausbewegt wird, wenn ein Fördern des Gasstroms durch die Adsorptionsvorrichtung in der Weise, dass die Komponente zumindest teilweise aus dem Gasstrom entfernt und ein Ausgangsgasstrom, aus dem die Komponente zumindest teilweise entfernt ist, bereitgestellt wird, zumindest zeitweilig unterbrochen oder beendet wird,
auf.

Die der Erfindung zugrunde liegende Erkenntnis besteht darin, dass es bei intermittierender Förderung des Gasstroms nützlich sein kann, wenn eine Bewegung des Adsorptionsmaterials durch den Arbeits- und Regenerationsbereich nicht exakt zu den gleichen Zeitpunkten beginnt und/oder endet wie die Förderung des Gasstroms, die der Bereitstellung des Ausgangsgasstroms dient, sondern dass es sinnvoll sein kann, während einer Warmlaufbetriebsphase die Bewegung des Adsorptionsmaterials für einen zu ermittelnden Zeitraum zu unterbinden und/oder während einer Nachlaufbetriebsphase die Bewegung des Adsorptionsmaterials noch weiterzuführen.

Mit einer Warmlaufbetriebsphase können sich über der Zeit seit Beginn oder Wiederaufnahme des Förderns zur Bereitstellung des Ausgangsgasstroms ändernde, insbesondere sich über der Zeit verbessernde und sich erst nach einer gewissen Zeit dem stationären Zustand annähernde Regenerationsbedingungen im Regenerationsbereich berücksichtigt werden. Insbesondere ermöglicht es die Warmlaufbetriebsphase, zu vermeiden, dass - selbst wenn das Adsorptionsmaterial in einem im Regenerationsbereich befindlichen Teilbereich vor einer Unterbrechung des Förderns bereits bis zur niedrigstmöglichen Beladung regeneriert war - bei dem Beginn oder der Wiederaufnahme des Förderns anfänglich ungünstige Regenerationsbedingungen im Regenerationsbereich die Beladung des Adsorptionsmaterials mit der zu entfernenden Komponente dort wieder verschlechtern und dann Adsorptionsmaterial mit ungünstig hoher Beladung in den Arbeitsbereich gelangt. Das zweite vorgeschlagene Verfahren sieht daher vor, die Einleitung einer Bewegung des Adsorptionsmaterials relativ zu dem Regenerationsbereich und dem Arbeitsbereich vom Vorliegen von für eine hinreichende Regeneration geeigneten Betriebsbedingungen und/oder von einem Maß für eine in der Warmlaufbetriebsphase "ausgelassene" Bewegung des Adsorptionsmaterials abhängig zu machen.

Die bei dem ersten Verfahren vorgesehene Nachlaufbetriebsphase schafft die Möglichkeit, bereits zumindest teilweise regeneriertes, vorzugsweise weitgehend oder vollständig regeneriertes Adsorptionsmaterial aus dem Regenerationsbereich herauszubewegen, und schafft insbesondere die Möglichkeit, zugleich einen Teilbereich des Adsorptionsmaterials, in dem das Adsorptionsmaterial stark mit der zu entfernenden Komponente beladen sein kann, aus dem Arbeitsbereich herausbewegen zu können. Insbesondere in Kombination mit einer Warmlaufbetriebsphase kann mit dem ersten Verfahren vermieden werden, dass bei einer häufig unterbrochenen Drucklufterzeugung durch Akkumulation der Komponente in einem im Arbeitsbereich befindlichen Teilbereich des Adsorptionsmaterials die Komponente mit der Zeit weniger wirkungsvoll aus dem Gasstrom entfernt wird. Mittels der Nachlaufbetriebsphase kann somit die Beladung des Adsorptionsmaterials, die über den Arbeitsbereich hinweg betrachtet bei Wiederaufnahme des Förderns vorliegt, günstig beeinflusst werden.

Es wird somit ersichtlich, dass die ersten und zweiten Verfahren insbesondere dann nützlich sein können, wenn bei intermittierender Förderung oder Bereitstellung eines Gasstroms, bei der Phasen der Förderung mit Stillstandsphasen wechseln, eine Komponente aus dem Gasstrom entfernt werden soll. Die Verfahren eignen sich somit, um eine Adsorptionsvorrichtung zu betreiben, die bei der Deckung von Bedarfsspitzen - zum Beispiel Spitzen eines Druckluftbedarfs innerhalb einer Fertigungsanlage oder eines Fertigungsbetriebs - eingesetzt werden soll. Mittels der Verfahren lassen sich auch Adsorptionsvorrichtungen betreiben, die regelmäßig im stationären Dauerbetrieb - zum Beispiel zur Deckung eines Grundbedarfs - betrieben werden und nur gelegentlich zur Deckung von Bedarfsspitzen eingesetzt werden.
Die Vorteile des ersten Verfahrens können auch mit der vorgeschlagenen, für ein Ansteuern der Adsorptionsvorrichtung für einen Betrieb gemäß dem ersten Verfahren ausgebildeten, Steuerungseinrichtung erzielt werden.

Unter dem Begriff des "Einleitens" einer Betriebsphase, also zum Beispiel einer Lastbetriebsphase oder einer Nachlaufbetriebsphase, soll vorliegend verstanden werden, dass die betroffene Phase gestartet oder, mit anderen Worten gesagt, begonnen wird. Zudem sei ausdrücklich darauf hingewiesen, dass Relativbewegungen des Adsorptionsmaterials einerseits und der Arbeits- und Regenerationsbereiche andererseits, insbesondere die vorstehend erwähnte Bewegung der Teilbereiche des Adsorptionsmaterials relativ zu dem Arbeits- und Regenerationsbereich, mittels der das Hindurchbewegen der Teilbereiche des Adsorptionsmaterials durch den Arbeits- und Regenerationsbereich erreicht wird, und auch die Relativbewegung eines Teilbereichs des Adsorptionsmaterials, mittels der dieser in der Nachlaufbetriebsphase aus dem Regenerationsbereich herausbewegt wird, nicht nur dadurch erzielt werden können, dass das Adsorptionsmaterial bewegt wird, während der Arbeits- und der Regenerationsbereich bezüglich einer Umgebung, in der die Adsorptionsvorrichtung betrieben wird, stillstehen. Stattdessen kann zur Erzielung der Relativbewegungen das Adsorptionsmaterial relativ zur Umgebung stillstehen, während Arbeits- und Regenerationsbereich sich bezüglich der Umgebung bewegen. Bei einer weiteren Variante könnten sich sowohl Arbeits- und Regenerationsbereich als auch Adsorptionsmaterial bezüglich der Umgebung in geeigneter Weise bewegen.

Vorteilhafte Weiterbildungen, Ausgestaltungen und Verbesserungen der Erfindung ergeben sich aus den Unteransprüchen sowie aus der Beschreibung unter Bezugnahme auf die Figuren der Zeichnung. Im folgenden werden Ausgestaltungen und Weiterbildungen der beiden erfindungsgemäßen Verfahren sowie der Steuerungseinrichtung erläutert.

Vorab soll darauf hingewiesen werden, dass im Rahmen der vorliegenden Anmeldung unter dem Begriff "Betriebsdaten" insbesondere errechnete, gemessene oder anderweitig erfasste oder ermittelte Größen verstanden werden sollen, die während einer laufenden Betriebsphase oder in einer Betriebspause der Adsorptionsvorrichtung oder einer Anlage, in der die Adsorptionsvorrichtung verwendet wird, erfasst oder gemessen werden können oder die für die jeweilige Betriebsphase oder Betriebspause in anderer Weise, zum Beispiel rechnerisch, ermittelt oder abgeschätzt werden können. Dabei sollen die "Betriebsdaten" eine Information, die der jeweiligen Betriebsphase oder Betriebspause oder einem Teil davon zugeordnet ist, darstellen, wobei diese Information über der Betriebszeit, insbesondere über der Betriebsphase oder Betriebspause, variieren kann. Alternativ kann die Information auch über die jeweilige Betriebsphase oder Betriebspause zeitlich gemittelt sein.

Um die Begrifflichkeiten übersichtlicher zu gestalten, soll der Begriff "Betriebsdaten" vorliegend zudem in der Weise verstanden werden, dass er sowohl einen Einzelwert einer Größe, eine Folge von mehreren Werten derselben Größe, Einzelwerte mehrerer verschiedener Größen oder Folgen mehrerer Werte mehrerer verschiedener Größen in Kombination umfassen kann.

Demgegenüber sollen vorliegend als "vorbestimmte Parameter" insbesondere solche Größen verstanden werden, die sich zum Beispiel aus dem Aufbau der Adsorptionsvorrichtung oder der Anlage, ihrer Dimensionierung, ihrer Abmessungen oder geometrischen Beschaffenheit oder der Materialwahl der Einzelbauteile ergeben oder die zum Beispiel extern vorgegebene Führungsgrößen darstellen. Derartige vorbestimmte Parameter könnten auch physikalische und/oder chemische Eigenschaften des verwendeten Adsorptionsmaterials sein.

Das Einleiten der Nachlaufbetriebsphase erfolgt in einer Ausgestaltung entweder
- in Abhängigkeit von Betriebsdaten der Adsorptionsvorrichtung, die einer oder mehreren Betriebsphasen und/oder Betriebspausen der Adsorptionsvorrichtung zugeordnet sind und/oder
- in Abhängigkeit von Betriebsdaten einer Anlage, in welcher die Adsorptionsvorrichtung verwendet wird und/oder
- in Abhängigkeit von einer Zeitdauer einer oder mehrerer Betriebsphasen und/oder Betriebspausen der Adsorptionsvorrichtung und/oder
- in Abhängigkeit von einem oder mehreren vorbestimmten Parametern der Adsorptionsvorrichtung und/oder des Adsorptionsmaterials,
oder, alternativ hierzu, bei der zumindest zeitweiligen Unterbrechung oder Beendigung des Förderns des Gasstroms zur Bereitstellung des Ausgangsgasstroms unabhängig von derartigen Betriebsdaten und/oder Zeitdauern und/oder vorbestimmten Parametern. Ein Einleiten der Nachlaufbetriebsphase unabhängig insbesondere von Betriebsdaten der Adsorptionsvorrichtung oder der Anlage, in der sie verwendet wird, lässt sich vergleichsweise einfach realisieren und kann nützlich sein, wenn von vornherein bekannt ist, dass das Unterbrechen und Wiederaufnehmen des Förderns des Gasstroms in einem relativ regelmäßigen Rhythmus erfolgt, dessen Periode beispielsweise mehr oder weniger genau bekannt ist. Dagegen kann, wenn die Förderung in unregelmäßiger, von vornherein nicht absehbarer Weise variiert, es nützlich sein, Betriebsdaten, Dauern von Betriebsphasen und/oder Betriebspausen, und bevorzugt zusätzlich vorbestimmte Parameter der Adsorptionsvorrichtung und/oder des Adsorptionsmaterials, zu berücksichtigen. Auf diese Weise kann dynamisch festgelegt werden, ob bei einer gegebenen Unterbrechung des Förderns eine Nachlaufbetriebsphase auszulösen ist oder eventuell - zum Beispiel im Falle eines der Unterbrechung vorangehenden stationären Betriebs über längere Zeit, also einer ausgedehnten Lastbetriebsphase - auf die Nachlaufbetriebsphase verzichtet werden kann.

In einer bevorzugten Ausgestaltung wird die Nachlaufbetriebsphase unmittelbar im Anschluss an die zumindest zeitweilige Unterbrechung oder Beendigung des Förderns des Gasstroms zur Bereitstellung des Ausgangsgasstroms eingeleitet. Dies ist bei intermittierendem Betrieb vorteilhaft, denn auf diese Weise kann vermieden werden, dass das Fördern des Gasstroms zur Bereitstellung des Ausgangsgasstroms wieder aufgenommen wird, bevor die Nachlaufbetriebsphase abgeschlossen ist.

In einer alternativen Ausgestaltung wird die Nachlaufbetriebsphase mit einer Verzögerung zwischen dem Zeitpunkt der zumindest zeitweiligen Unterbrechung oder Beendigung des Förderns des Gasstroms zur Bereitstellung des Ausgangsgasstroms und dem Zeitpunkt des Einleitens der Nachlaufbetriebsphase eingeleitet, wobei die Verzögerung bevorzugt eine Zeitdauer von höchstens zehn Minuten, besonders bevorzugt eine Zeitdauer von höchstens fünf Minuten, aufweist.

Gemäß einer Ausgestaltung erfolgt in dem Regenerationsbereich keine oder im Wesentlichen keine Regeneration des Adsorptionsmaterials, während das Fördern des Gasstroms zur Bereitstellung des Ausgangsgasstroms zumindest zeitweilig unterbrochen oder beendet ist. Neben der bereits angesprochenen günstigen Beeinflussung der Beladung des Adsorptionsmaterials, die bei Wiederaufnahme des Förderns über den Arbeitsbereich hinweg vorliegt, kann mittels der Nachlaufbetriebsphase insbesondere eine effiziente Regeneration bei einem Wiederbeginn des Förderns durch ein Herausbewegen von stark beladenem Adsorptionsmaterial aus dem Arbeitsbereich erzielt werden. Zusätzlicher Aufwand für eine Regeneration des Adsorptionsmaterials während der zeitweiligen Unterbrechung oder Beendigung des Förderns des Gasstroms ist bei dieser Ausgestaltung nicht erforderlich.

In einer Ausgestaltung ist die Adsorptionsvorrichtung derart eingerichtet, dass relativ zu einer Umgebung, in der die Adsorptionsvorrichtung betrieben wird, der Arbeitsbereich und der Regenerationsbereich stillstehend und das Adsorptionsmaterial bewegbar vorgesehen sind. Dies kann zu einem vergleichsweise einfachen Aufbau der Vorrichtung beitragen.

In einer Ausgestaltung wird während des Förderns des Gasstroms zur Bereitstellung des Ausgangsgasstroms der Gasstrom durch einen der Adsorptionsvorrichtung eingangsseitig vorgeschalteten Eingangskompressor verdichtet. Beispielsweise kann es sich bei dem Eingangskompressor um einen ein- oder mehrstufigen trockenlaufenden Schraubenverdichter und/oder einen Turboverdichter handeln. Die bei der Verdichtung anfallende Wärme kann dann besonders einfach und effizient für die Regeneration des Adsorptionsmaterials genutzt werden.

In einer Weiterbildung erfolgt während des Förderns des Gasstroms zur Bereitstellung des Ausgangsgasstroms die Regeneration in dem Regenerationsbereich bei im Vergleich zu dem Arbeitsbereich erhöhter Temperatur. Auf diese Weise wird eine wirkungsvolle Regeneration des Adsorptionsmaterials erzielt.

In einer Ausgestaltung erfolgt während des Förderns des Gasstroms zur Bereitstellung des Ausgangsgasstroms die Regeneration in der Weise, dass ein Regenerationsgasstrom in dem Regenerationsbereich mit dem Adsorptionsmaterial in Kontakt gebracht wird. Diese Ausgestaltung kann dazu beitragen, die desorbierte Komponente beim Regenerationsvorgang aus dem Adsorptionsmaterial wirkungsvoll abzuführen.

Gemäß einer bevorzugten und vorteilhaften Ausgestaltung ist vorgesehen, dass während des Förderns des Gasstroms zur Bereitstellung des Ausgangsgasstroms eine Vollstromregeneration des Adsorptionsmaterials erfolgt und dass hierzu der Gasstrom als Vollstrom den Regenerationsgasstrom bildet, der Regenerationsgasstrom nach einem Verlassen des Regenerationsbereichs dem Arbeitsbereich zugeführt wird und dort zum zumindest teilweisen Entfernen der Komponente mit dem Adsorptionsmaterial in Kontakt gelangt. Hierbei kann der Regenerationsgasstrom separat für sich oder vereinigt mit einem weiteren Gasstrom dem Arbeitsbereich zugeführt werden. Bei Vollstromregeneration steht eine große Menge an Regenerationswärme für die Regeneration des Adsorptionsmaterials zur Verfügung. Die verfügbare Regenerationswärme kann dabei deutlich oberhalb des Bedarfs liegen. Die bei dieser Ausgestaltung hohe Regenerationskapazität im Regenerationsbereich kann zu einer verbesserten Betriebssicherheit über einen weiten Bereich von Betriebsbedingungen beitragen.

In einer weiteren Ausgestaltung wird während des Förderns des Gasstroms zur Bereitstellung des Ausgangsgasstroms der Regenerationsgasstrom, nachdem er den Regenerationsbereich verlassen hat und bevor er in den Arbeitsbereich eintritt, mittels eines Kühlers abgekühlt und die Komponente zumindest teilweise kondensiert und als Kondensat abgeschieden. Der Regenerationsgasstrom kann hierbei separat für sich oder vereinigt mit einem weiteren Gasstrom gekühlt werden, die Komponente kann aus dem Regenerationsgasstrom separat für sich oder aus einer Vereinigung des Regenerationsgasstroms mit einem weiteren Gasstrom abgeschieden werden. In dieser Weise kann der für die Regeneration verwendete Gasstrom durch Kondensation zumindest von einem Anteil der vorhandenen Komponente befreit und zudem auf eine für die weitere Entfernung der Komponente mit Hilfe des Adsorptionsmaterials im Arbeitsbereich günstige Temperatur herabgekühlt werden.

Vorzugsweise umfasst der Eingangskompressor einen Kompressorkondensator insbesondere mit einem Kühler und einem Kondensatorabscheider. Weiter vorzugsweise kann der Kompressorkondensator den Kühler, der den Regenerationsgasstrom nach dem Verlassen des Regenerationsbereichs kühlt und/oder einen darauf folgenden Kondensatabscheider für das Abscheiden der Komponente als Kondensat zumindest teilweise ausbilden. Auf diese Weise können Kosten reduziert werden, insbesondere der Instandhaltungs- und Montageaufwand verringert werden.

In einer Ausgestaltung wird der Druck des Regenerationsgasstroms mittels einer Druckerhöhungseinrichtung angehoben, bevor der Regenerationsgasstrom in den Arbeitsbereich eintritt. Insbesondere kann hierbei der Druck des Regenerationsgasstroms separat für sich oder der Druck eines Gasstroms, der aus einer Vereinigung des Regenerationsgasstroms mit einem weiteren Gasstrom gebildet ist, mittels der Druckerhöhungseinrichtung gesteigert werden. Auf diese Weise kann beispielsweise die Ausbildung von unerwünschten Leckageströmen mit einfachen Mitteln verhindert werden. Die Druckerhöhungseinrichtung kann insbesondere motorbetrieben sein, und kann beispielsweise als ein Verdichter oder ein Gebläse oder eine Pumpe ausgebildet sein. Jedoch kann bei anderen Varianten dieser Ausgestaltung die Druckerhöhungseinrichtung auch derart ausgeführt sein, dass sie keinen Motorantrieb aufweist, zum Beispiel als Ejektor.

Bei dem weiteren Gasstrom kann es sich in Ausgestaltungen um einen Kühlgasstrom handeln, der insbesondere einen im Vergleich zu dem Regenerationsgasstrom geringen Massenstrom aufweist.

In einer Ausgestaltung erfolgt die Erhöhung des Drucks mittels der Druckerhöhungseinrichtung nach dem Abscheiden des Kondensats. Da mittels der Druckerhöhungseinrichtung auch die Gastemperatur angehoben werden kann, können eventuell noch vorhandene Tröpfchen der Komponente vorteilhaft verdunsten.

In einer Ausgestaltung ist die Druckerhöhungseinrichtung als ein mechanischer Verdichter, insbesondere als ein Kompressor und/oder ein Gebläse und/oder eine Pumpe und/oder ein Seitenkanalverdichter und/oder ein Turboverdichter, zum Beispiel ein Radialverdichter, ausgebildet. Das Gebläse, die Pumpe, der Seitenkanalverdichter oder der Turboverdichter können zum Beispiel elektrisch angetrieben werden.

In einer Ausgestaltung wird die Adsorptionsvorrichtung bei einem Beginn oder einer Wiederaufnahme des Förderns des Gasstroms zur Bereitstellung des Ausgangsgasstroms zunächst in einer Warmlaufbetriebsphase betrieben. Während der Warmlaufbetriebsphase wird der Gasstrom zur Bereitstellung des Ausgangsgasstroms gefördert und das Adsorptionsmaterial steht relativ zu dem Arbeitsbereich und dem Regenerationsbereich still. Die Vorteile der Warmlaufbetriebsphase wurden bereits erwähnt. Die Kombination von Warmlauf- und Nachlaufbetriebsphase, wie sie eine entsprechende Ausgestaltung des ersten Verfahrens vorsieht, ermöglicht es einerseits, dass das Adsorptionsmaterial, das den Regenerationsbereich verlässt, vor allem auch in seinem oberen Bereich möglichst wirkungsvoll regeneriert ist. Andererseits kann vorteilhaft erreicht werden, dass auch bei stark intermittierender Förderung mit kurzen Förderintervallen, in denen häufig das stillstehende Adsorptionsmaterial im Arbeitsbereich mit dem Gasstrom in Kontakt tritt und mit der Komponente beladen wird, bei einem Durchlauf durch den Arbeitsbereich keine wesentlich größeren Mengen der zu entfernenden Komponente aufzunehmen hat als im stationären Betrieb.

Gemäß einer Weiterbildung wird im Anschluss an die Warmlaufbetriebsphase eine Lastbetriebsphase, während der aufeinanderfolgende Teilbereiche des Adsorptionsmaterials kontinuierlich in wiederkehrender Weise relativ zu dem Arbeitsbereich und dem Regenerationsbereich durch den Arbeitsbereich und den Regenerationsbereich hindurchbewegt werden, eingeleitet.

Es kann gemäß einer Variante dieser Weiterbildung vorgesehen sein, dass das Einleiten der Lastbetriebsphase im Anschluss an die Warmlaufbetriebsphase unterbleibt, falls das Fördern des Gasstroms zur Bereitstellung des Ausgangsgasstroms während der laufenden Warmlaufbetriebsphase zumindest zeitweilig unterbrochen oder beendet wird.

In einer weiteren Ausgestaltung ist die Zeitdauer der Warmlaufbetriebsphase, genommen von dem Beginn oder der Wiederaufnahme des Förderns des Gasstroms zur Bereitstellung des Ausgangsgasstroms bis zum Einleiten der Lastbetriebsphase, variabel. Die Warmlaufbetriebsphase ist somit an die jeweils vorliegenden Betriebsbedingungen anpassbar. Bei einer alternativen Ausgestaltung kann die Zeitdauer der Warmlaufbetriebsphase aber stattdessen auch fest vorgegeben sein.

In einer Ausgestaltung wird die Zeitdauer der Warmlaufbetriebsphase, genommen von dem Beginn oder der Wiederaufnahme des Förderns des Gasstroms zur Bereitstellung des Ausgangsgasstroms bis zum Einleiten der Lastbetriebsphase,
- unter Berücksichtigung von Betriebsdaten der Adsorptionsvorrichtung, die einer laufenden Betriebsphase und/oder einer vorangegangenen Betriebsphase und/oder Betriebspause oder mehreren vorangegangenen Betriebsphasen und/oder Betriebspausen der Adsorptionsvorrichtung zugeordnet sind, und/oder
- unter Berücksichtigung von Betriebsdaten einer Anlage, in welcher die Adsorptionsvorrichtung verwendet wird, und/oder
- unter Berücksichtigung einer Zeitdauer einer oder mehrerer vorangegangener Betriebsphasen und/oder Betriebspausen der Adsorptionsvorrichtung, und/oder
- unter Berücksichtigung eines oder mehrerer vorbestimmter Parameter der Adsorptionsvorrichtung und/oder des Adsorptionsmaterials
bestimmt. Dies bedeutet, dass die vorgenannten Betriebsdaten und/oder Zeitdauern und/oder vorbestimmten Parameter, ggf. gemeinsam mit anderen Größen, Eingang in die bestimmte Zeitdauer der Warmlaufbetriebsphase finden. Dies kann dazu beitragen, unter den gegebenen Betriebsbedingungen die Warmlaufbetriebsphase ausreichend, aber nicht unnötig lang zu wählen und deren Zeitdauer zu optimieren.

In einer Ausgestaltung werden die Betriebsdaten für die Bestimmung der Zeitdauer der Warmlaufbetriebsphase während der jeweiligen Betriebsphase und/oder Betriebspause mittels einer oder mehrerer Mess- oder Sensoreinrichtungen erfasst und/oder gemessen. Zusätzlich oder alternativ hierzu können gemäß dieser Ausgestaltung die Betriebsdaten für die jeweilige Betriebsphase und/oder Betriebspause errechnet oder auf andere geeignete Weise ermittelt oder abgeschätzt werden.

In einer Ausgestaltung wird die Zeitdauer der Warmlaufbetriebsphase unter Berücksichtigung von Betriebsdaten der Adsorptionsvorrichtung, die während einer laufenden Warmlaufbetriebsphase und/oder während einer oder mehrerer vorangegangener Warmlaufbetriebsphasen und/oder während einer oder mehrerer vorangegangener Lastbetriebsphasen erfasst oder gemessen werden oder die für die jeweilige Betriebsphase errechnet oder auf andere geeignete Weise ermittelt oder abgeschätzt werden, bestimmt. Während in Betriebspausen keine Förderung des Gasstroms erfolgt, wird in Warmlaufbetriebphasen und Lastbetriebsphasen der Gasstrom gefördert, was zum Beispiel bei Regeneration mit dem heißen Vollstrom oder auch bei Regeneration mittels eines nach einem Eingangsverdichter abgezweigten, heißen Nebenstroms zu einem Aufwärmen des Adsorptionsmaterials im Regenerationsbereich führt. Betriebsdaten für Warmlauf- und Lastbetriebsphasen können daher besonders nützlich sein, um eine Aussage über die bevorzugte Zeitdauer einer laufenden Warmlaufbetriebsphase zu generieren.

In einer Ausgestaltung wird die Zeitdauer der Warmlaufbetriebsphase unter Berücksichtigung einer Zeitdauer einer oder mehrerer vorangegangener Warmlaufbetriebsphasen und/oder einer Zeitdauer einer oder mehrerer vorangegangener Lastbetriebsphasen bestimmt. Bei Regeneration mit Hilfe eines heißen Regenerationsgasstroms, insbesondere bei Vollstromregeneration, können solche Zeitdauern zum Beispiel mitberücksichtigt werden, wenn Temperaturen des Adsorptionsmaterials oder der Bestandteile der Adsorptionsvorrichtung oder der Anlage, in der die Adsorptionsvorrichtung verwendet wird, abgeschätzt werden sollen.

In einer Ausgestaltung wird zur Bestimmung der Zeitdauer der Warmlaufbetriebsphase festgestellt, ob Betriebsbedingungen vorliegen, die ein hinreichendes Regenerieren des Adsorptionsmaterials in dem Regenerationsbereich ermöglichen. Bei dieser Ausgestaltung wird das Ergebnis dieser Feststellung bei der Bestimmung der Zeitdauer der Warmlaufbetriebsphase berücksichtigt. Die Feststellung erfolgt vorzugsweise während der laufenden Warmlaufbetriebsphase, insbesondere kontinuierlich oder periodisch. Dies kann dazu beitragen, die Warmlaufbetriebsphase im richtigen Moment, d. h. dann, wenn die im Regenerationsbereich herrschenden Betriebsbedingungen für die Regeneration ausreichend günstig geworden sind, zu beenden. Dadurch kann vorteilhaft die Warmlaufbetriebsphase auf das notwendige und hinreichende Maß beschränkt und ein unnötiger Anstieg der Beladung des Adsorptionsmaterials im Arbeitsbereich vermieden werden.

In einer Ausgestaltung wird im Anschluss an die Warmlaufbetriebsphase eine Lastbetriebsphase eingeleitet, sobald festgestellt wird, dass Betriebsbedingungen vorliegen, die ein Regenerieren, welches beim Fördern des Gasstroms in der Lastbetriebsphase für ein Unterschreiten einer vorgegebenen Schwelle für die Konzentration der Komponente in dem Ausgangsgasstrom hinreichend ist, ermöglichen.

Bei einer Weiterbildung erfolgt die Feststellung, ob Betriebsbedingungen vorliegen, die ein hinreichendes Regenerieren des Adsorptionsmaterials in dem Regenerationsbereich ermöglichen,
- in Abhängigkeit von Betriebsdaten der Adsorptionsvorrichtung, die einer oder mehreren Betriebsphasen und/oder Betriebspausen der Adsorptionsvorrichtung zugeordnet sind, und/oder
- in Abhängigkeit von Betriebsdaten einer Anlage, in welcher die Adsorptionsvorrichtung verwendet wird, und/oder
- in Abhängigkeit von der Dauer einer oder mehrerer Betriebsphasen und/oder Betriebspausen der Adsorptionsvorrichtung, und/oder
in Abhängigkeit von einem oder mehreren vorbestimmten Parametern der Adsorptionsvorrichtung und/oder des Adsorptionsmaterials. Eine Einleitung der Lastbetriebphase im Anschluss an die Warmlaufbetriebsphase in Abhängigkeit von Betriebsdaten, Dauern von Betriebphasen und/oder Betriebspausen und/oder vorbestimmten Parametern der Adsorptionsvorrichtung und/oder des Adsorptionsmaterials ermöglicht es, die Bewegung des Adsorptionsmaterial angepasst an die jeweilige Betriebssituation im optimalen Moment einzuleiten.

In einer Ausgestaltung des ersten oder zweiten Verfahrens werden, um festzustellen, ob Betriebsbedingungen vorliegen, die ein hinreichendes Regenerieren des Adsorptionsmaterials in dem Regenerationsbereich ermöglichen, eines oder mehrere oder alle der nachfolgenden Betriebsdaten berücksichtigt:
- ein Massenstrom eines geförderten Gasstroms oder eine zeitliche Änderungsrate dieses Massenstroms, insbesondere des Eingangsmassenstroms;
- ein Massenstrom des Regenerationsgasstroms oder eine zeitliche Änderungsrate dieses Massenstroms;
- eine Temperatur des Regenerationsgasstroms vor einem Kontakt des Regenerationsgasstroms mit dem Adsorptionsmaterial in dem Regenerationsbereich oder eine zeitliche Änderungsrate dieser Temperatur, insbesondere eine Temperatur des Regenerationsgasstroms vor einem Eintritt desselben in den Regenerationsbereich oder deren zeitliche Änderungsrate;
- eine Temperatur eines Regenerationsgasstroms nach einem Kontakt des Regenerationsgasstroms mit dem Adsorptionsmaterial in dem Regenerationsbereich oder eine zeitliche Änderungsrate dieser Temperatur, insbesondere eine Temperatur des Regenerationsgasstroms nach einem Austritt desselben aus dem Regenerationsbereich oder deren zeitliche Änderungsrate;
- ein Verdichtungsdruck, auf den der Eingangsgasstrom von einem Eingangskompressor, mittels dem der Eingangsgasstrom bereitgestellt wird, verdichtet wird, oder eine zeitliche Änderungsrate dieses Druckes;
- eine oder mehrere weitere Temperaturen eines Bestandteils eines Eingangskompressors, mittels dem der Eingangsgasstrom bereitgestellt wird, oder eine oder mehrere Temperaturen des Eingangsgasstroms innerhalb des Eingangskompressors, insbesondere eine Ansaugtemperatur einer letzten Verdichtungsstufe des Eingangskompressors und/oder eine Kühlwassertemperatur, oder eine zeitliche Änderungsrate dieser Temperatur oder dieser Temperaturen.
Die Betriebsdaten können hierbei jeweils während einer oder mehrerer Betriebsphasen und/oder Betriebspausen der Adsorptionsvorrichtung erfasst und/oder gemessen werden und/oder für die jeweilige Betriebsphase und/oder Betriebspause errechnet oder auf andere geeignete Weise bestimmt oder abgeschätzt werden. Insbesondere können die vorgenannten Betriebsdaten während der laufenden Warmlaufbetriebsphase gemessen oder ermittelt werden. Die zu berücksichtigenden Betriebsdaten können dann beispielsweise jeweils mit einem zugeordneten festen oder einem zugeordneten automatisiert oder manuell einstellbaren Schwellwert verglichen werden. Ein Vergleich der zeitlichen Änderungsraten mit einem zugeordneten Schwellwert kann vorteilhaft sein, da auf diese Weise das Ende der Warmlaufbetriebsphase davon abhängig gemacht werden kann, ob sich die Bedingungen für die Regeneration mit fortschreitender Zeit noch wesentlich verbessern oder nicht.

In einer vorteilhaften Ausgestaltung kann, um festzustellen, ob Betriebsbedingungen vorliegen, die ein hinreichendes Regenerieren des Adsorptionsmaterials in dem Regenerationsbereich ermöglichen, eine Temperatur des Regenerationsgasstroms vor einem Kontakt des Regenerationsgasstroms mit dem Adsorptionsmaterial in dem Regenerationsbereich mit einem automatisiert oder manuell an die Betriebsbedingungen angepassten Schwellwert verglichen werden. Hierdurch kann vermieden werden, dass der Schwellwert in bestimmten Betriebszuständen nicht oder zu spät erreicht wird, oder dass er zu früh erreicht wird und die Warmlaufbetriebsphase bereits vor dem Erreichen ausreichender Regenerationsbedingungen beendet wird.

Gemäß einer Weiterbildung wird die laufende Warmlaufbetriebsphase beendet, wenn die Zeitdauer der laufenden Warmlaufbetriebsphase seit dem Beginn oder der Wiederaufnahme des Förderns des Gasstroms zur Bereitstellung des Ausgangsgasstroms einen Wert überschreitet, der
- fest vorgegeben ist, oder der
- unter Berücksichtigung
   - einer Gasmenge oder eines Massenstroms des in der laufenden Warmlaufbetriebsphase und/oder in einer oder mehreren vorangegangenen Warmlaufbetriebsphasen und/oder in einer oder mehreren vorangegangenen Lastbetriebsphasen als Gasstrom geförderten Gases und/oder
   - unter Berücksichtigung einer seit dem Ende der letzten vorangegangenen Warmlaufbetriebsphase oder Lastbetriebsphase oder Nachlaufbetriebsphase verstrichenen Zeit
ermittelt wird. Dadurch kann vorteilhaft sichergestellt werden, dass die Warmlaufbetriebsphase nicht zu lange andauert, sondern nach einer fest eingestellten oder an die Betriebsbedingungen angepassten Verzögerungszeit beendet wird, insbesondere wenn die Warmlaufbetriebsphase aufgrund anderer Kriterien noch nicht beendet würde.

Erfindungsgemäß ist zusätzlich zu dem Arbeitsbereich und dem Regenerationsbereich ein Kühlbereich vorgesehen. Hierbei ist die Adsorptionsvorrichtung derart ausgebildet, dass in der Lastbetriebsphase regeneriertes Adsorptionsmaterial nach dem Herausbewegen aus dem Regenerationsbereich und vor einem erneuten Hineinbewegen in den Arbeitsbereich auf eine für die zumindest teilweise Entfernung der Komponente aus dem Gasstrom geeignete Temperatur herabgekühlt werden kann. Gemäß dieser Ausgestaltung wird während der Nachlaufbetriebsphase der während der Nachlaufbetriebsphase aus dem Regenerationsbereich herausbewegte Teilbereich des Adsorptionsmaterials durch eine Bewegung des Adsorptionsmaterials relativ zu dem Kühlbereich in den Kühlbereich hineinbewegt und/oder zumindest teilweise durch den Kühlbereich hindurchbewegt und dort gekühlt. Die Kühlung ermöglicht es, die Temperatur des Adsorptionsmaterials - die das Adsorptionsmaterial aufgrund des für ein wirkungsvolles Desorbieren im Regenerationsbereich vorzugsweise heißen Regenerationsgasstroms annehmen kann - auf einen Wert abzusenken, der für das Adsorbieren der Komponente aus der Gasphase im Arbeitsbereich günstig ist. Es können auch zwei oder mehr Kühlbereiche vorgesehen sein. Ferner soll darauf hingewiesen werden, dass die Relativbewegung nicht nur durch Bewegen des Adsorptionsmaterials relativ zu einem feststehenden Kühlbereich, sondern auch durch Bewegen des Kühlbereichs relativ zu einem feststehenden Adsorptionsmaterial erreicht werden kann.

Erfindungsgemäß erfolgt die Kühlung in der Nachlaufbetriebsphase in der Weise, dass während der Nachlaufbetriebsphase ein Kühlgasstrom mittels einer unabhängig von dem Fördern des Gasstroms zur Bereitstellung des Ausgangsgasstroms steuerbaren Einrichtung, insbesondere mittels eines Verdichters oder eines Gebläses oder einer Pumpe oder eines steuerbaren Ventils, herbeigeführt wird. Hierbei wird der Kühlgasstrom in dem Kühlbereich mit dem Adsorptionsmaterial zur Kühlung desselben in Kontakt gebracht. In dieser Ausgestaltung lässt sich der Kühlgasstrom vorteilhaft steuern und zum Beispiel an die angestrebte niedrigere Temperatur und/oder an die Geschwindigkeit, mit der sich das Adsorptionsmaterial aus dem Regenerationsbereich herausbewegt, anpassen.

In einer Weiterbildung wird der Kühlgasstrom während der Nachlaufbetriebsphase mittels der Druckerhöhungseinrichtung herbeigeführt, wobei die Druckerhöhungseinrichtung die steuerbare Einrichtung bildet. Vorzugsweise kann hierbei eine Förderleistung der Druckerhöhungseinrichtung, zum Beispiel definiert als Fördermenge je Zeiteinheit, auf ein für die Herbeiführung eines hinreichenden Kühlgasstroms geeignetes Maß eingestellt werden. Diese Einstellung kann zum Beispiel bei der Einleitung der Nachlaufbetriebsphase oder während der Nachlaufbetriebsphase erfolgen. Insbesondere kann vorgesehen sein, dass die Förderleistung der Druckerhöhungseinrichtung gegenüber ihrer Förderleistung in der vorangehenden Lastbetriebsphase verringert wird. Durch die Nutzung der Druckerhöhungseinrichtung zur Aufrechterhaltung des Kühlgasstroms in der Nachlaufbetriebsphase ist vorteilhaft eine andere, zusätzliche Fördereinrichtung nicht notwendig.

In einer Ausgestaltung wird die Kühlung in der Nachlaufbetriebsphase dadurch bewerkstelligt, dass während der Nachlaufbetriebsphase ein kontrolliertes Abblasen eines Teils eines in einem ausgangsseitig an die Adsorptionsvorrichtung angeschlossenen Behältnis oder Leitungsnetz vorliegenden verdichteten Gases erfolgt. Hierbei wird das Abblasen in der Weise durchgeführt, dass der Teil des Gases als Kühlgasstrom in dem Kühlbereich mit dem Adsorptionsmaterial zur Kühlung desselben in Kontakt gelangt und anschließend in einen Raumbereich niedrigeren Drucks, beispielsweise in die die Adsorptionsvorrichtung umgebende Atmosphäre, entweicht. Dies kann insbesondere dadurch bewerkstelligt werden, dass als steuerbare Einrichtung ein steuerbares Ventil, zum Beispiel ein Magnetventil, vorgesehen wird, welches zum Abblasen angesteuert wird. Dies kann zum Beispiel dann nützlich sein, wenn die Druckerhöhungseinrichtung nicht vorhanden ist. Zudem kann diese Ausgestaltung vorteilhaft sein, wenn die Regeneration im Nebenstrom erfolgt und der Regenerationsgasstrom dabei beispielsweise mit Hilfe eines Ejektors angesaugt wird.

In einer bevorzugten Ausgestaltung wird während der Nachlaufbetriebsphase ein Teilbereich des Adsorptionsmaterials aus dem Arbeitsbereich herausbewegt und in den Regenerationsbereich hineinbewegt. Dies erfolgt bevorzugt gleichzeitig mit dem Herausbewegen des im Nachlaufbetrieb aus dem Regenerationsbereich herauszubewegenden Teilbereichs des Adsorptionsmaterials. Insbesondere ist bei dieser Ausgestaltung der aus dem Arbeitsbereich herausbewegte Teilbereich ebenso groß wie der während der Nachlaufbetriebsphase aus dem Regenerationsbereich herausbewegte Teilbereich des Adsorptionsmaterials. Ein derartiger Nachlaufbetrieb ist mit wenig Aufwand realisierbar.

In einer Ausgestaltung werden die Betriebsdaten, in Abhängigkeit von denen die Einleitung der Nachlaufbetriebsphase erfolgt, während der jeweiligen Betriebsphase und/oder Betriebspause mittels einer oder mehrerer Mess- oder Sensoreinrichtungen erfasst und/oder gemessen, und/oder die Betriebsdaten werden für die jeweilige Betriebsphase und/oder Betriebspause errechnet oder auf andere geeignete Weise ermittelt oder abgeschätzt.

Bei einer Weiterbildung beträgt eine Größe des während der Nachlaufbetriebsphase aus dem Regenerationsbereich herausbewegten Teilbereichs des Adsorptionsmaterials nicht mehr als zwei Drittel einer Größe des Regenerationsbereichs. Dies kann dazu beitragen, sicherzustellen, dass das Adsorptionsmaterial in dem herausbewegten Teilbereich ausreichend regeneriert ist.

In einer weiteren Ausgestaltung ist eine Zeitdauer der Nachlaufbetriebsphase und/oder eine Größe des in der Nachlaufbetriebsphase aus dem Regenerationsbereich herauszubewegenden Teilbereichs des Adsorptionsmaterials
- fest eingestellt, oder wird
   - in Abhängigkeit von Betriebsdaten der Adsorptionsvorrichtung, die einer oder mehreren Betriebsphasen und/oder Betriebspausen der Adsorptionsvorrichtung zugeordnet sind und/oder
   - in Abhängigkeit von Betriebsdaten einer Anlage, in welcher die Adsorptionsvorrichtung verwendet wird und/oder
   - in Abhängigkeit von der Dauer einer oder mehrerer Betriebsphasen und/oder Betriebspausen der Adsorptionsvorrichtung und/oder
   - in Abhängigkeit von einem oder mehreren vorbestimmten Parametern der Adsorptionsvorrichtung und/oder des Adsorptionsmaterials
bestimmt. Eine fest eingestellte Zeitdauer der Nachlaufbetriebsphase ist einfach realisierbar und könnte zum Beispiel nützlich sein, wenn von vornherein bekannt ist, dass das Fördern des Gasstroms in einem regelmäßigen Takt mit bekannter Periode unterbrochen und wiederaufgenommen wird. Variiert die Förderung des Gasstroms in vorab unbekannter, unregelmäßiger Weise, dann kann mit Hilfe der Betriebsdaten, der Dauer von Betriebsphasen und/oder Betriebspausen, beispielsweise in Zusammenschau mit den vorbestimmten Parametern, ermittelt werden, wie die Zeitdauer der Nachlaufbetriebsphase und/oder die Größe des herauszubewegenden Teilbereichs günstigerweise zu wählen ist, um eine gute Funktion des Adsorptionsmaterials im Arbeitsbereich zu gewährleisten und ein Akkumulieren der Komponente im Adsorptionsmaterial zu vermeiden.

In einer Ausgestaltung werden die Betriebsdaten für die Bestimmung der Zeitdauer der Nachlaufbetriebsphase und/oder der Größe des in der Nachlaufbetriebsphase aus dem Regenerationsbereich herauszubewegenden Teilbereichs des Adsorptionsmaterials während der jeweiligen Betriebsphase und/oder Betriebspause mittels einer oder mehrerer Mess- oder Sensoreinrichtungen erfasst und/oder gemessen und/oder werden die Betriebsdaten für die jeweilige Betriebsphase und/oder Betriebspause errechnet oder auf andere geeignete Weise ermittelt oder abgeschätzt.

In einer Ausgestaltung wird bei der Bestimmung einer Zeitdauer der Nachlaufbetriebsphase und/oder einer Größe des in der Nachlaufbetriebsphase aus dem Regenerationsbereich herauszubewegenden Teilbereichs des Adsorptionsmaterials ein Maß für die Bewegung, die das Adsorptionsmaterial während der Zeitdauer der Warmlaufbetriebsphase, insbesondere der letzten der Nachlaufbetriebsphase (203) vorangegangenen Warmlaufbetriebsphase (201), relativ zu dem Arbeitsbereich und dem Regenerationsbereich ausgeführt hätte, wenn die Adsorptionsvorrichtung statt in der Warmlaufbetriebsphase in einer Lastbetriebsphase betrieben worden wäre, berücksichtigt. Durch eine derartige Berücksichtigung der in der Warmlaufbetriebsphase "ausgelassenen" Bewegung des Adsorptionsmaterials kann erreicht werden, dass das Adsorptionsmaterial auch bei kurzen Förderintervallen und häufigem Kontakt des Gasstroms mit dem stillstehenden Adsorptionsmaterial im Arbeitsbereich keine wesentlichen größeren Mengen der Komponente im Arbeitsbereich aufzunehmen hat, als in einem stationären Betrieb, d.h. einem langdauernden Lastbetrieb. In einem solchen, hier zum Vergleich herangezogenen stationären Betrieb wird vorzugsweise eine kontinuierliche Bewegung des Adsorptionsmaterials so eingestellt, dass das Adsorptionsmaterial je Durchlauf durch den Arbeitsbereich nur eine definierte, begrenzte Menge der Komponente aufnimmt.

In einer bevorzugten Ausgestaltung entspricht die Größe des im Nachlaufbetrieb aus dem Regenerationsbereich herauszubewegenden Teilbereichs des Adsorptionsmaterials der Größe eines Teilbereichs des Adsorptionsmaterials, der aus dem Regenerationsbereich herausbewegt worden wäre, wenn anstelle der Warmlaufbetriebsphase bei dem Beginn oder der Wiederaufnahme des Förderns des Gasstroms zur Bereitstellung des Ausgangsgasstroms sogleich eine Lastbetriebsphase eingeleitet worden wäre.

In einer Ausgestaltung wird die Größe eines Teilbereichs des Adsorptionsmaterials, der aus dem Regenerationsbereich herausbewegt worden wäre, wenn anstelle der Warmlaufbetriebsphase bei dem Beginn oder der Wiederaufnahme des Förderns des Gasstroms zur Bereitstellung des Ausgangsgasstroms sogleich eine Lastbetriebsphase eingeleitet worden wäre, während dieser Warmlaufbetriebsphase oder im Anschluss daran ermittelt, insbesondere berechnet. Insbesondere kann bei dieser Ausgestaltung die auf diese Weise ermittelte Größe gespeichert und bei der zumindest zeitweiligen Unterbrechung oder Beendigung des Förderns des Gasstroms zur Bereitstellung des Ausgangsgasstroms bei der Bestimmung der Zeitdauer der Nachlaufbetriebsphase und/oder den Größe des in der Nachlaufbetriebsphase aus dem Regenerationsbereich herauszubewegenden Teilbereichs verwendet werden. Auf diese Weise können vorteilhaft bereits am Ende der Warmlaufbetriebsphase die den Ablauf der Nachlaufbetriebsphase definierenden Größen festgelegt und später abgerufen werden.

In einer Ausgestaltung erfolgt die Einleitung der Nachlaufbetriebsphase und/oder die Bestimmung einer Zeitdauer der Nachlaufbetriebsphase und/oder einer Größe des in der Nachlaufbetriebsphase aus dem Regenerationsbereich herauszubewegenden Teilbereichs des Adsorptionsmaterials unter Berücksichtigung eines oder mehrerer oder aller der nachfolgenden Betriebsdaten:
- eine Zeitdauer einer laufenden und/oder einer vorangegangenen Lastbetriebsphase und/oder mehrerer vorangegangener Lastbetriebsphasen;
- eine Zeitdauer einer laufenden und/oder einer vorangegangenen Warmlaufbetriebsphase und/oder mehrerer vorangegangener Warmlaufbetriebsphasen;
- eine während einer laufenden und/oder einer vorangegangenen Lastbetriebsphase und/oder mehrerer vorangegangener Lastbetriebsphasen geförderte Gasmenge;
- eine während einer laufenden und/oder einer vorangegangenen Warmlaufbetriebsphase und/oder mehrerer vorangegangener Warmlaufbetriebsphasen geförderte Gasmenge;
- ein während einer laufenden und/oder einer vorangegangenen Lastbetriebsphase und/oder mehrerer vorangegangener Lastbetriebsphasen geförderter Gasmassenstrom;
- ein während einer laufenden und/oder einer vorangegangenen Warmlaufbetriebsphase und/oder mehrerer vorangegangener Warmlaufbetriebsphasen geförderter Gasmassenstrom;
- eine während einer laufenden und/oder einer vorangegangenen Lastbetriebsphase und/oder mehrerer vorangegangener Lastbetriebsphasen in dem Regenerationsbereich als Regenerationsgasstrom mit dem Adsorptionsmaterial in Kontakt gebrachte Gasmenge ;
- eine während einer laufenden und/oder einer vorangegangenen Warmlaufbetriebsphase und/oder mehrerer vorangegangener Warmlaufbetriebsphasen im Regenerationsbereich als Regenerationsgasstrom mit dem Adsorptionsmaterial in Kontakt gebrachte Gasmenge;
- ein Massenstrom des während einer laufenden und/oder einer vorangegangenen Lastbetriebsphase und/oder mehrerer vorangegangener Lastbetriebsphasen im Regenerationsbereich vorliegenden Regenerationsgasstroms;
- ein Massenstrom des während einer laufenden und/oder einer vorangegangenen Warmlaufbetriebsphase und/oder mehrerer vorangegangener Warmlaufbetriebsphasen im Regenerationsbereich vorliegenden Regenerationsgasstroms;
- ein Druck im Gasstrom in einer laufenden und/oder einer vorangegangenen Lastbetriebsphase und/oder mehreren vorangegangenen Lastbetriebsphasen;
- ein Druck im Gasstrom in einer laufenden und/oder einer vorangegangenen Warmlaufbetriebsphase und/oder mehreren vorangegangenen Warmlaufbetriebsphasen;
- eine oder mehrere Temperaturen des geförderten Gasstroms, insbesondere eine Eintrittstemperatur vor dem Eintritt in den Arbeitsbereich, in einer laufenden und/oder einer vorangegangenen Lastbetriebsphase und/oder mehreren vorangegangenen Lastbetriebsphasen;
- eine oder mehrere Temperaturen des geförderten Gasstroms, insbesondere eine Eintrittstemperatur vor dem Eintritt in den Arbeitsbereich, in einer laufenden und/oder einer vorangegangenen Warmlaufbetriebsphase und/oder mehreren vorangegangenen Warmlaufbetriebsphasen;
- eine Konzentration der Komponente im Gasstrom in einer laufenden und/oder einer vorangegangenen Lastbetriebsphase und/oder mehreren vorangegangenen Lastbetriebsphasen, insbesondere stromauf der Adsorptionsvorrichtung;
- eine Konzentration der Komponente im Gasstrom in einer laufenden und/oder einer vorangegangenen Warmlaufbetriebsphase und/oder mehreren vorangegangenen Warmlaufbetriebsphasen, insbesondere stromauf der Adsorptionsvorrichtung;
- eine Konzentration der Komponente im Ausgangsgasstrom in einer laufenden und/oder einer vorangegangenen Lastbetriebsphase und/oder mehreren vorangegangenen Lastbetriebsphasen;
- eine Konzentration der Komponente im Ausgangsgasstrom in einer laufenden und/oder einer vorangegangenen Warmlaufbetriebsphase und/oder mehreren vorangegangenen Warmlaufbetriebsphasen.

Die vorstehenden Betriebsdaten können hierbei jeweils während einer oder mehrerer Betriebsphasen der Adsorptionsvorrichtung erfasst und/oder gemessen werden und/oder für die jeweilige Betriebsphase errechnet oder auf andere geeignete Weise bestimmt oder abgeschätzt werden. Die zu berücksichtigenden Betriebsdaten können dann beispielsweise jeweils mit einem zugeordneten festen oder einem zugeordneten automatisiert oder manuell einstellbaren Schwellwert verglichen werden.

In einer bevorzugten Weiterbildung erfolgt die Einleitung der Nachlaufbetriebsphase und/oder die Bestimmung einer Zeitdauer der Nachlaufbetriebsphase und/oder einer Größe des in der Nachlaufbetriebsphase aus dem Regenerationsbereich herauszubewegenden Teilbereichs des Adsorptionsmaterials unter Berücksichtigung von Betriebsdaten, die für die letzte der Nachlaufbetriebsphase vorangehende Warmlaufbetriebsphase ermittelt werden und/oder unter Berücksichtigung von Betriebsdaten, die für die der Nachlaufbetriebsphase unmittelbar vorangehende Lastbetriebsphase ermittelt werden.

In einer Ausgestaltung werden bei der Bestimmung der Zeitdauer der Nachlaufbetriebsphase und/oder der Größe des in der Nachlaufbetriebsphase aus dem Regenerationsbereich herauszubewegenden Teilbereich des Adsorptionsmaterials Betriebsdaten berücksichtigt,
- die ein Maß dafür darstellen, inwieweit das Adsorptionsmaterial in einem Teilbereich des Adsorptionsmaterials, insbesondere in dem herauszubewegenden Teilbereich, regeneriert ist und/oder
- die ein Maß für eine Beladung des Adsorptionsmaterials in einem Teilbereich des Adsorptionsmaterials, insbesondere in dem herauszubewegenden Teilbereich, darstellen, insbesondere eine räumlich gemittelte Beladung oder ein Schätzwert hierfür oder eine lokale Beladung in einem vorbestimmten Teil des Teilbereichs.
Auch diese Betriebsdaten können hierbei jeweils während einer oder mehrerer Betriebsphasen und/oder Betriebspausen der Adsorptionsvorrichtung erfasst und/oder gemessen werden und/oder für die jeweilige Betriebsphase und/oder Betriebspause errechnet oder auf andere geeignete Weise bestimmt oder abgeschätzt werden. Beispielsweise könnten diese Betriebsdaten für einen Zeitpunkt ermittelt werden, zu dem eine Beendigung oder Unterbrechung des Förderns des Gasstroms angefordert wird. Die zu berücksichtigenden Betriebsdaten können dann beispielsweise jeweils mit einem zugeordneten festen oder einem zugeordneten automatisiert oder manuell einstellbaren Schwellwert verglichen werden. Ein Maß für die Beladung und/oder ein Maß für die erfolgte Regeneration kann in direkter Weise Aufschluss über den jeweiligen Zustand des Adsorptionsmaterials geben, was es ermöglichen kann, die Nachlaufbetriebsphase möglichst genau einzustellen.

In einer Ausgestaltung erfolgt die Einleitung der Nachlaufbetriebsphase und/oder die Bestimmung einer Zeitdauer der Nachlaufbetriebsphase und/oder die Bestimmung einer Größe des in der Nachlaufbetriebsphase aus dem Regenerationsbereich herauszubewegenden Teilbereichs des Adsorptionsmaterials unter Berücksichtigung der Abmessungen des Arbeitsbereichs und des Regenerationsbereichs. Wenn ein Kühlbereich vorhanden ist, werden hierbei bevorzugt zusätzlich auch die Abmessungen des Kühlbereichs berücksichtigt. Alternativ oder zusätzlich hierzu können Verhältnisse der Abmessungen dieser Bereiche - des Arbeitsbereichs, des Regenerationsbereichs und ggf. des Kühlbereichs - zueinander berücksichtigt werden.

In einer Ausgestaltung handelt es sich bei der Adsorptionsvorrichtung um eine Adsorptionstrockungsvorrichtung zur Trocknung von Druckgas, insbesondere zur Trockung von Druckluft, wobei es sich dann bei dem Arbeitsbereich der Adsorptionsvorrichtung um einen Trocknungsbereich handelt, innerhalb dessen dem Druckgas Feuchtigkeit entzogen wird.

In einer bevorzugten Ausgestaltung weist die Adsorptionsvorrichtung eine rotierbare Adsorptionskammer auf, die um eine Achse rotieren kann und das Adsorptionsmaterial enthält. Hierbei können während der Lastbetriebsphase durch die Rotation Teilbereiche des Adsorptionsmaterials kontinuierlich in wiederkehrender Weise durch den Arbeitsbereich und den Regenerationsbereich hindurchbewegt werden. Das Herausbewegen des Teilbereichs des Adsorptionsmaterials aus dem Regenerationsbereich in der Nachlaufbetriebsphase erfolgt bei dieser Ausgestaltung durch Rotation der Adsorptionskammer um einen so genannten Nachlaufwinkel. Insbesondere können die Adsorptionskammer trommelartig und der Arbeitsbereich und der Regenerationsbereich sowie ggf. auch der Kühlbereich als sektorförmige Bereiche ausgebildet sein. Die gemäß dieser Ausgestaltung vorgesehene rotierbare Adsorptionskammer ermöglicht einen einfachen Aufbau der Adsorptionsvorrichtung und eine einfache Realisierung der Bewegung des Adsorptionsmaterials.

Bei einer Adsorptionsvorrichtung mit rotierbarer Adsorptionskammer können die Abmessungen des Arbeitsbereichs, des Regenerationsbereichs und, falls vorhanden, des Kühlbereichs, sowie die Größe des Teilbereichs, der in der Nachlaufbetriebsphase aus dem Regenerationsbereich herausbewegt werden soll, als Winkel angegeben werden. Bei einer trommelartigen, zylindrischen Adsorptionskammer und als Sektoren ausgebildetem Arbeits-, Regenerations- und ggf. Kühlbereich werden die Abmessungen der einzelnen Bereiche dann anhand des jeweils um die Drehachse der Adsorptionskammer eingenommenen Winkels definiert.

In einer Ausgestaltung kann das Herausbewegen des Teilbereichs des Adsorptionsmaterials aus dem Regenerationsbereich in der Nachlaufbetriebsphase mit derselben Geschwindigkeit erfolgen, mit der das Adsorptionsmaterial in einer Lastbetriebsphase bewegt wird. Alternativ könnte das Herausbewegen des Teilbereichs mit einer demgegenüber erhöhten Geschwindigkeit erfolgen, wobei bei Vorhandensein eines Kühlbereichs bevorzugt mitberücksichtigt wird, welcher Kühlgasmassenstrom für eine hinreichende Abkühlung mit dem herausbewegten Teilbereich in Kontakt treten sollte.

Bei einer Adsorptionsvorrichtung mit rotierbarer Adsorptionskammer handelt es sich in einer Ausgestaltung bei der Geschwindigkeit, mit der das Adsorptionsmaterial bewegt wird, um eine Winkelgeschwindigkeit der Adsorptionskammer um die Drehachse.

Es ist ersichtlich, dass beispielsweise in dem Falle einer zylindrischen Adsorptionskammer, die gleichmäßig mit dem Adsorptionsmaterial bestückt ist, sich ein Maß für die Größe des in der Nachlaufbetriebsphase aus dem Regenerationsbereich herausbewegten Teilbereichs als Nachlaufwinkel aus dem Integral der Winkelgeschwindigkeit der Adsorptionskammer in der Nachlaufbetriebsphase über der Zeit, bei konstanter Winkelgeschwindigkeit aus dem Produkt von Zeitdauer der Nachlaufbetriebsphase und Winkelgeschwindigkeit, ergibt.

In einer Ausgestaltung rotiert die Adsorptionskammer in der Lastbetriebsphase mit einer Drehzahl zwischen 2 Umdrehungen pro Stunde und 25 Umdrehungen pro Stunde um ihre Drehachse.

In einer bevorzugten Ausgestaltung dauert die Warmlaufbetriebsphase zwischen 10 Sekunden und 500 Sekunden.

In einer weiteren Ausgestaltung kommt als Adsorptionsmaterial ein Silicagel oder alternativ ein Molekularsieb zum Einsatz.

In einer Ausgestaltung können Betriebsdaten und/oder Parameter, die bei der Bestimmung der Zeitdauer der Warmlaufbetriebsphase und/oder der Zeitdauer der Nachlaufbetriebsphase und/oder der Größe des in der Nachlaufbetriebsphase aus dem Regenerationsbereich herauszubewegenden Teilbereichs berücksichtigt werden oder in Abhängigkeit von welchen die Einleitung der Lastlauf- und/oder Nachlaufbetriebsphase erfolgt, zumindest zum Teil von einer Steuerungseinrichtung des Eingangskompressors bereitgestellt werden.

In allen genannten Fällen, in denen Betriebsdaten berücksichtigt werden, kann die Auswahl der zu berücksichtigenden Betriebsdaten beispielsweise auch davon abhängig gemacht werden, welche Betriebsdaten innerhalb oder an der Adsorptionsvorrichtung und/oder innerhalb der Anlage, in der die Adsorptionsvorrichtung zum Einsatz kommt, insbesondere in oder an dem Eingangskompressor, ohnehin bereits erfasst und/oder gemessen werden oder einfach messbar und/oder erfassbar sind und/oder ohnehin bereits zum Beispiel von einer jeweiligen Steuereinrichtung der Adsorptionsvorrichtung, des Eingangskompressors oder der Anlage errechnet oder anderweitig bereitgestellt werden.

Es kann vorzugsweise auf Betriebsdaten und/oder Parameter zurückgegriffen werden, die in der Kompressorsteuerung bereits vorliegen und/oder hinterlegt sind. Die Steuerungseinrichtung, die zur Ansteuerung der Adsorptionsvorrichtung verwendet wird, ist vorzugsweise ausgebildet, um mindestens eine Druckerhöhungseinrichtungs-Eingangsgröße, insbesondere eine Drehzahl des Eingangskompressors und/oder einen Druck im Eingangskompressor und/oder einen Druck in der Adsorptionsvorrichtung, auszuwerten und entsprechend die Drehzahl der Druckerhöhungseinrichtung zu steuern. Die Druckerhöhungseinrichtungs-Eingangsgröße kann alternativ oder ergänzend mithilfe einer dafür vorgesehenen Messeinrichtung ermittelt werden.

Insbesondere kann es sich bei der gemäß dem ersten oder zweiten erfindungsgemäßen Verfahren oder deren Ausgestaltungen zu betreibenden Adsorptionsvorrichtung um eine Adsorptionstrocknungsvorrichtung handeln, wie sie in der EP 2 332 631 B1 beschrieben wird.

Insbesondere kann die Steuerungseinrichtung in Ausgestaltungen derselben ein geeignetes Speichermedium aufweisen, auf dem ein mittels einer Recheneinrichtung, insbesondere unter Verwendung eines Mikroprozessors, ausführbares Programm hinterlegt ist, wobei die Steuerungsmittel als Routinen oder Teilroutinen oder sonstige geeignete funktionale Bestandteile des Programms ausgebildet sein können. Alternativ könnte die Steuerungseinrichtung auch mit einem entfernten Speichermedium, auf dem das Programm hinterlegt ist, zum Ausführen desselben verbindbar sein. Auf dem Speichermedium können weitere benötigte Daten, zum Beispiel vorbestimmte Parameter der Anlage und/oder der Adsorptionsvorrichtung und/oder des Adsorptionsmaterials, hinterlegt sein. Die Steuerungseinrichtung kann die Recheneinrichtung aufweisen oder als deren Bestandteil ausgebildet sein.

Vorgeschlagen wird zudem, in einer Ausgestaltung der Erfindung eine Adsorptionsvorrichtung oder einen Eingangskompressor mit einer derartigen Steuerungseinrichtung auszustatten.

Die oben angegebenen Ausgestaltungen und Weiterbildungen der Erfindung lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird hierbei der Fachmann auch Einzelaspekte als Verbesserungen oder Ergänzungen zu der jeweiligen Grundform der Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Dabei zeigen
- Fig. 1: eine schematische Darstellung einer Anlage mit einer Adsorptionsvorrichtung, wie sie in Verfahren gemäß den nachfolgend beschriebenen Ausführungsbeispielen der vorliegenden Erfindung zum Einsatz kommt, wobei die Adsorptionsvorrichtung teilweise in einem vertikalen Querschnitt skizziert ist;
- Fig. 2: eine weitere schematische Darstellung der Adsorptionsvorrichtung der Figur 1, wobei eine Adsorptionskammer mit einem Adsorptionsmaterial und angrenzenden Abschnitten der Adsorptionsvorrichtung in Abwicklung dargestellt ist und die die Adsorptionskammer durchströmenden Gasströme eingezeichnet sind;
- Fig. 3: ein erstes schematisches Diagramm zur Erläuterung einer Warmlaufbetriebsphase;
- Fig. 4: ein zweites schematisches Diagramm zur Erläuterung einer Warmlaufbetriebsphase;
- Fig. 5: eine Folge von acht schematischen Skizzen a bis g2 einer Adsorptionskammer einer Adsorptionsvorrichtung gemäß den Figuren 1 und 2 in einer stark vereinfachten Ansicht von unten, wobei jeweils die Beladung des Adsorptionsmaterials in vereinfachter Weise eingezeichnet ist, zur Erläuterung eines Verfahrens gemäß einem ersten Ausführungsbeispiel der Erfindung;
- Fig. 6: ein Flussdiagramm zur Erläuterung des Verfahrens gemäß dem ersten Beispiel;
- Fig. 7A: und
- Fig. 7B: eine Folge von elf schematischen Skizzen a' bis g2' einer Adsorptionskammer einer Adsorptionsvorrichtung gemäß den Figuren 1 und 2 in einer stark vereinfachten Ansicht von unten, wobei wiederum jeweils die Beladung des Adsorptionsmaterials in vereinfachter Weise eingezeichnet ist, zur Erläuterung eines Verfahrens gemäß einem zweiten Ausführungsbeispiel der Erfindung;
- Fig. 8: ein Flussdiagramm zur Erläuterung des Verfahrens gemäß dem zweiten Ausführungsbeispiel der Erfindung;
- Fig. 9: eine schematische Darstellung einer Anlage mit einer Adsorptionsvorrichtung, wie sie in einem Verfahren gemäß einer Variante des zweiten Ausführungsbeispiels zum Einsatz kommt;
- Fig. 10A: eine Detektionseinrichtung, die bei der Durchführung der Verfahren gemäß dem ersten Beispiel und dem Ausführungsbeispiel zum Einsatz kommen kann, schematisch;
- Fig. 10B: eine Messeinrichtung, die bei der Durchführung der Verfahren gemäß dem ersten Beispiel und dem Ausführungsbeispiel zum Einsatz kommen kann, schematisch;
- Fig. 10C: eine Recheneinrichtung, die bei der Durchführung der Verfahren gemäß dem ersten Beispiel und zweiten Ausführungsbeispiel zum Einsatz kommen kann, schematisch; und
- Fig. 11: eine Steuerungseinrichtung zur Durchführung des Verfahrens gemäß dem zweiten Ausführungsbeispiel, schematisch.
Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON BEISPIELEN

Die nachfolgend beschriebenen Beispiele beziehen sich beispielhaft auf das Trocknen von Druckluft. Somit bildet nachfolgend ein Luftstrom ein Beispiel für einen Gasstrom, dem eine Komponente, nachfolgend beispielhaft Wasser, zumindest teilweise entzogen werden soll. Es versteht es sich aber, dass die vorgeschlagene Lösung auch auf andere Adsorptionsprozesse, zum Beispiel das Trocknen anderer Gase, insbesondere anderer unter Druck stehender Gase, wie etwa Stickstoff, Erdgas, oder Gase aus chemischen Produktionsprozessen, angewandt werden kann.

Bevor ein Ausführungsbeispiel der erfindungsgemäßen Verfahren erläutert werden, soll der Aufbau einer Adsorptionsvorrichtung, wie sie bei den anschließend beschriebenen Beispielen verwendet wird, dargelegt werden.

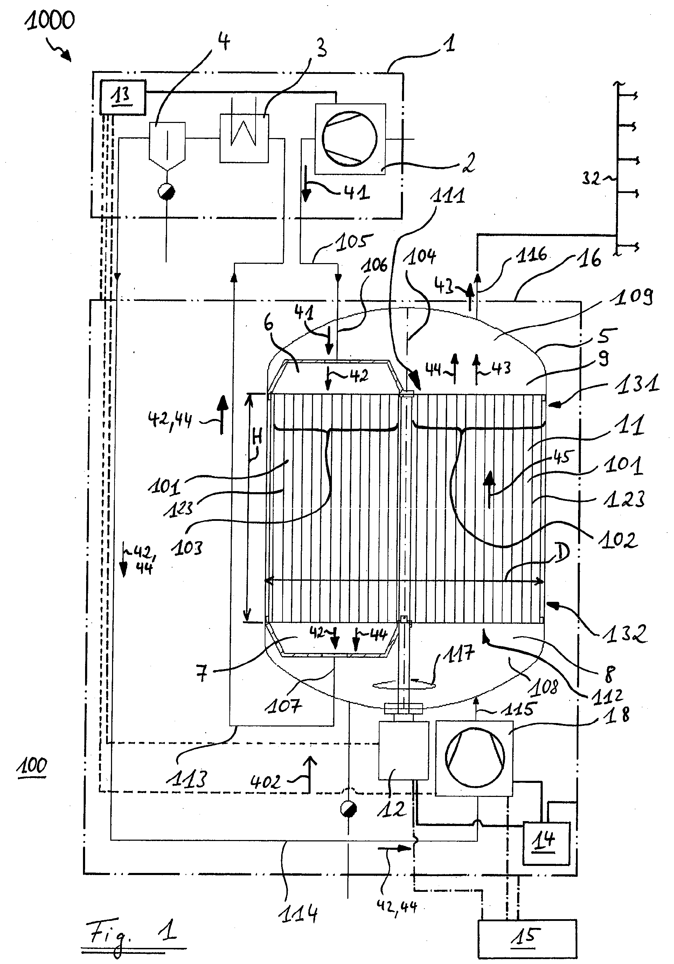

In Figur 1 ist eine Anlage 1000 mit einer Adsorptionsvorrichtung 16 und einem Eingangskompressor 1 schematisch dargestellt. Der Eingangskompressor 1 kann ein trockenlaufender Schraubenkompressor oder ein Turbokompressor sein und dient in Figur 1 dem Verdichten von Luft, um einen Druckluftstrom bereitzustellen, und die Adsorptionsvorrichtung 16 dient dem Entfeuchten oder Trocknen der Druckluft. Zudem ist ein Leitungsnetz 32, bei diesem Beispiel ein Leitungsnetz zum Verteilen der Druckluft, dargestellt, wobei an dem Leitungsnetz 32 auch ein Behältnis zum Speichern der Druckluft angeschlossen sein kann. Das Leitungsnetz 32 kann an die Adsorptionsvorrichtung 16, bei Bedarf unter Zwischenschaltung weiterer Bauteile wie beispielsweise Rohrleitungen, Ventile, Abzweige usw., ausgangsseitig angeschlossen sein.

In einer Adsorptionskammer 11, die trommelartig und bei diesem Beispiel im Wesentlichen zylinderförmig ausgebildet und in Figur 1 in einem Längsschnitt skizziert ist, befindet sich ein Adsorptionsmaterial 123, beispielsweise ein Silicagel. Die Adsorptionskammer 11 ist in einem Adsorptionsbehälter 5 um eine Drehachse 104 rotierbar gelagert, und es ist ein Kammerantrieb 12 vorgesehen, mittels dem die Rotation der Adsorptionskammer 11 um die Drehachse 104 herbeigeführt werden kann.

Die Adsorptionskammer 11 kann mit einer Vielzahl von Adsorptionskanälen 101 ausgebildet sein, die das Adsorptionsmaterial 123 enthalten oder aufweisen und die von einem Gasstrom derart durchströmt werden können, dass der Gasstrom in wirkungsvoller Weise mit dem Adsorptionsmaterial 123 in Kontakt gelangt.

In einem stationären Betrieb, z. B. einer längerdauernden Lastbetriebsphase, fördert der Eingangskompressor 1 Druckluft, und die Adsorptionskammer 11 rotiert um ihre Drehachse 104 in Richtung des Pfeils 117, wodurch aufeinanderfolgende Teilbereiche der Adsorptionskammer 11 und damit auch des Adsorptionsmaterials 123 kontinuierlich und in wiederkehrender Weise durch einen in Figur 1 geschnitten dargestellten, sektorförmigen Arbeitsbereich 102, der auch als Trocknungssektor bezeichnet werden kann, und durch einen ebenfalls geschnitten gezeigten Regenerationsbereich 103, der als Regenerationssektor bezeichnet werden kann, hindurchbewegt werden.

Die in einem Kompressorblock 2 des Eingangskompressors 1 verdichtete, zu trocknende Luft wird als Eingangsgasstrom 41 über eine Leitung 105 einer Regenerationseintrittskammer 6, die an einem ersten Ende 111 der Adsorptionskammer 11 angeordnet ist, zugeführt. Wie Figur 1 zeigt, wird der gesamte erwärmte Eingangsgasstrom 41, der aus dem Kompressorblock 2 austritt, als Vollstrom der Regenerationseintrittskammer 6 zugeführt und durchströmt die Adsorptionskammer 11 mit dem Adsorptionsmaterial 123 als Regenerationsgasstrom 42.

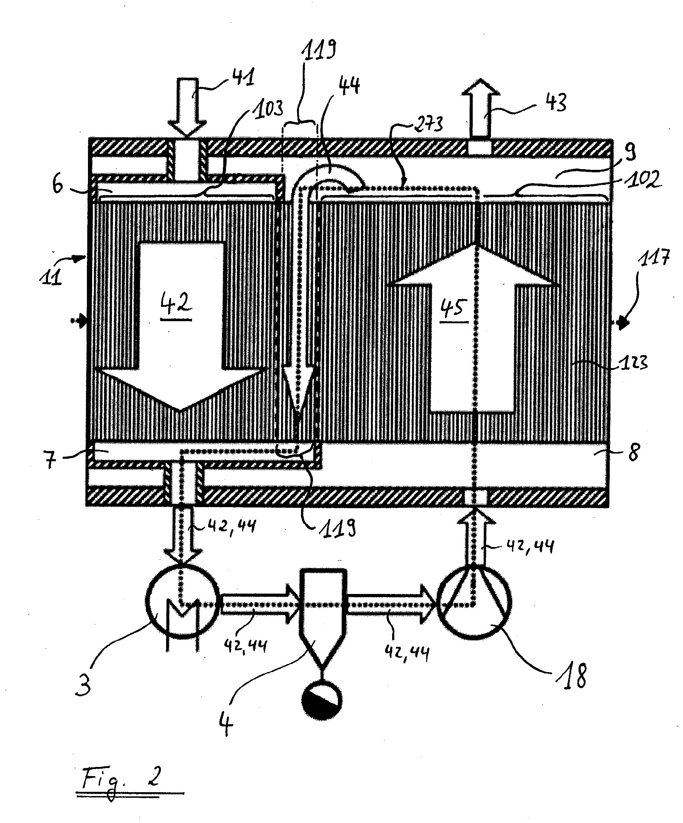

In dem Regenerationsbereich 103 strömt der Gasstrom somit als Regenerationsgasstrom 42 durch die Adsorptionskanäle 101 und kommt mit dem Adsorptionsmaterial 123 in Kontakt, wodurch der Regenerationsgasstrom 42 durch Desorption Feuchtigkeit von dem Adsorptionsmaterial 123 aufnimmt. Auf diese Weise wird eine Regeneration des Adsorptionsmaterials 123 im Regenerationsbereich 103 bewirkt. Mittels einer Regenerationsaustrittskammer 7 an einem zweiten Ende 112 der Adsorptionskammer 11 wird der Regenerationsgasstrom 42 aus dem Regenerationsbereich 103 abgeleitet, wobei der Regenerationsgasstrom 42 in der Regenerationsaustrittskammer 7 mit einem weiteren Gasstrom, nämlich einem in Figur 2 dargestellten Kühlgasstrom 44 vereinigt und gemeinsam mit diesem über eine Leitung 113 einem Kühler 3 und anschließend einem Kondensatabscheider 4 zugeleitet wird. Der Kühler 3 und der Kondensatabscheider 4 können Teile eines Kompressorkondensators bilden. Kondensiertes Wasser wird im Kondensatabscheider 4 aus dem Gasstrom, der von den beiden vereinigten Gasströmen 42 und 44 gebildet wird, abgeschieden.

Über eine Leitung 114 wird der Gasstrom, der weiterhin dem aus der Vereinigung von Regenerationsgasstrom 42 und Kühlgasstrom 44 gebildeten Gasstrom entspricht, einer Druckerhöhungseinrichtung 18, die als Gebläse ausgebildet sein kann, zugeführt. In der Druckerhöhungseinrichtung 18 wird der Druck des Gasstroms angehoben. Anschließend wird der Gasstrom über eine Leitung 115 einer Trocknungseintrittskammer 8 am zweiten Ende 112 der Adsorptionskammer 11 zugeleitet. Die vereinigten, von der Druckerhöhungseinrichtung 18 kommenden Gasströme 42, 44 durchströmen als Gasstrom 45 einen Teilbereich der Adsorptionskammer 11 - und damit auch einen Teilbereich des Adsorptionsmaterials 123 - der sich zu dem gegebenen Zeitpunkt in dem Arbeitsbereich 102 befindet. Am ersten Ende 111 der Adsorptionskammer 11 wird der Gasstrom 45 von einer Trockungsaustrittskammer 9 aufgenommen. Zwischen der Trocknungseintrittskammer 8 und der Trocknungsaustrittskammer 9 erstreckt sich somit der Arbeitsbereich 102 in Form eines Trocknungssektors, in dem der Gasstrom 45 mit dem Adsorptionsmaterial 123 in Kontakt tritt. Die Gastemperatur des Gasstroms 45 liegt niedriger als die Temperatur des Regenerationsstroms 42. Beispielsweise kann die Temperatur des Gasstroms 45 beim Durchströmen der Adsorptionskammer 11 im Arbeitsbereich 102 zwischen 10 Grad Celsius und 60 Grad Celsius liegen. Im Arbeitsbereich 102 wird dem Gasstrom 45 durch Adsorption Wasser entzogen und der Gasstrom 45 somit getrocknet. Für die hierbei bestenfalls erreichbaren Drucktaupunkte, d. h. den erreichbaren minimalen Wassergehalt des Gasstroms 45 nach der Trocknung im Arbeitsbereich 102, ist insbesondere auch die Feuchtebeladung des Adsorptionsmaterials 123 in dem oberen Bereich 131 der Adsorptionskammer 11 nahe dem ersten Ende 111 von Bedeutung.

Bei der in den Figuren 1 und 2 gezeigten Adsorptionsvorrichtung 16 bildet ein Teil des Gasstroms 45 einen getrockneten Ausgangsgasstrom 43, der mit Hilfe einer Ausgangsleitung 116 seinem Bestimmungsort zugeführt werden kann.

Die Adsorptionskammer 11 zusammen mit dem Kühler 3, dem Kondensatabscheider 4 und der Druckerhöhungseinrichtung 18 ist in Figur 2 in einer Abwicklung in Umfangsrichtung skizziert. Die Gasströme sind mit Hilfe von Pfeilen angedeutet, wobei in Figur 2 auch ein sektorförmiger Kühlbereich 119 und der Kühlgasstrom 44 eingezeichnet sind. Die Rotationsbewegung 117 der Adsorptionskammer 11 erfolgt derart, dass das Adsorptionsmaterial 123 sich kontinuierlich in wiederkehrender Weise durch den Regenerationsbereich 103, den Kühlbereich 119, den Arbeitsbereich 102 und anschließend wieder durch den Regenerationsbereich 103 hindurchbewegt.

Der Kühlgasstrom 44 wird von einem Teil des Gasstroms 45, der nach dem Trocknen im Arbeitsbereich 102 die Adsorptionskammer 11 verlässt, gebildet und aus der Trocknungsaustrittskammer 9 gespeist. Somit strömt ein Teil des im Arbeitsbereich 102 getrockneten Gasstroms 45, dessen Temperatur niedriger als die Temperatur des Regenerationsgasstroms 42 ist, als Kühlgasstrom 44 im Kühlbereich 119 durch die zum gegebenen Zeitpunkt dort befindlichen Kanäle 101 der Adsorptionskammer 11, gelangt dort in Kontakt mit dem Adsorptionsmaterial 123 und kühlt somit den in dem Kühlbereich 119 befindlichen Teilbereich von Adsorptionskammer 11 und Adsorptionsmaterial 123 ab, bevor dieser Teilbereich in den Arbeitsbereich 102 bewegt wird.

Die Druckerhöhungseinrichtung 18 kann zum Beispiel mit einem Seitenkanalverdichter ausgebildet sein, der innerhalb der Trocknungseintrittskammer 8 oder in dem Adsorptionsbehälter 5 angeordnet ist. In einer Variante kann die Druckerhöhungseinrichtung 18 mit einem Radialverdichter, der zum Beispiel einen Ringdiffusor aufweisen kann, ausgebildet sein.

Beispielhaft kann die Adsorptionskammer eine Höhe H von etwa 400 mm und einen Durchmesser D von etwa 600 mm aufweisen, und die Adsorptionsvorrichtung 16 mit dem Kammerantrieb 12 kann derart eingerichtet sein, dass sie in einem stationären Betrieb mit einer Drehzahl zwischen 2 Umdrehungen pro Stunde und 25 Umdrehungen pro Stunde um ihre Drehachse 104 rotieren kann.

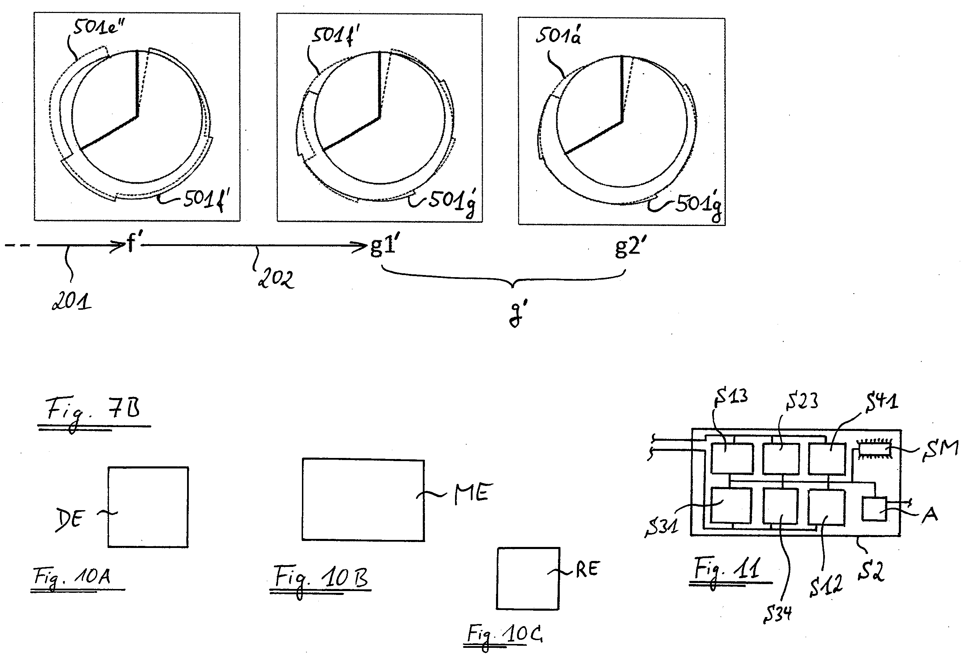

Zur Steuerung der Adsorptionsvorrichtung 16 kann die Adsorptionsvorrichtung 16 eine Steuerungseinrichtung 14 aufweisen, die insbesondere zum Ansteuern des Kammerantriebs 12 und der Druckerhöhungseinrichtung 18 dient. Die Funktionalität der Steuerung der Adsorptionsvorrichtung 16 könnte aber stattdessen auch in einer Steuerungseinrichtung 13 des Eingangskompressors 1 oder in einer externen Steuerungseinrichtung 15 implementiert sein. Entsprechende Varianten sind in der Figur 1 ebenfalls schematisch skizziert. Die skizzierten Steuerungseinrichtungen 13, 14, 15 sind nur beispielhaft zu verstehen und es versteht sich, dass bei unterschiedlichen Ausführungsbeispielen eine oder alle der Steuerungseinrichtungen 13, 14, 15 oder eine geeignete Kombination von zweien dieser Steuerungseinrichtungen 13, 14, 15 vorhanden und mit den anzusteuernden Bestandteilen und ggf. vorhandenen Mess- und Detektionseinrichtungen ME, DE (vgl. Figs. 10B, 10A) verbunden sein können. Jede der Steuerungseinrichtungen 13, 14, 15 kann eine Recheneinrichtung RE (Fig. 10C) aufweisen, als Bestandteil einer solchen ausgeführt sein oder mit einer solchen zum Zwecke eines Signal-/Datenaustausches verbunden sein.

Für die Regeneration des Adsorptionsmaterials 123 in dem Regenerationsbereich 103 sollte ausreichend Wärme zur Verfügung stehen, um das während der Trocknung der Druckluft im Arbeitsbereich 102 aufgenommene Wasser zu desorbieren. Für den Drucktaupunkt, d. h. die Wasserkonzentration in der Gasphase, nach der Trocknung, die bestenfalls erreicht werden kann - mit anderen Worten, die geringste erreichbare Wasserkonzentration in der abströmenden, getrockneten Druckluft -, ist - bei Durchströmung des Adsorptionsmaterials 123 in dem sektorförmigen Arbeitsbereich 102 vertikal von unten nach oben - insbesondere die Beladung des Adsorptionsmaterials 123, die in dem oberen Bereich 131 der rotierenden Adsorptionskammer erreicht wird, entscheidend, da durch diese die Gleichgewichtskonzentration des Wassers in der Gasphase bestimmt wird, bis zu der eine Reduzierung des Wassergehalts der Gasphase möglich ist. Diese Beladung wird maßgeblich durch die Feuchte und Temperatur der Regenerationsluft, mit der das Adsorptionsmaterial direkt vor dem Herausdrehen aus dem Regenerationsbereich 103 durchströmt wird, bestimmt. Diese Beladung kann durch die Regeneration maximal bis zu der zur Feuchte und Temperatur der Regenerationsluft korrespondierenden Gleichgewichtsbeladung verringert werden.

Bei Stillstand der Druckluftförderung, zum Beispiel durch zeitweilige Unterbrechung bei intermittierendem Betrieb, können die Komponenten der Adsorptionsvorrichtung 16 und einer Anlage 1000, in der die Adsorptionsvorrichtung 16 verwendet wird, wie zum Beispiel Rohrleitungen oder Pulsationsdämpfer, abkühlen. Auch das Adsorptionsmaterial 123 selbst kühlt bei Stillstand der Druckluftförderung ab. Insbesondere kann das Adsorptionsmaterial 123, gerade wenn nur eine relativ geringe Masse an Adsorptionsmaterial 123 vorhanden ist, in einer relativ kurzen Zeitspanne abkühlen. Direkt nach dem Start des Eingangskompressors 1 - bei Beginn der Druckluftförderung oder Wiederaufnahme dieser - ist dadurch das erreichbare Adsorptionsgleichgewicht in dem sektorförmigen Regenerationsbereich 103 deutlich ungünstiger als im stationären Betrieb. Dies führt dazu, dass die minimal erreichbare Wasserbeladung des Adsorptionsmaterials 123 zunächst deutlich höher liegt als in einem späteren stationären Betrieb. Das Adsorptionsmaterial 123 wird somit in einem Teilbereich, der sich in dieser Zeitspanne im Regenerationsbereich 103 befindet, nicht so weit regeneriert, wie es im stationären Betrieb möglich ist, bzw. ein vor dem letzten Stopp des Eingangskompressors 1 bereits ausreichend regeneriertes Adsorptionsmaterial 123 in diesem Teilbereich kann von der Regenerationsluft wieder Feuchte aufnehmen. Gelangt dieser Teilbereich des Adsorptionsmaterials 123 beim sofortigen Weiterdrehen der Adsorptionskammer 11 in den Arbeitsbereich 102, kommt es zu einer geringeren Trocknung der Druckluft, d. h. zu höheren Drucktaupunkten, was unter Umständen unerwünscht sein kann.

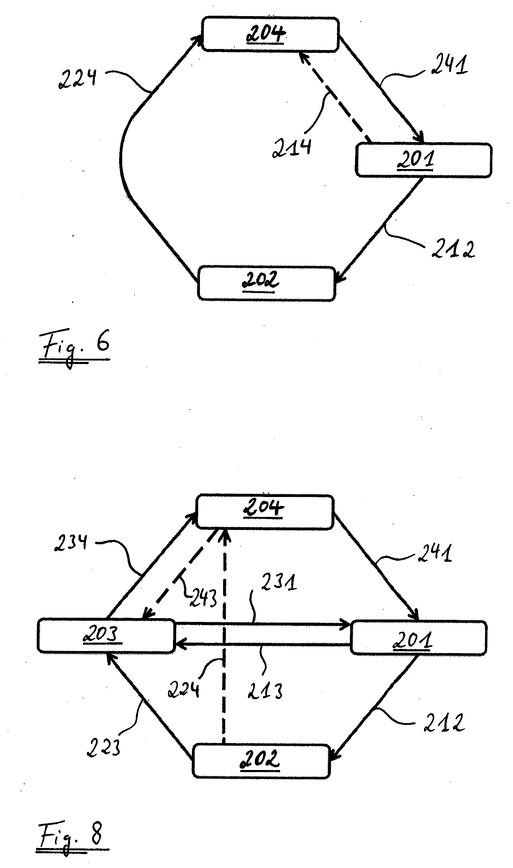

Ein Verfahren gemäß einem ersten Beispiel vermeidet diese Problematik. Gemäß dem ersten Ausführungsbeispiel werden daher, wie im schematischen Ablaufdiagramm der Fig. 6 gezeigt, die im Folgenden beschriebenen Schritte ausgeführt: Wenn ausgehend von einem Zustand "Stopp", entsprechend einer Betriebspause 204, die Druckluftförderung begonnen oder wiederaufgenommen wird, dann bringt eine Steuerungseinrichtung die Adsorptionsvorrichtung zunächst in eine Warmlaufbetriebsphase 201 (Zustand "Warmlauf"), wie durch den Pfeil 241 dargestellt. Während der Warmlaufbetriebsphase 201 läuft bereits die Druckerhöhungseinrichtung 18, die zum Beispiel als Gebläse ausgeführt ist, die Adsorptionskammer 11 hingegen steht während der Warmlaufbetriebsphase 201 relativ zu dem Arbeitsbereich 102 und dem Regenerationsbereich 103 still, dreht sich also nicht um die Drehachse 104. Der Kammerantrieb 12 ist in der Warmlaufbetriebsphase 201 somit deaktiviert.

Sobald während der laufenden Warmlaufbetriebsphase 201 ausreichende Regenerationsbedingungen festgestellt werden, wechselt die Steuerungseinrichtung in eine Lastbetriebsphase 202 (Zustand "Lastlauf") und startet die Drehung der Adsorptionskammer 11 um die Drehachse 104. Hierzu wird mittels der Steuerungseinrichtung der Kammerantrieb 12 aktiviert. Dies ist durch den Pfeil 212 angedeutet. In der Lastbetriebsphase 202 sind der Eingangskompressor 1 und die Druckerhöhungseinrichtung 18 weiterhin in Betrieb.

Wie mit Pfeil 224 in Figur 6 gezeigt, erfolgt bei Beendigung oder Unterbrechung der Druckluftförderung ein Übergang von der Lastbetriebsphase 202 in den Zustand "Stopp", entsprechend einer Betriebspause 204. In der Betriebspause 204 steht die Adsorptionskammer 11 still, es erfolgt keine Druckluftförderung.

Das Vorliegen ausreichender Regenerationsbedingungen, anders gesagt, das Vorliegen von Betriebsbedingungen, die ein hinreichendes Regenerieren des Adsorptionsmaterials 123 in dem Regenerationsbereich 103 ermöglichen, wird während der laufenden Warmlaufbetriebsphase 201 bevorzugt kontinuierlich oder periodisch überprüft und kann auf verschiedene Weise festgestellt werden.

In einer ersten Variante kann das Vorliegen ausreichender Regenerationsbedingungen anhand des Überschreitens eines vorbestimmten Grenzwertes für die Regenerationseintrittstemperatur, d. h. die Temperatur im Regenerationsgasstrom 42 beim Eintritt in den Regenerationsbereich 103, zum Beispiel beim Einströmen in die Regenerationseintrittskammer 6, festgestellt werden.

Um zu verhindern, dass ein hoher Temperaturgrenzwert in bestimmten Betriebszuständen zu spät oder gar nicht erreicht wird oder dass ein niedrigerer Grenzwert dazu führt, das die Adsorptionskammer 11 bereits startet, wenn die Regenerationsbedingungen noch deutlich unter den erreichbaren liegen, wodurch wiederum die Gas-Trocknung verschlechtert würde, kann der Temperaturgrenzwert vorteilhaft manuell oder automatisiert an die Betriebsbedingungen angepasst werden.

In einer zweiten Variante kann das Vorliegen ausreichender Regenerationsbedingungen in der Weise festgestellt werden, dass ermittelt wird, wann die Anstiegsrate, also die Rate der zeitlichen Änderung, der Regenerationseintrittstemperatur unter einen vorgegebenen Grenz- oder Schwellwert fällt. In dieser Variante beginnt die Drehung 117 der Adsorptionskammer 11 also abhängig davon, ob die Regenerationsbedingungen sich noch verbessern oder nicht mehr wesentlich günstiger werden.

In einer dritten Variante könnte zusätzlich oder anstelle der Regenerationseintrittstemperatur und ihrer Anstiegsrate bzw. der Rate ihrer zeitlichen Änderung beispielsweise sichergestellt werden, dass der Warmlauf nicht zu lange andauert. Denkbar ist beispielsweise eine Verzögerungszeit, nach deren Ablauf die Steuerungseinrichtung die Rotation der Adsorptionskammer 11, ohne Rücksicht auf Kriterien für die Regenerationsbedingungen, in Gang setzt. Diese Verzögerungszeit könnte fest eingestellt oder auch in Abhängigkeit von der geförderten Gasmenge oder dem geförderten Gasmassenstrom und/oder der Zeit nach dem Ende der letzten Lastbetriebsphase, oder auch dem Ende der letzten Warmlauf- oder Nachlaufbetriebsphase, ermittelt werden.

Es kann in einer weiteren Variante vorgesehen sein, dass ein Maß, zum Beispiel ein Winkel, für die Bewegung, die das Adsorptionsmaterial 123 relativ zu dem Arbeitsbereich 102 und dem Regenerationsbereich 103 während der Zeitdauer der Warmlaufbetriebsphase 201 ausgeführt hätte, wenn die Adsorptionsvorrichtung 16 statt in der Warmlaufbetriebsphase 201 in einer Lastbetriebsphase 202 betrieben worden wäre, ermittelt wird, und dass die Rotation der Adsorptionskammer 11 in Gang gesetzt wird, wenn dieses Maß einen vorgegebenen Wert überschreitet.

In weiteren Varianten können, um das Vorliegen ausreichender Regenerationsbedingungen festzustellen, aktuelle Betriebsdaten wie Werte und Änderungsraten für
- eine Regenerationseintrittstemperatur, wie soeben beschrieben,
- eine Regenerationsaustrittstemperatur, also die Temperatur des Regenerationsgasstroms 42 beim Austritt in die Regenerationsaustrittskammer 7,
- einen vom Eingangsverdichter 1 bereitgestellten Verdichtungsdruck, z.B. im Eingangsgasstrom 41,
- weitere Temperaturen des Gesamtsystems Eingangskompressor 1 und Adsorptionsvorrichtung 16, z. B. eine Ansaugtemperatur der letzten Verdichtungsstufe des Eingangskompressors 1 oder Kühlwassertemperaturen, die somit Betriebsdaten der Anlage 1000 darstellen,
- einen Druckluftmassenstrom
berücksichtigt werden. Diese Betriebsdaten können einzeln oder in geeigneter Kombination miteinander, und zusätzlich oder alternativ auch für eine oder mehrere vorangegangene Betriebsphasen/Betriebspausen 201, 202, 203, 204, berücksichtigt werden. Zudem kann die bereits aufgelaufene Dauer der aktuellen Warmlaufbetriebsphase 201, und/oder die Dauer einer oder mehrerer vorangegangener Betriebsphasen, namentlich Warmlaufbetriebsphasen 201, Lastbetriebsphasen 202 und/oder Nachlaufbetriebsphasen 203, und/oder die Dauer von Betriebspausen 204, in denen keine Druckluft gefördert wird, berücksichtigt werden.

Falls allerdings - zum Beispiel bei nur sehr kurzzeitiger Unterbrechung der Förderung - bereits bei Wiederaufnahme des Förderns des Gasstroms ausreichende Regenerationsbedingungen festgestellt werden, kann sich in einigen Fällen die Zeitdauer der Warmlaufbetriebsphase 201 bis auf Null reduzieren, so dass in diesen Fällen die Warmlaufbetriebsphase 201 entfällt und sogleich eine Lastbetriebsphase 202 eingeleitet wird. Andererseits kann es auch vorkommen, dass im Falle einer nur kurze Zeit dauernden Förderung die Warmlaufbetriebsphase 201 noch nicht abgeschlossen ist, wenn das Fördern unterbrochen wird. In diesem Fall erfolgt ein Abbruch der Warmlaufbetriebsphase 201 und ein direkter Übergang zur Betriebspause 204 (siehe Pfeil 214 in Figur 6).

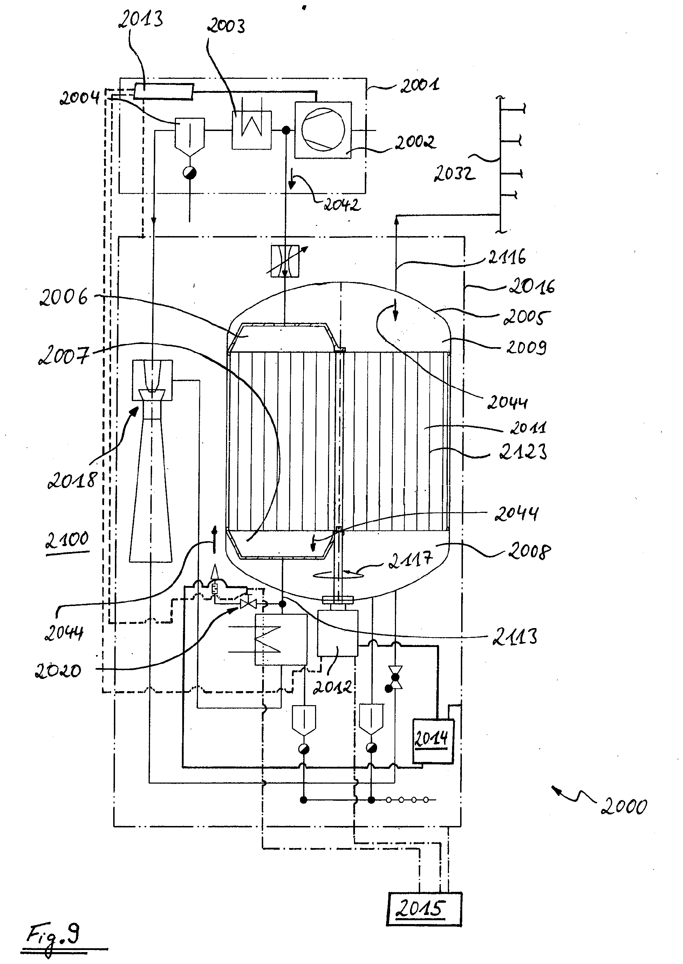

Eine Messeinrichtung ME, die in der Anlage 1000 der Figur 1, oder auch in einer später noch zu beschreibenden Anlage 2000 der Figur 9, vorhanden sein kann und dafür ausgebildet ist, um benötigte Betriebsdaten der Adsorptionsvorrichtung und/oder Betriebsdaten der Anlage und/oder Zeitdauern zu messen, ist in Figur 10B schematisch skizziert. Falls Betriebsdaten oder Zeitdauern zu errechnen oder abzuschätzen sind, ist hierfür die Recheneinrichtung RE der Figur 10C vorgesehen. In Figur 10A ist ferner eine Detektionseinrichtung DE schematisch gezeigt, die in der Anlage 1000 oder 2000 eingesetzt werden kann, um zu detektieren, wenn die Druckluftförderung beendet oder unterbrochen wird, und um zu detektieren, wenn die Druckluftförderung begonnen oder wiederaufgenommen wird. Es versteht sich, dass die Messeinrichtung ME und die Detektionseinrichtung DE auch gemeinsam in einem Bauelement ausgebildet sein können und dass stattdessen auch jede der Einrichtungen ME, DE als mehrere separate Bauelemente ausgebildet werden kann, beispielsweise um mehrere unterschiedliche Betriebsdaten oder Zeitdauern zu messen oder mehrere unterschiedliche Ereignisse zu detektieren. Mess- und Detektionseinrichtung ME, DE können mit der Recheneinrichtung RE je nach Bedarf geeignet verbunden sein. Die Einrichtungen ME, DE, RE bzw. deren Bauelemente können nach Bedarf an beliebiger geeigneter Stelle der Anlagen 1000, 2000 eingesetzt werden, um für den hier erläuterten Betrieb der Adsorptionsvorrichtung benötigte Daten, je nach gewählter Variante, zu ermitteln. Beispielsweise kann die Messeinrichtung ME zur Messung von Zeitdauern, Temperaturen, Drücken, Gasmengen, Gasmassenströmen oder Drehzahlen usw. ausgebildet sein. Ggf. benötigte Änderungsraten können zum Beispiel mittels der Recheneinrichtung RE bestimmt werden.

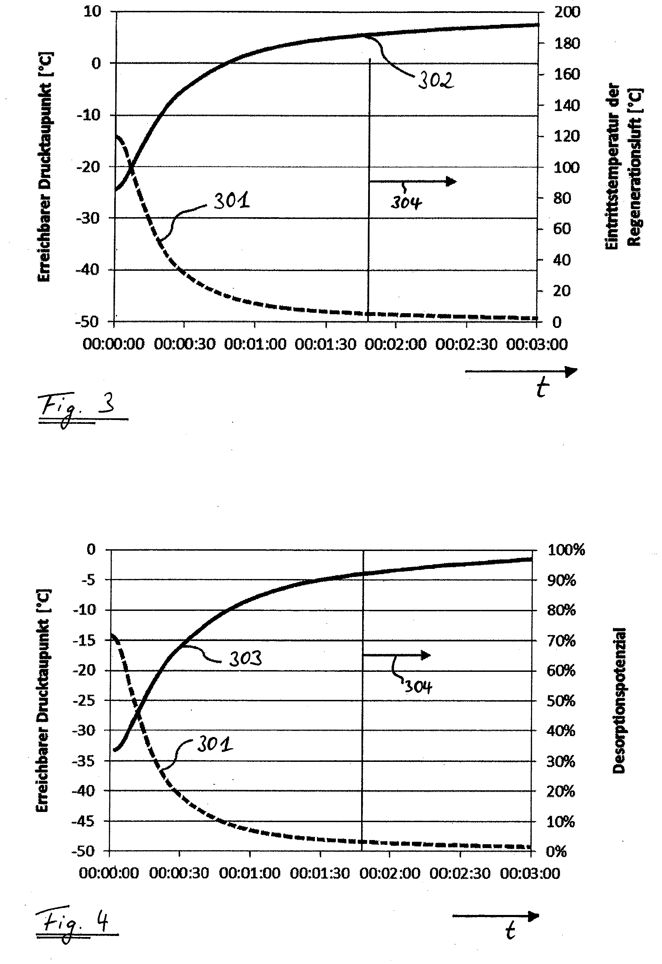

Die Vorteile des Warmlaufbetriebszustands 201, wie er bei dem Verfahren gemäß dem ersten Beispiel vorgesehen ist, sollen nun unter Bezugnahme auf die Figuren 3 und 4 näher erläutert werden. In Figur 3 ist schematisch ein beispielhafter Verlauf der Eintrittstemperatur der Regenerationsluft 302 - also der Temperatur, mit der der Regenerationsgasstrom 42 in den Regenerationsbereich 103 eintritt - bei einem Wiederanlauf der Druckluftförderung dargestellt, wie er bei der Adsorptionsvorrichtung 16 der Figuren 1 und 2 auftreten könnte. Der Wiederanlauf beginnt zum Zeitpunkt 00:00:00.

Die Kurve 301 gibt zu jedem Zeitpunkt den Drucktaupunkt an, der im Arbeitssbereich 102 (entsprechend einem Trocknungssektor) erreicht werden könnte, wenn das Adsorptionsmaterial 123 die Beladung hätte, die sich beim Erreichen des Adsorptionsgleichgewichts mit der aktuellen Eintrittstemperatur der Regenerationsluft einstellen würde. Man erkennt, dass diese Drucktaupunkte 301 zu Beginn deutlich oberhalb der Werte liegen, die sich nach etwas längerem Betrieb ergeben. Bereits regeneriertes Adsorptionsmaterial im oberen Bereich 131 der Adsorptionskammer 11 im Regenerationsbereich 103 nimmt daher wieder etwas Feuchtigkeit auf. Wenn die Adsorptionskammer 11 in dieser Situation weitergedreht würde, würde diese Feuchtigkeit eine geringere Trocknung im Arbeitsbereich 102 bewirken. Beim einem durch die Warmlaufbetriebsphase 201 verzögerten Adsorptionskammerstart, wie in Figur 3 zu sehen, ist die Eintrittstemperatur der Regenerationsluft bereits so hoch, dass niedrige Drucktaupunkte erreichbar sind. Der Zeitpunkt, zu dem in dem Beispiel der Figur 3 die Adsorptionskammer 11 beginnt, sich zu drehen, ist mittels des Pfeils 304 und einer vertikalen Linie angedeutet.

In Figur 4 ist zusätzlich zum erreichbaren Drucktaupunkt 301 das Desorptionspotenzial als Kurve 303 angegeben. Das Desorptionspotenzial 303 gibt hierbei an, wie viel Regenerationswärme im Vergleich zum stationären Betrieb für die Regeneration zur Verfügung steht. Man sieht, dass bis zum Start der Adsorptionskammer 11 bereits eine große Regenerationswärmemenge zur Verfügung steht. Trotz der weiter oben beschriebenen Besonderheit im oberen Bereich 131 der Adsorptionskammer kann also das Adsorptionsmaterial 123 im Regenerationsbereich 103 schon weitgehend regeneriert werden.

Das Verfahren gemäß dem ersten Beispiel kann besonders vorteilhaft in Verbindung mit einem Rotationstrockner mit Vollstromregeneration, wie beispielhaft in den Figuren 1 und 2 gezeigt, eingesetzt werden. In einem solchen Fall steht eine große Menge an Regenerationswärme zur Verfügung, die in der Regel deutlich oberhalb des Bedarfs liegt.

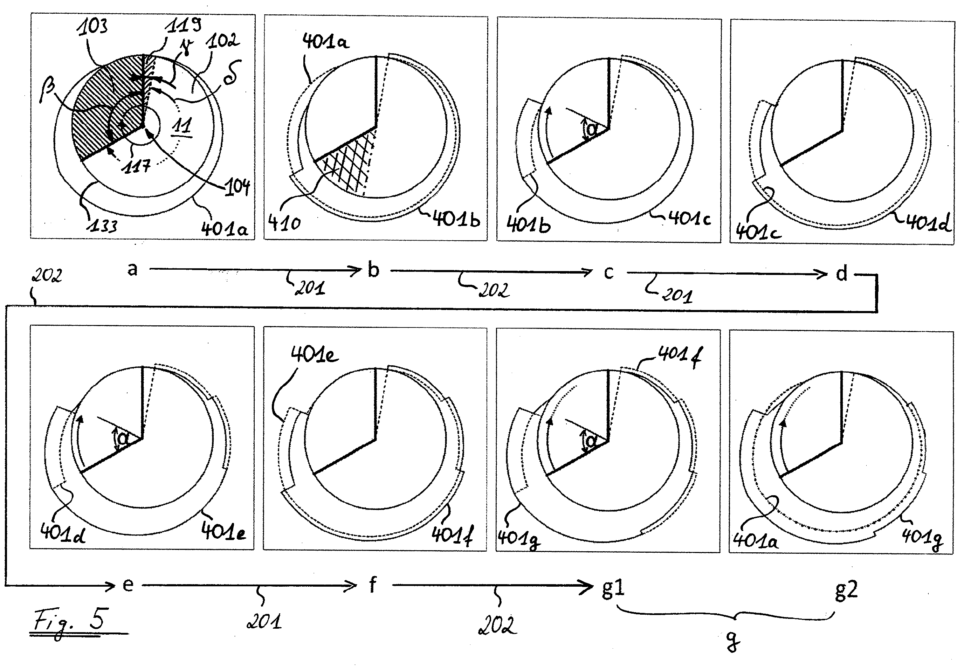

Der Ablauf des Verfahrens gemäß dem ersten Beispiel soll nun anhand der in den Teilbildern a bis g2 der Figur 5 dargestellten Betriebszustände a bis g der Adsorptionsvorrichtung 16 dargelegt werden.

Figur 5 zeigt die Beladung in verschiedenen aufeinanderfolgenden Betriebszuständen a bis g der Adsorptionsvorrichtung 16. Für die in Figur 5 skizzierten Betriebszustände wird vereinfachend beispielhaft davon ausgegangen, dass 75 Prozent der verfügbaren Regenerationswärme ausreichen, um die bei einem Durchlauf durch den Arbeitsbereich 102 aufgenommene Feuchtigkeit wieder aus dem Adsorptionsmaterial 123 zu desorbieren. Dieser Zahlenwert dient hier lediglich der Veranschaulichung und könnte bei anderen, ebenfalls vorteilhaften und nützlichen Beispielen abweichen.

Zeichnerisch ist in den Einzelskizzen in Figur 5 die Feuchtebeladung des Adsorptionsmaterials als durchgezogene Linie um die Adsorptionskammer 11 dargestellt, wobei der radiale Abstand zur Umfangslinie 133 der Adsorptionskammer 11 ein Maß für die Beladung darstellt. Die Beladung ist für den jeweiligen einzelnen Zustand mit den Bezugszeichen 401a bis 401g bezeichnet. In den Teilbildern a bis g1 zeigt die gestrichelte, um die Adsorptionskammer 11 laufende Linie jeweils den Beladungsverlauf des vorhergehenden Teilbildes.

Es wird zum Zwecke der Erläuterung zudem beispielhaft und vereinfachend davon ausgegangen, dass die Beladung während der Verweilzeit des Adsorptionsmaterials 123 im Arbeitsbereich 102 (Trocknungssektor) linear ansteigt und während der Verweilzeit des Adsorptionsmaterials 123 im Regenerationsbereich 103 (Regenerationssektor) linear abfällt. Im Dauerbetrieb wird nach drei Vierteln des Regenerationssektors der unter den gegebenen Regenerationsbedingungen niedrigste mögliche Beladungswert, d. h. die maximal mögliche Regeneration erreicht. Dies ist zeichnerisch dadurch dargestellt, dass die Kurve für die Beladung dann auf die Umfangslinie 133 der Adsorptionskammer trifft. In der Praxis ist die Beladung von exakt Null nicht erreichbar, in den zeichnerischen Darstellungen der Figur 5 und in den nachfolgenden Erläuterungen soll die Beladung Null für die durch die jeweiligen Regenerationsbedingungen niedrigste mögliche Beladung stehen.

Der tatsächliche Verlauf wird jedoch meist wesentlich komplexer sein. Beispielhaft sei darauf hingewiesen, dass die Beladung des Adsorptionsmaterials 123 in der hier nicht dargestellten Strömungsrichtung (im Wesentlichen normal zur Zeichenebene in Figur 5, also parallel zur Drehachse 104) nicht konstant sein wird. Die Beladungskurven 401a bis 401g können daher in Figur 5 als über die Höhe H der Adsorptionskammer 11 gemittelte Beladung verstanden werden. Auf diese Weise lässt sich der Ablauf des Verfahrens gemäß dem ersten Beispiel auf einfache Weise veranschaulichen.

Das Teilbild a zeigt den schematisch vereinfachten Aufbau der Adsorptionsvorrichtung 16 von unten, die Blickrichtung ist durch Pfeil 402 in Figur 1 angegeben. Der sektorförmige Regenerationsbereich 103 ist im linken oberen Teil des Teilbildes zwischen den beiden dicken radialen Linien angeordnet und erstreckt sich über einen Winkel β um die Drehachse 104, der bei diesem Beispiel etwa 120° beträgt. Hingegen ist der sektorförmige Kühlbereich 119 kleiner als der Regenerationsbereich 103 und erstreckt sich im oberen Teil des Teilbilds a rechts von der Mitte der Adsorptionskammer 11 bis zu einer gestrichelten radialen Linie. In Figur 5 nimmt der Kühlbereich 119 einen Winkel γ ein, der beispielhaft etwa 10° beträgt. Zur Verdeutlichung sind in Teilbild a der Regenerationsbereich 103 und der Kühlbereich 119 mit verschiedenen diagonalen Schraffuren versehen. Der restliche Teil des Vollkreises stellt einen sektorförmigen Arbeitsbereich 102, der als Trocknungssektor dient, dar. Bei dem gezeigten Beispiel erstreckt sich der Arbeitsbereich 102 somit über einen Winkel δ von etwa 230°. Es versteht sich hierbei aber, dass die Winkel β, γ und δ bei anderen vorteilhaften und nützlichen Beispielen auch anders gewählt werden können. Die Adsorptionskammer dreht sich im Uhrzeigersinn, wie durch den Pfeil 117 angedeutet, d.h. die Sektoren werden in der Reihenfolge Trocknung - Regeneration - Kühlung durchlaufen. Der Aufbau der anderen Teilbilder b bis g2 entspricht dem des Teilbilds a.
- Betriebszustand in Teilbild a:
   Der dargestellte Verlauf der Beladung 401a über die Umfangsrichtung der Adsorptionskammer 11 entspricht einem Verlauf, wie er sich im stationären Betrieb, d. h. bei kontinuierlichem Fördern des Druckluftstroms und kontinuierlicher Rotation 117 der Adsorptionskammer 11 einstellen kann. Wird die Förderung in diesem Zustand unterbrochen, kommt es zu einer Betriebspause 204, in der der Beladungsverlauf 401a vorliegt. Teilbild a zeigt somit die Situation beim Stopp der Druckluftförderung und im Moment des späteren Wiederbeginns der Druckluftförderung.
- Übergang von Teilbild a zu Teilbild b:
   Es kommt zum Stillstand der Druckluftförderung mit der Beladung 401a und zur Abkühlung des Systems, d. h. insbesondere das Adsorptionsmaterial 123, nicht gezeigte Zu- und Ableitungen und auch der Eingangskompressor 1 sowie die darin befindlichen Luftmassen kühlen sich ab. Dann wird erneut Druckluft angefordert, es kommt zum Wiederbeginn der Druckluftförderung. Eine Warmlaufbetriebsphase 201 wird ausgelöst, während welcher Druckluft durch die Adsorptionsvorrichtung 16 gefördert wird, die Adsorptionskammer 11 jedoch stillsteht. Dabei werden Arbeitsbereich 102, Regenerationsbereich 103 und Kühlbereich 119 durchströmt. Den Beladungszustand 401b am Ende der Warmlaufbetriebsphase 201 zeigt Teilbild b, wobei die im Regenerationsbereich 103 währenddessen erfolgte Regeneration ersichtlich wird.
- Übergang von Teilbild b zu Teilbild c:
   Am Ende der Warmlaufbetriebsphase 201 wird eine Lastbetriebsphase 202 eingeleitet, während der weiterhin Druckluft durch die Adsorptionsvorrichtung 16 gefördert wird und die Adsorptionskammer 11 um den Drehwinkel α rotiert. Dabei wird ein Teilbereich der Adsorptionskammer 11 und damit auch ein - in Figur 5 kreuzweise schraffiert eingezeichneter - Teilbereich 410 des Adsorptionsmaterials 123, das sich in der Adsorptionskammer 11 befindet, aus dem Arbeitsbereich 102 in den Regenerationsbereich 103 hineinbewegt. Währenddessen werden Arbeitsbereich 102, Regenerationsbereich 103 und Kühlbereich 119 kontinuierlich durchströmt.
- Übergang von Teilbild c zu Teilbild d:
   Nachdem die Adsorptionskammer 11 sich um dem Winkel α gedreht hat, kommt es wieder zu einer Unterbrechung der Druckluftförderung und zum Stillstand der Adsorptionskammer 11. Das System kühlt erneut ab. Sodann kommt es zu einem Wiederbeginn der Druckluftförderung, und es wird wiederum eine Warmlaufbetriebsphase 201 eingeleitet, während der die Adsorptionskammer 11 stillsteht. Am Ende dieser Warmlaufbetriebsphase 201 liegt die Beladungsverteilung 401d vor.
- Übergang von Teilbild d zu Teilbild e:
   In einer weiteren Lastbetriebsphase 202 dreht sich die Adsorptionskammer 11 wieder um den Winkel α im Uhrzeigersinn, während Druckluft gefördert wird. Ein weiterer Teilbereich des Adsorptionsmaterials 123 wird dadurch in den Regenerationsbereich 103 hineinbewegt.
- Übergang von Teilbild e zu Teilbild f:
   Im Zustand des Teilbilds e wird die Druckluftförderung erneut unterbrochen, die Adsorptionskammer 11 steht wieder still und das System kühlt wiederum ab. Mit erneutem Wiederbeginn der Druckluftförderung wird eine weitere Warmlaufbetriebsphase 201 eingeleitet, während der die Adsorptionskammer 11 stillsteht.
- Übergang von Teilbild f zu Teilbild g1:
   Am Ende der Warmlaufbetriebsphase 201 wird eine weitere Lastbetriebsphase 202 ausgelöst. Die Adsorptionskammer 11 dreht sich nochmals um den Winkel a, während weiterhin Druckluft gefördert wird.

Bei dem in Teilbild a gezeigten Zustand, wie er sich im stationären Betrieb einstellt, steigt die Beladung 401a in Drehrichtung 117 der Adsorptionskammer 11 von Null am Austritt des Kühlbereichs 119 bis zu einem Maximalwert am Ende des Arbeitsbereichs 102, also des Trocknungssektors, an. Im Verlauf des Regenerationsbereichs 103 sinkt der Beladungswert 401a wieder, bis nach drei Vierteln des Regenerationsbereichs 103 der Wert Null erreicht wird.

Es wird angenommen, dass in dem in Teilbild a der Figur 5 dargestellten Beladungszustand die Druckluftförderung gestoppt wird, die Adsorptionskammerdrehung im selben Moment stoppt und das System anschließend abkühlt. Wie oben beschrieben, wiederholt sich dieser Stopp der Druckluftförderung mit anschließender Abkühlung in Teilbild c und Teilbild e.

Wie oben unter Bezugnahme auf die Figuren 3 und 4 dargelegt, ist aufgrund der Abkühlung die Regenerationstemperatur bei einer jeweiligen Wiederaufnahme der Druckluftförderung noch zu niedrig, um eine gewünschte niedrige Gleichgewichtsbeladung des Adsorptionsmaterials 123 zu erreichen, so dass die Rotation der Adsorptionskammer 11 zunächst nicht gestartet wird. Während des Adsorptionskammerstillstands ist die Regenerationswärme aber schon ausreichend, um einen Großteil des Wassers aus dem Adsorptionsmaterial 123 zu entfernen. Der Wassergehalt in dem im Regenerationsbereich 103 befindlichen Teilbereich des Adsorptionsmaterials 123 verringert sich dementsprechend bis zum Moment des Starts der Adsorptionskammerdrehung. Dagegen steigt die Wasserbeladung im Arbeitsbereich 102 (Trocknungssek-tor) während des Adsorptionskammerstillstands an. Dies ist in den Teilbildern b, d und f der Figur 5 dargestellt.

Wie beschrieben, ist in den Teilbildern c, e und g1 die Adsorptionskammer um einen Winkel α weitergedreht worden. Dabei verändert sich die Beladung im Verlauf dieser Drehung im gleichen Maß wie in Teilbild a. Teilbild g2 zeigt denselben Zustand wie Teilbild g1, wobei in Teilbild g2 aber als Referenz die Beladungslinie 401a des Zustands aus Teilbild a dargestellt ist. Es wird erkennbar, dass die Beladung 401g im Arbeitsbereich 102 gegenüber der Beladung 401a des stationären Zustands deutlich erhöht ist.

Somit wird erkennbar, dass das Verfahren gemäß dem ersten Beispiel besonders vorteilhaft dann eingesetzt werden kann, wenn es gelegentlich zu einer Unterbrechung der Druckluftförderung kommt. Die zunehmende Feuchtigkeitsbeladung des Adsorptionsmaterials 123 im Arbeitsbereich 102 kann bei ausreichend langen Lastbetriebsphasen 202 durch den Durchlauf des Adsorptionsmaterials 123 durch den Regenerationsbereich 103 wieder auf die im stationären Zustand erreichte Beladung, entsprechend der Beladung 401a, reduziert werden.

In Figur 8 ist ein schematisches Flussdiagramm gezeigt, welches das Prinzip eines Verfahrens gemäß einem Ausführungsbeispiel der Erfindung veranschaulichen soll. Das Verfahren gemäß dem Ausführungsbeispiel wird ebenfalls bevorzugt mit einer Adsorptionsvorrichtung, wie sie in den Figuren 1 und 2 skizziert und vorstehend beschrieben ist, durchgeführt.

Gezeigt sind in Figur 8 vier Betriebszustände der Adsorptionsvorrichtung, namentlich eine Betriebspause 204 (Betriebszustand "Stopp"), eine Warmlaufbetriebsphase 201 (Betriebszustand "Warmlauf"), eine Lastbetriebsphase 202 (Betriebszustand "Lastlauf") sowie eine Nachlaufbetriebsphase 203 (Betriebszustand "Nachlauf").

Wenn ausgehend von der Betriebspause 204, in der keine Druckluftförderung erfolgt, begonnen wird, Druckluft zu fördern, um getrocknete Druckluft bereitzustellen, dann wechselt die Steuerungseinrichtung zunächst in eine Warmlaufbetriebsphase 201, wie durch Pfeil 241 angedeutet. Für die Warmlaufbetriebsphase 201 und die Bestimmung der Zeitdauer der Warmlaufbetriebsphase 201 gilt das für das erste Ausführungsbeispiel weiter oben Gesagte. In der Warmlaufbetriebsphase 201 läuft bereits die Druckerhöhungseinrichtung 18, die Adsorptionskammer 11 hingegen steht still in Bezug auf den Arbeitsbereich 102 und den Regenerationsbereich 103. Auch bei dem Verfahren gemäß dem Ausführungsbeispiel wird in der Warmlaufbetriebsphase 201 bereits Druckluft gefördert, d.h. der Eingangskompressor 1 ist in Betrieb.

Sobald während der Warmlaufbetriebsphase 201 ausreichende Regenerationsbedingungen festgestellt werden, wird von der Steuerungseinrichtung eine Lastbetriebsphase 202 ausgelöst, siehe Pfeil 212. Hierbei wird die Drehung der Adsorptionskammer 11 gestartet. Die Druckerhöhungseinrichtung 18 ist weiterhin in Betrieb, der Eingangskompressor 1 läuft weiterhin, Druckluft wird gefördert.

Wenn im Zustand "Warmlauf", entsprechend der Warmlaufbetriebsphase 201, oder im Zustand "Lastlauf", entsprechend der Lastbetriebphase 202, die Druckluftförderung stoppt, wird von der Steuerungseinrichtung eine Nachlaufbetriebsphase 203 eingeleitet (Zustand "Nachlauf"), siehe die Pfeile 213 und 223 in Figur 8. Erfolgt die Unterbrechung der Druckluftförderung noch während der Warmlaufbetriebsphase 201, so wird die Lastbetriebsphase 202 nicht eingeleitet, sondern die Steuerung leitet sogleich die Nachlaufbetriebsphase 203 ein, wie durch Pfeil 213 veranschaulicht. Wird innerhalb der Nachlaufbetriebsphase 203 erneut Druckluft angefordert und die Druckluftförderung wiederaufgenommen, dann wird erneut eine Warmlaufbetriebsphase 201 ausgelöst, siehe Pfeil 231. Die Nachlaufbetriebsphase 203 wird vorzugsweise unmittelbar im Anschluss an den Stopp der Druckluftförderung gestartet. Dies kann bei intermittierendem Betrieb mit kurzen Förderpausen günstig sein, weil auf diese Weise die Wahrscheinlichkeit, dass erneut Druckluft angefordert wird, bevor die Nachlaufbetriebsphase 203 abgeschlossen ist, verringert werden kann. Zwischen den Zeitpunkt der Unterbrechung der Druckluftförderung und den Beginn der Nachlaufbetriebsphase 203 kann aber auch eine Verzögerung in Gestalt einer Betriebspause 204 eingeschoben werden, siehe die Pfeile 224, 243 in Figur 8, wobei die Verzögerung bevorzugt höchstens zehn Minuten, besonders bevorzugt höchstens fünf Minuten dauert.

Figur 11 zeigt schematisch vereinfacht eine beispielhafte Steuerungseinrichtung S2 für die Durchführung des Verfahrens gemäß dem Ausführungsbeispiel mit einigen ihrer Bestandteile, wobei es sich versteht, dass die Steuerungseinrichtung S2 noch weitere Bestandteile aufweisen kann. Die Steuerungseinrichtung S2 weist Steuerungsmittel S13, S23, S41, S12, S34 und S31 auf, die dazu dienen, die Adsorptionsvorrichtung derart anzusteuern, dass diese die in Figur 8 mit den Pfeilen 213, 223, 241, 212, 234, 231 bezeichneten Übergänge zwischen den Betriebszuständen 201, 202, 203 und Betriebspausen 204 ausführt. Die Steuerungsmittel S23, S13 dienen dem Einleiten einer Nachlaufbetriebsphase 203 und dem Ansteuern der Adsorptionsvorrichtung derart, dass sich das Adsorptionsmaterial während der Nachlaufbetriebsphase 203 wie zu dem Verfahren gemäß dem Ausführungsbeispiel näher beschrieben bewegt, wenn ein Fördern des Gasstroms durch die Adsorptionsvorrichtung zur Bereitstellung des Ausgangsgasstroms zumindest zeitweilig unterbrochen oder beendet wird, was zum Beispiel in der Lastbetriebsphase 202, aber auch bereits in der Warmlaufbetriebsphase 201 vorkommen kann. Die Steuerungseinrichtung S2 umfasst zudem Auswertemittel A zum Auswerten von Betriebsdaten der Adsorptionsvorrichtung, von Betriebsdaten der Anlage, in welcher die Adsorptionsvorrichtung verwendet wird und/oder von Zeitdauern von Betriebsphasen und/oder Betriebspausen. Die Auswertemittel können in der Recheneinrichtung RE, die als ein Bestandteil der Steuerungseinrichtung S2 ausgeführt sein kann, integriert sein oder von dieser Gebrauch machen.

Darüber hinaus können die Auswertemittel A, neben den durch Mess- bzw. Detektionseinrichtung(en) ME, DE bereitgestellten Daten, vorbestimmte Parameter der Adsorptionsvorrichtung und/oder des Adsorptionsmaterials auswerten, die zum Beispiel in der Steuerungseinrichtung S2 hinterlegt sind. Die Steuerungseinrichtung S2 kann zu diesem Zweck mit der Detektionseinrichtung DE und der Messeinrichtung ME gekoppelt sein, um Daten und/oder Signale von diesen zu erhalten und, zum Beispiel mittels der Auswertemittel A, weiterzuverarbeiten. Die vorbestimmten Parameter, sowie ggf. für einen gewissen Zeitraum zu hinterlegende Zwischenergebnisse, können mittels des Speichermediums SM der Steuerungseinrichtung S2 gespeichert werden.

Während die Druckluftförderung unterbrochen ist, und somit auch während der Nachlaufbetriebsphase 203, erfolgt im Regenerationsbereich 103 kein weiteres Regenerieren des darin befindlichen Adsorptionsmaterials 123. Bei der zumindest zeitweiligen Unterbrechung der Druckluftförderung wird in der Regel aber ein Teil des Adsorptionsmaterials 123 im Regenerationsbereich 103 bereits ausreichend regeneriert sein. Dieser Teil würde beim erneuten Start der Druckluftförderung - aufgrund der zwischenzeitlich erfolgten Abkühlung und der dadurch ungünstigeren Regenerationsbedingungen - wieder etwas Feuchte aufnehmen. Dies kann bei dem Verfahren gemäß dem Ausführungsbeispiel dadurch vermieden werden, dass die Adsorptionskammer nach dem Stopp der Druckluftförderung in der Nachlaufbetriebsphase 203 noch etwas weitergedreht und durch diese Rotation um einen Nachlaufwinkel ein Teilbereich des Adsorptionsmaterials 123 aus dem Regenerationsbereich 103 herausbewegt wird. Dies ist insbesondere dann vorteilhaft, wenn die Zeitintervalle, in denen Druckluft gefördert wird, relativ kurz sind und die Adsorptionskammer 11 sich wegen des Stillstands im Zustand "Warmlauf" während der Druckluftförderung nur wenig oder gar nicht bewegt. Durch dieses Weiterdrehen wird vermieden, dass in solchen Fällen die Verweilzeit des Adsorptionsmaterials 123 im Arbeitsbereich 102 zu lang wird und das Adsorptionsmaterial 123 dadurch zu stark beladen wird. Die Bestimmung der Zeitdauer der Nachlaufbetriebsphase 203 oder der Größe des in der Nachlaufbetriebsphase 203 aus dem Regenerationsbereich 103 herausbewegten Teilbereichs 550 bzw. 551 wird weiter unten näher erläutert werden. Insbesondere dann, wenn die Druckluftförderung nach einer ausreichend langen Lastbetriebsphase 202, der eine Warmlaufbetriebsphase 201 vorangegangen ist, unterbrochen wird, kann die Nachlaufbetriebsphase 203 ohne Probleme entfallen. Nach Beendigung der Nachlaufbetriebsphase 203 wird, wie durch Pfeil 234 angedeutet, wiederum eine Betriebspause 204 (Betriebszustand "Stopp") erreicht.

Während des Weiterdrehens der Adsorptionskammer 11 in der Nachlaufbetriebsphase 203 wird ein erhitzter Bereich der Adsorptionskammer 11 mit heißem Adsorptionsmaterial 123 aus dem Regenerationsbereich 103 durch den Kühlbereich 119 bewegt. Würde heißes Adsorptionsmaterial 123 in den Arbeitsbereich 102 gelangen, so könnte der Fall eintreten, dass sich dieses Material dort - z. B. wegen einer nur kurzen Betriebspause 204 - kaum abkühlen kann, bevor erneut eine Warmlaufbetriebsphase 201 ausgelöst wird. Um zu vermeiden, dass heißes Adsorptionsmaterial 123 in den Arbeitsbereich 102 gelangt und dort das Trocknungsergebnis verschlechtert, wird der Kühlgasstrom 44 während des Weiterdrehens aufrechterhalten.

Dies soll anhand der Figur 2, in der der Kühlgasstrom 44 eingezeichnet ist, näher erläutert werden. Wird das Verfahren gemäß dem Ausführungsbeispiel verwendet, um eine Adsorptionsvorrichtung 16 mit einer separaten Druckerhöhungseinrichtung 18, wie in den Figuren 1 und 2 skizziert, zu betreiben, dann steht mit der Druckerhöhungseinrichtung 18 für die Druckerhöhung eine unabhängig von der Druckluftförderung steuerbare Einrichtung, wie z. B. ein Radialgebläse, zur Verfügung. In der Nachlaufbetriebsphase 203 erfolgt keine Druckluftförderung. Die Druckerhöhungseinrichtung 18 ermöglicht es aber, die in der Adsorptionsvorrichtung 16 und den Leitungen 113, 114, 115 vorhandene Luft als Kühlgasstrom 44 im Kreislauf über den Arbeitsbereich 102, den Kühlbereich 119, den Kühler 3 und den Kondensatabscheider 4 zu fördern. Der Strömungsweg, den die Druckluft in der Nachlaufbetriebsphase 203 bei Förderung in diesem Kreislauf nimmt, ist in Figur 2 mit dem Bezugszeichen 273 bezeichnet und als punktierte Linie dargestellt.

Die Druckerhöhungseinrichtung 18 wird während oder bei Einleitung der Nachlaufbetriebsphase 203 auf eine Förderleistung, zum Beispiel eine bestimmten Fördermenge je Zeiteinheit, eingestellt, die für die Förderung der Druckluft als Kühlgasstrom 44 geeignet und hinreichend ist. Die Regulierung der Förderleistung kann durch Steuern einer Drehzahl der Druckerhöhungseinrichtung 18 erfolgen. Beispielsweise kann die Adsorptionskammer 11 mit relativ hoher Drehzahl um den Nachlaufwinkel rotieren, während die Förderleistung der Druckerhöhungseinrichtung 18 für die Nachlaufbetriebsphase 203 gegenüber der Förderleistung in der Lastbetriebsphase 202 durch Verminderung der Drehzahl verringert wird.

Die Drehzahl der Adsorptionskammer 11 wird im stationären Betrieb bevorzugt derart gewählt, dass das Adsorptionsmaterial 123 pro Durchlauf durch den Arbeitsbereich 102 nicht mehr als eine definierte Menge an aufzunehmender Feuchtigkeit aufnimmt. Während die Adsorptionskammer 11 beim Start der Druckluftförderung in der Warmlaufbetriebsphase 201 stillsteht, wird die "ausgelassene" Drehung, also die Drehung, die die Adsorptionskammer 11 beim normalen Betrieb durchgeführt hätte, bestimmt, insbesondere berechnet, und gespeichert, zum Beispiel auf dem Speichermedium SM der Steuerungseinrichtung S2. Wenn nur verhältnismäßig kurze Zeit Druckluft gefördert wird, wird nach dem Stopp der Druckluftförderung die Adsorptionskammer 11 um die "ausgelassene" Drehung weitergedreht. Die Adsorptionskammer 11 befindet sich bei diesem Ausführungsbeispiel dann in der Position, die sie erreicht hätte, wenn die Adsorptionskammerdrehung gleichzeitig mit Beginn der Druckluftförderung begonnen hätte.

Auf diese Weise kann erreicht werden, dass auch bei kurzen Förderintervallen und dem damit verbundenen häufigen Durchströmen der still stehenden Adsorptionskammer 11 das Adsorptionsmaterial 123 keine wesentlich größeren Feuchtigkeitsmengen beim Durchlauf durch den Arbeitsbereich 102 aufzunehmen hat als im stationären Betrieb. Zudem kann erreicht werden, dass gleichzeitig der Teilbereich des Adsorptionsmaterials 123, der den Regenerationsbereich 103 verlässt, im oberen Bereich 131 die unter den gegebenen Bedingungen maximal mögliche Temperatur erreicht und gut regeneriert wird.

Bevorzugt wird sichergestellt, dass das Adsorptionsmaterial 123 im Regenerationsbereich 103 mit ausreichend viel Regenerationsluft durchströmt wird. Dazu wird bevorzugt die ausgelassene Drehung der Adsorptionskammer 11 nur so weit nachgeholt, wie sichergestellt ist, dass eine Mindestmenge an Regenerationsluft durch das Adsorptionsmaterial 123 geströmt ist. Hierzu könnte der Massenstrom im Regenerationsgasstrom 42 ermittelt, z.B. gemessen, errechnet oder abgeschätzt werden, insbesondere für die Last- oder Warmlaufbetriebsphase, die der Unterbrechung der Druckluftförderung unmittelbar vorausgeht.

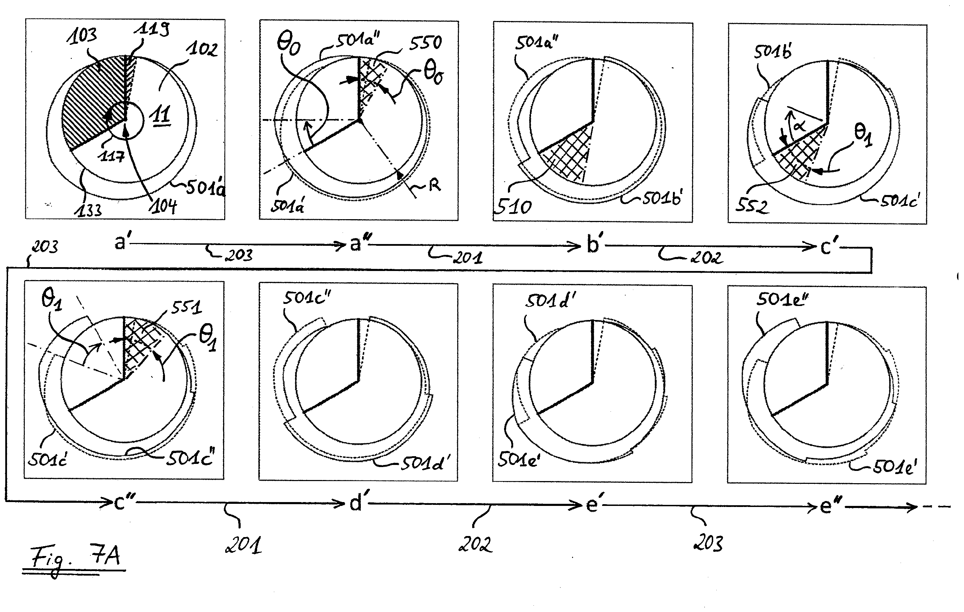

Der Winkel, um den die Adsorptionskammer 11 in der Nachlaufbetriebsphase 203 weitergedreht wird, wird im Weiteren als Nachlaufwinkel θ bezeichnen. In Figur 7A sind zwei Beispiele θ₀ und θ₁ eingezeichnet. Betriebsdaten, die (jeweils für sich allein genommen oder in geeigneter Kombination) bei der Bestimmung des Nachlaufwinkels θ berücksichtigt werden können, sind zum Beispiel folgende:
- die in der Warmlaufphase ausgelassene Drehung, wie bereits angesprochen;
- die geometrischen Abmessungen der drei Sektoren, namentlich der die Größe des Arbeitsbereichs 102 festlegende Winkel δ, der die Größe des Regenerationsbereichs 103 festlegende Winkel β, sowie der die Größe des Kühlbereichs 119 festlegende Winkel γ;
- die Zeitdauer der der Nachlaufbetriebsphase 203 vorhergehenden Warmlaufbetriebsphase 201, also jener Warmlaufbetriebsphase 201, die der aktuellen Nachlaufbetriebsphase 203, ggf. unter Zwischenschaltung einer Lastbetriebsphase 202, vorangeht;
- die Zeitdauer der der Nachlaufbetriebsphase 203 unmittelbar vorhergehenden Lastbetriebsphase 202, falls eine solche ausgelöst wurde, oder ein ausgeführter Rotationswinkel der Adsorptionskammer 11 in dieser Lastbetriebsphase 202;
- die geförderte Druckluftmenge oder der geförderte Druckluftmassenstrom während der vorhergehenden Warmlaufbetriebsphase 201 und Lastbetriebsphase 202;
- die Regenerationsluftmenge während der vorhergehenden Warmlaufbetriebsphase 201 und Lastbetriebsphase 202, also die mit dem Regenerationsgasstrom 42 durch den Regenerationsbereich 103 geströmte Luftmenge, oder der entsprechende Massenstrom;
- Druckluft-Temperaturen, insbesondere die Trocknungseintrittstemperatur, also die Temperatur der Druckluft beim Eintritt in den Arbeitsbereich 102, während der vorhergehenden Warmlaufbetriebsphase 201 und Lastbetriebsphase 202;
- der Druck der zu trocknenden Druckluft während der vorhergehenden Warmlaufbetriebsphase 201 und Lastbetriebsphase 202;
- die Wasserkonzentration im Gasstrom, insbesondere im Eingangsgasstrom 41 oder im Ausgangsgasstrom 43, zum Beispiel während der vorhergehenden Warmlaufbetriebsphase 201 und/oder Lastbetriebsphase 202;
- die Beladung des Adsorptionsmaterials 123;
- die Winkel β, γ, δ.

Bevorzugterweise wird der Nachlaufwinkel θ auf einen Wert von θ ≤ (2/3)β begrenzt. Bei Bedarf können auch weiter zurückliegende Betriebsphasen mit ihren Betriebsdaten berücksichtigt werden. Erforderliche Betriebsdaten, insbesondere auch Wasserkonzentrationen und Beladungen, können bei Erfordernis mittels der Messeinrichtung ME ermittelt werden.

Ein beispielsweise aufgrund einer ausreichenden Dauer der unmittelbar vorhergehenden Lastbetriebsphase 202 und/oder eines ausreichenden Rotationswinkels vorab ermittelter Nachlaufwinkel θ von Null Grad kann einer Festlegung entsprechen, dass eine Nachlaufbetriebsphase 203 nicht einzuleiten ist und diese somit bei der auf diese Lastbetriebsphase 202 auftretenden Unterbrechung der Förderung des Gasstroms entfallen kann.

Der Ablauf des Verfahrens gemäß dem soeben beschriebenen Ausführungsbeispiel der Erfindung soll nun unter Bezugnahme auf die Figuren 7A und 7B, die in der Zusammenschau zu betrachten sind und in elf Teilbildern wiederum eine Folge von Betriebszuständen a' bis g' der Adsorptionsvorrichtung 16 zeigen, erklärt werden. Die Teilbilder der Figuren 7A und 7B sind in gleicher Weise aufgebaut wie jene der Figur 5, so dass diesbezüglich auf die obigen Ausführungen Bezug genommen werden kann. In den Figuren 7A, 7B ist die Beladung des Adsorptionsmaterials 123 nach dem gleichen Prinzip wie in Figur 5 aufgetragen, die Beladungsverläufe der Einzelzustände sind jedoch mit den Bezugszeichen 501a' bis 501g' bezeichnet. Wie in Figur 5, erfolgt auch in den Figuren 7A, 7B die Drehung 117 stets im Uhrzeigersinn.

In den Figuren 7A, 7B liegt hinsichtlich der Druckluftförderung dieselbe Situation vor wie zu Figur 5 beschrieben, wobei aber die Adsorptionskammer 11 in Übereinstimmung mit dem Verfahren gemäß dem zweiten Ausführungsbeispiel der vorliegenden Erfindung gesteuert wird. Die Unterschiede zu dem in Figur 5 gezeigten Ablauf werden nachfolgend erläutert.

Bei dem Ablauf der Figuren 7A, 7B wird jeweils beim Übergang vom Zustand des Teilbildes a' zum Zustand des Teilbildes a", beim Übergang vom Zustand des Teilbildes c' zu jenem des Teilsbildes c", und beim Übergang vom Zustand des Teilbildes e' zu jenem des Teilbildes e" die Adsorptionskammer 11 in einer jeweiligen Nachlaufbetriebsphase 203 bei Unterbrechung der Druckluftförderung noch um einen Nachlaufwinkel θ weitergedreht, um die erhöhte Feuchteaufnahme im Arbeitsbereich 102 (Trocknungssektor) während des Stillstandes der Adsorptionskammer 11 während der Warmlaufbetriebsphase 201 zu kompensieren. Zwei Nachlaufwinkel sind beispielhaft als θ₀ und θ₁ in den Teilbilder a", c', c" eingezeichnet. Die Teilbilder a" und c" zeigen den beim Weiterdrehen der Adsorptionskammer 11 um den zugehörigen Nachlaufwinkel θ₀ bzw. θ₁ jeweils aus dem Regenerationsbereich 103 herausbewegten Teilbereich 550 bzw. 551 des Adsorptionsmaterials 123. Der in der Lastbetriebsphase 202 zwischen Teilbild b' und c' in den Regenerationsbereich 103 hineinbewegte Teilbereich des Adsorptionsmaterials 123 ist mit dem Bezugszeichen 510 bezeichnet. Beim Nachlauf der Adsorptionskammer 11 in der Nachlaufbetriebsphase 203 zwischen den Teilbildern c' und c" wird gleichzeitig mit dem Herausbewegen des Teilbereichs 551 aus dem Regenerationsbereich 103 ein Teilbereich 552 aus dem Arbeitsbereich 102 in den Regenerationsbereich 103 hineingedreht, der in seiner Größe dem Teilbereich 551 entspricht.

Wie aus Figur 5, Teilbild g2, ersichtlich wird, kann die Feuchtebeladung, wenn die Adsorptionsvorrichtung 16 nach dem Verfahren gemäß dem ersten Beispiel betrieben wird, bei dem in Figur 5 illustrierten stark intermittierenden Betrieb mit häufigem Unterbrechen und Wiederanfahren der Druckluftförderung deutlich über dem bevorzugten Beladungsverlauf im stationären Betrieb liegen. Ein Grund hierfür ist, dass das Adsorptionsmaterial 123 bei der Zustandsabfolge der Figur 5 durch die Adsorptionskammerstillstände bei einem Umlauf deutlich mehr Druckluft trocknen muss. Eine zu hohe Beladung im Arbeitsbereich 102 kann jedoch eine verminderte Trocknungsleistung des Adsorptionsmaterials 123 zur Folge haben.

Das Verfahren gemäß dem Ausführungsbeispiel vermeidet diese Problematik. Die Drehung, die in den Nachlaufbetriebszuständen 203 zwischen den Zuständen der Teilbilder c' und c" bzw. e' und e" durchgeführt wird, entspricht dabei der Drehung, die die Adsorptionskammer 11 zwischen dem Beginn der jeweiligen Warmlaufbetriebsphase 201 und dem tatsächlichen Adsorptionskammerstart - also dem Ende der Warmlaufbetriebsphase 201 - durchgeführt hätte, wenn die Adsorptionskammerdrehung gleichzeitig mit der Wiederaufnahme der Druckluftförderung begonnen hätte. Dadurch liegt die Menge an Druckluft, die das Adsorptionsmaterial 123 bei einem Durchgang durch den Arbeitsbereich 102 trocknen muss, nahe am Idealzustand. Dies bewirkt, dass der intermittierende Betrieb keine wesentliche Verschlechterung der Trocknungsleistung nach sich zieht.

Selbst in einem Falle, dass bei kurzer Betriebszeit des Eingangskompressors 1 und damit nur kurzzeitiger Druckluftförderung die Adsorptionskammer 11 durch den verzögerten Anlauf nur um einen geringen Winkel dreht oder eventuell auch gar nicht zu rotieren beginnt, wirkt sich das Verfahren mit den Nachlaufbetriebsphasen 203 günstig aus. Selbst wenn bei der Unterbrechung der Druckluftförderung die Warmlaufbetriebsphase 201 noch nicht beendet ist, kann das Verfahren ein Weiterdrehen der Adsorptionskammer 11 in einer Nachlaufbetriebsphase 203 bewirken. Auch bei häufigen Unterbrechungen der Förderung wird das Adsorptionsmaterial 123 somit nach und nach durch den Regenerationsbereich 103 bewegt. Der Nachlauf der Adsorptionskammer 11 vermeidet also, dass sich das Adsorptionsmaterial 123 zu lange im Arbeitsbereich 102 (Trocknungssektor) aufhält, bevor es in den Regenerationsbereich 103 bewegt wird. Somit wird vermieden, dass so viel feuchte Luft durch das Adsorptionsmaterial 123 strömt, dass es zu einer unzureichenden Trocknung kommt, oder dass sogar ein Feuchtedurchbruch, bei dem die Beladung des Adsorptionsmaterials 123 auch im oberen Bereich 131 der Adsorptionskammer 11 bereichsweise schon so hoch ist, dass keine ausreichende Entfeuchtung der Druckluft mehr möglich ist, auftritt.

Wie Fig. 4 dargestellt ist, steht auch während der Warmlaufbetriebsphase 201 ein erhebliches Desorptionspotenzial zur Verfügung. Dies ist im intermittierenden Betrieb in der Regel ebenfalls der Fall. Durch die Nachlaufbetriebsphase 203 kann sichergestellt werden, dass in der darauffolgenden nächsten Warmlaufbetriebsphase 201 das Adsorptionsmaterial 123 im Regenerationsbereich 103 effizient regeneriert werden kann. In dem in Figur 5, Teilbild c, gezeigten Zustand sind in einem vergleichsweise großen Teil des im Regenerationsbereich 103 befindlichen Teilbereichs des Adsorptionsmaterials 123 nur noch geringe Feuchtigkeitsmengen enthalten. Der Nachlauf, wie er in Figur 7, Teilbilder c' und c", gezeigt ist, ermöglicht eine noch bessere Ausnutzung der in der Warmlaufbetriebsphase 201 im Regenerationsbereich 103 zur Verfügung stehenden Regenerationswärme, indem während der Nachlaufbetriebsphase 203 stark beladenes Adsorptionsmaterial 123 im Teilbereich 552 in den Regenerationsbereich 103 hineinbewegt wird. Dies ermöglicht ein verbessertes Ausnutzen der Regenerationswärme in dem Zeitraum, in dem sie aufgrund der Druckluftförderung automatisch zur Verfügung steht. Zusätzlicher Aufwand für eine Regeneration während einer Unterbrechung der Druckluftförderung ist nicht erforderlich.

Es ist ersichtlich, dass für das vorstehend erläuterte Ausführungsbeispiel die jeweilige Größe der Teilbereiche 410, 510, 550, 551 durch die zylindrische Ausführung der drehbaren Adsorptionskammer 11, wenn diese Größe als Volumenbereich betrachtet wird, von der Höhe H der Adsorptionskammer 11, deren Radius R und dem Winkel α, β, γ, δ, θ₀ bzw. θ₁, über den sich der jeweilige Sektor erstreckt, abhängt. Nachdem bei dem gezeigten Ausführungsbeispiel Höhe H und Radius R der Adsorptionskammer 11 konstant sind, bildet der jeweils eingenommene Winkel ein Maß für die Größe des zugeordneten Bereichs.

Eine Steuerungseinrichtung zur Steuerung der Adsorptionsvorrichtung 16 kann in der Adsorptionsvorrichtung 16 selbst implementiert sein, wie in Figur 1 mit dem Bezugszeichen 14 angedeutet. Bevorzugterweise ist eine Steuerungseinrichtung zur Steuerung der Adsorptionsvorrichtung 16 in einer Eingangskompressorsteuerungseinrichtung implementiert, die bevorzugtermassen selbst in oder am Eingangskompressor 1 angeordnet und in Figur 1 mit dem Bezugszeichen 13 versehen ist. Selbstverständlich ist es jedoch auch möglich, dass eine Steuerungseinrichtung der Adsorptionvorrichtung 16 teilweise oder ganz als externe Steuerungseinrichtung 15 vorgesehen wird oder mit einer externen zentralen Steuerungseinrichtung 15 zusammenwirkt. Jede der Steuerungseinrichtungen 13, 14 , 15 kann entsprechend der in Figur 11 schematisch skizzierten Steuerungseinrichtung S2 ausgebildet sein.

Bei einer Adsorptionsvorrichtung 16 mit einer rotierbaren Adsorptionskammer 11, deren Betrieb vorstehend beschrieben wurde, kann die Drehachse 104 der Adsorptionskammer 11 in einer bevorzugten, in Figur 1 gezeigten Variante vertikal ausgerichtet sein. Der Eintritt des zu trocknenden Gases in den Regenerationsbereich 103 erfolgt hierbei von oben, und der Eintritt des zu trocknenden Gases in den Arbeitsbereich 102 erfolgt von unten. Die im Vorstehenden gebrauchten Formulierungen beziehen sich hinsichtlich des oberen und des unteren Bereiches der Adsorptionskammer 11 auf diese Konstellation. Im Allgemeinen können die Verhältnisse jedoch jeweils genau andersherum sein. Eine horizontale oder sonstige Ausrichtung der Drehachse 104 der Adsorptionskammer 11 ist darüber hinaus denkbar. Ist ein Eintritt des zu trocknenden Gases in den Regenerationsbereich 103 von unten vorgesehen, so werden bevorzugt Maßnahmen zum Abführen des bei Abkühlung im Stillstand anfallenden Kondensates in einem dann oberen Bereich vorgesehen.

Figur 9 zeigt eine Anlage 2000 mit einem Eingangskompressor 2001 und einer Adsorptionsvorrichtung 2016, die gemäß einem Verfahren nach einer Variante des Ausführungsbeispiels betrieben werden kann. Der Eingangskompressor 2001 weist einen Kompressorblock 2002, einen Kühler 2003 und einen Kondensatabscheider 2004 auf. Die Adsorptionsvorrichtung 2016 weist wie die Adsorptionsvorrichtung 16 einen Adsorptionsbehälter 2005 auf, in dem sich eine Adsorptionskammer 2011 mit einem darin befindlichen Adsorptionsmaterial 2123 befindet. Die Adsorptionskammer 2011 ist in dem Adsorptionsbehälter 2005 mittels eines Kammerantriebs 2012 rotierbar. Wie zu Figur 1 und 2 beschrieben, wird bei der Rotationsbewegung 2117 der Adsorptionskammer 2011 das Adsorptionsmaterial 2123 kontinuierlich durch einen Arbeitsbereich, einen Regenerationsbereich und einen Kühlbereich bewegt. Es sind eine Regenerationseintrittskammer 2006, eine Regenerationsaustrittskammer 2007, eine Trocknungseintrittskammer 2008 und eine Trocknungsaustrittskammer 2009 vorgesehen.

Im Unterschied zu der Adsorptionsvorrichtung 16 aus Figur 1 ist in Figur 9 als Druckerhöhungseinrichtung 2018 ein Ejektor vorgesehen. Die Regeneration erfolgt hierbei während der Warmlauf- und Lastbetriebsphase im Nebenstrom mittels eines nach dem Kompressorblock 2002 abgezweigten Regenerationsgasstroms 2042. Ein Kühlgasstrom 2044 zum Abkühlen des Adsorptionsmaterials 2123 während der Nachlaufbetriebsphase 203 wird bei dieser Variante des Verfahrens gemäß dem Ausführungsbeispiel durch ein kontrolliertes Abblasen einer relativ geringen Menge Druckluft im Bereich des Ausgangs der Regenerationsaustrittskammer 2007 erzeugt. Diese relativ geringe Menge an Druckluft kann dabei aus einem über die Ausgangsleitung 2116 an die Adsorptionsvorrichtung 2016 angeschlossenen Leitungsnetz 2032 stammen und, nach Einströmen in die Trocknungsaustrittskammer 2009, Durchströmen des im Kühlbereich befindlichen Adsorptionsmaterials 2123 und Ausströmen aus der Regenerationsaustrittskammer 2007, stromab der Regenerationsaustrittskammer 2007 aus der Leitung 2113 in die Atmosphäre 2100 abgeblasen werden. Dieses Abblasen geschieht durch Öffnen eines steuerbaren Ventils 2020, bei dem es sich zum Beispiel um ein steuerbares Magnetventil handeln kann. Figur 9 illustriert den Kühlgasstrom 2044 für die Nachlaufbetriebsphase 203.

Eine Steuerungseinrichtung zur Steuerung der Adsorptionsvorrichtung 2016 kann in der Adsorptionsvorrichtung 2016 als Steuerungseinrichtung 2014 implementiert sein. Bevorzugt ist die Steuerung der Adsorptionsvorrichtung 2016 in einer Eingangskompressorsteuerungseinrichtung 2013 implementiert, die zum Beispiel in oder am Eingangskompressor 2001 angeordnet ist. Es ist jedoch möglich, dass eine Steuerungseinrichtung der Adsorptionvorrichtung 2016 teilweise oder ganz als externe Steuerungseinrichtung 2015 vorgesehen wird oder mit einer externen zentralen Steuerungseinrichtung 2015 zusammenwirkt. Wiederum versteht sich, dass bei unterschiedlichen Ausführungsbeispielen eine oder alle der Steuerungseinrichtungen 2013, 2014, 2015 oder eine geeignete Kombination von zweier dieser vorhanden sein können. Auch die Steuerungseinrichtungen 2013, 2014 , 2015 können, wie die Steuerungseinrichtungen 13, 14, 15, jeweils entsprechend der schematisch dargestellten Steuerungseinrichtung S2 der Figur 11 ausgeführt sein.

Die in Figur 11 gezeigten Steuerungsmittel S12, S13, S23, S31, S34, S41 sowie die Auswertemittel A der Steuerungseinrichtung S2 müssen dabei nicht zwangsläufig als voneinander getrennte Einheiten ausgebildet sein, sondern ihre Funktionen können auch in einer oder mehreren größeren funktionalen Einheiten zusammengefasst werden. Die Steuerungseinrichtung S2 kann bevorzugt in der Weise ausgebildet werden, dass die zu der Figur 11 beschriebenen Steuerungsmittel S12, S13, S23, S31, S34, S41 und die Auswertemittel A als Routinen, Teilroutinen oder anderweitige funktionale Bestandteile eines in einer geeigneten Programmiersprache codierten und mittels einer Rechenvorrichtung, insbesondere unter Verwendung eines integrierten Schaltkreises wie etwa eines Mikroprozessors, ausführbaren Programms implementiert und zum Beispiel in der Steuerungseinrichtung S2 auf einem geeigneten Speichermedium SM hinterlegt sind.

Obwohl die Erfindung vorstehend anhand bevorzugter Ausführungsbeispiele vollständig beschrieben wurde, ist sie darauf nicht beschränkt, sondern auf vielfältige Art und Weise modifizierbar.

Die Erfindung kann auch für andere Einsatzgebiete als das Entfeuchten von Druckluft nützlich sein, insbesondere für die Entfernung anderer adsorbierbarer Komponenten aus einem Gasstrom.

Auch ist die Erfindung nicht auf eine Adsorptionsvorrichtung mit Vollstromregeneration beschränkt, sondern kann auch auf Adsorptionsvorrichtungen Anwendung finden, bei denen die Regeneration im Nebenstrom erfolgt.

### Bezugszeichenliste

- 1000, 2000: Anlage
- 1, 2001: Eingangskompressor
- 2, 2002: Kompressorblock
- 3, 2003: Kühler
- 4, 2004: Kondensatabscheider
- 5, 2005: Adsorptionsbehälter
- 6, 2006: Regenerationseintrittskammer
- 7, 2007: Regenerationsaustrittskammer
- 8, 2008: Trocknungseintrittskammer
- 9, 2009: Trocknungsaustrittskammer
- 11, 2011: Adsorptionskammer
- 12, 2012: Kammerantrieb
- 13, 2013: Steuerungseinrichtung (Eingangskompressor)
- 14, 2014: Steuerungseinrichtung (Adsorptionsvorrichtung)
- 15, 2015: externe Steuerungseinrichtung
- 16, 2016: Adsorptionsvorrichtung
- 18, 2018: Druckerhöhungseinrichtung
- 2020: steuerbares Ventil
- 32, 2032: Leitungsnetz
- 41: Eingangsgasstrom
- 42, 2042: Regenerationsgasstrom
- 43: Ausgangsgasstrom
- 44, 2044: Kühlgasstrom
- 45: Gasstrom im Arbeitsbereich
- 100, 2100: Atmosphäre
- 101: Adsorptionskanal
- 102: Arbeitsbereich
- 103: Regenerationsbereich
- 104: Drehachse
- 105: Leitung
- 106: erste Zuleitung
- 107: zweite Ableitung
- 108: zweite Zuleitung
- 109: erste Ableitung
- 111: erstes Ende (Adsorptionskammer)
- 112: zweites Ende (Adsorptionskammer)
- 113, 2113: Leitung
- 114: Leitung
- 115: Leitung
- 116, 2116: Ausgangsleitung
- 117, 2117: Rotationsbewegung der Adsorptionskammer
- 119: Kühlbereich
- 123, 2123: Adsorptionsmaterial
- 131: oberer Bereich der Adsorptionskammer
- 132: unterer Bereich der Adsorptionskammer
- 133: Umfangslinie der Adsorptionskammer
- 201: Warmlaufbetriebsphase
- 202: Lastbetriebsphase
- 203: Nachlaufbetriebsphase
- 204: Betriebspause
- 212: Pfeil
- 213: Pfeil
- 214: Pfeil
- 223: Pfeil
- 224: Pfeil
- 231: Pfeil
- 234: Pfeil
- 241: Pfeil
- 243: Pfeil
- 273: Strömungsweg (Kühlgasstrom, Nachlaufbetriebsphase)
- 301: erreichbarer Drucktaupunkt
- 302: Eintrittstemperatur der Regenerationsluft
- 303: Desorptionspotenzial
- 304: Pfeil
- 401a: Beladung des Adsorptionsmaterials (Zustand a)
- 401b: Beladung des Adsorptionsmaterials (Zustand b)
- 401c: Beladung des Adsorptionsmaterials (Zustand c)
- 401d: Beladung des Adsorptionsmaterials (Zustand d)
- 401e: Beladung des Adsorptionsmaterials (Zustand e)
- 401f: Beladung des Adsorptionsmaterials (Zustand f)
- 401g: Beladung des Adsorptionsmaterials (Zustand g)
- 402: Pfeil
- 410: Teilbereich (Adsorptionsmaterial)
- 501a': Beladung des Adsorptionsmaterials (Zustand a')
- 501a": Beladung des Adsorptionsmaterials (Zustand a")
- 501b': Beladung des Adsorptionsmaterials (Zustand b')
- 501c': Beladung des Adsorptionsmaterials (Zustand c')
- 501c": Beladung des Adsorptionsmaterials (Zustand c")
- 501d': Beladung des Adsorptionsmaterials (Zustand d')
- 501e': Beladung des Adsorptionsmaterials (Zustand e')
- 501e": Beladung des Adsorptionsmaterials (Zustand e")
- 501f': Beladung des Adsorptionsmaterials (Zustand f')
- 501g': Beladung des Adsorptionsmaterials (Zustand g')
- 510: Teilbereich (Adsorptionsmaterial)
- 550: Teilbereich (Adsorptionsmaterial)
- 551: Teilbereich (Adsorptionsmaterial)
- 552: Teilbereich (Adsorptionsmaterial)
- A: Auswertemittel
- D: Durchmesser (Adsorptionskammer)
- DE: Detektionseinrichtung
- H: Höhe (Adsorptionskammer)
- ME: Messeinrichtung
- R: Radius (Adsorptionskammer)
- S2: Steuerungseinrichtung
- S12, S13, S23: Steuerungsmittel
- S31, S34, S41: Steuerungsmittel
- t: Zeit
- α: Winkel
- β: Winkel (Regenerationsbereich)
- γ: Winkel (Kühlbereich)
- δ: Winkel (Arbeitsbereich)
- θ: Winkel
- θ₀, θ₁: Winkel

## Patentansprüche

1. Verfahren zum Betreiben einer Adsorptionsvorrichtung (16; 2016) zum zumindest teilweisen Entfernen einer adsorbierbaren und/oder kondensierbaren Komponente aus einem Gasstrom (41),
wobei die Adsorptionsvorrichtung (16; 2016) ein Adsorptionsmaterial (123; 2123) beinhaltet und derart eingerichtet ist,
dass das Adsorptionsmaterial (123; 2123) in einem Arbeitsbereich (102) der Adsorptionsvorrichtung (16; 2016) zum Entfernen der Komponente mit dem Gasstrom in Kontakt gebracht werden kann und
dass das Adsorptionsmaterial (123; 2123) in einem Regenerationsbereich (103) der Adsorptionsvorrichtung (16; 2016) durch Desorption der Komponente regeneriert werden kann; und
dass hierzu in einer Lastbetriebsphase (202) der Adsorptionsvorrichtung (16) aufeinanderfolgende Teilbereiche (410; 510) des Adsorptionsmaterials (123; 2123) kontinuierlich in wiederkehrender Weise relativ zu dem Arbeitsbereich (102) und dem Regenerationsbereich (103) durch den Arbeitsbereich (102) und den Regenerationsbereich (103) hindurchbewegt werden können,
wobei das Verfahren folgende Verfahrensschritte aufweist:
- Fördern des Gasstroms (41) durch die Adsorptionsvorrichtung (16; 2016) in der Weise, dass die Komponente zumindest teilweise aus dem Gasstrom (41) entfernt und ein Ausgangsgasstrom (43), aus dem die Komponente zumindest teilweise entfernt ist, bereitgestellt wird; und
- Einleiten einer Nachlaufbetriebsphase (203) der Adsorptionsvorrichtung (16; 2016), während welcher ein Teilbereich (550, 551) des Adsorptionsmaterials (123; 2123) durch eine Bewegung relativ zu dem Regenerationsbereich (103) aus dem Regenerationsbereich (103) herausbewegt wird, bei einer zumindest zeitweiligen Unterbrechung oder Beendigung des Förderns des Gasstroms (41) zur Bereitstellung des Ausgangsgasstroms (43),
**dadurch gekennzeichnet, dass**
zusätzlich zu dem Arbeitsbereich (102) und dem Regenerationsbereich (103) ein Kühlbereich (119) vorgesehen ist und die Adsorptionsvorrichtung (16; 2016) derart ausgebildet ist, dass in der Lastbetriebsphase (202) regeneriertes Adsorptionsmaterial (123; 2123) nach dem Herausbewegen aus dem Regenerationsbereich (103) und vor einem erneuten Hineinbewegen in den Arbeitsbereich (102) auf eine für die zumindest teilweise Entfernung der Komponente aus dem Gasstrom geeignete Temperatur herabgekühlt werden kann, wobei während der Nachlaufbetriebsphase (203) der während der Nachlaufbetriebsphase (203) aus dem Regenerationsbereich (103) herausbewegte Teilbereich (550, 551) des Adsorptionsmaterials (123) durch eine Bewegung des Adsorptionsmaterials (123) relativ zu dem Kühlbereich (119) in den Kühlbereich (119) hineinbewegt und/oder zumindest teilweise durch den Kühlbereich (119) hindurchbewegt wird und dort gekühlt wird, und dass
die Kühlung in der Nachlaufbetriebsphase (203) in der Weise erfolgt, dass während der Nachlaufbetriebsphase (203) ein Kühlgasstrom (44; 2044) mittels einer unabhängig von dem Fördern des Gasstroms (41) zur Bereitstellung des Ausgangsgasstroms (43) steuerbaren Einrichtung (18; 2020), insbesondere mittels eines Verdichters oder eines Gebläses oder einer Pumpe oder eines steuerbaren Ventils, herbeigeführt wird, wobei der Kühlgasstrom (44; 2044) in dem Kühlbereich (119) mit dem Adsorptionsmaterial (123; 2123) zur Kühlung desselben in Kontakt gebracht wird.

2. Verfahren nach Anspruch 1, **dadurch gekennzeichnet, dass** das Einleiten der Nachlaufbetriebsphase (203)
in Abhängigkeit von Betriebsdaten der Adsorptionsvorrichtung (16; 2016), die einer oder mehreren Betriebsphasen (201, 202, 203) und/oder Betriebspausen (204) der Adsorptionsvorrichtung (16; 2016) zugeordnet sind und/oder
in Abhängigkeit von Betriebsdaten einer Anlage (1000; 2000), in welcher die Adsorptionsvorrichtung (16; 2016) verwendet wird und/oder
in Abhängigkeit von einer Zeitdauer einer oder mehrerer Betriebsphasen (201, 202, 203) und/oder Betriebspausen (204) der Adsorptionsvorrichtung (16; 2016) und/oder in Abhängigkeit von einem oder mehreren vorbestimmten Parametern (β, γ, δ) der Adsorptionsvorrichtung (16; 2016) und/oder des Adsorptionsmaterials (123; 2123) erfolgt.

3. Verfahren nach Anspruch 1 oder 2, **dadurch gekennzeichnet,**
**dass** die Nachlaufbetriebsphase (203) unmittelbar im Anschluss an die zumindest zeitweilige Unterbrechung oder Beendigung des Förderns des Gasstroms (41) zur Bereitstellung des Ausgangsgasstroms (43) eingeleitet wird oder
**dass** die Nachlaufbetriebsphase (203) mit einer Verzögerung zwischen dem Zeitpunkt der zumindest zeitweiligen Unterbrechung oder Beendigung des Förderns des Gasstroms (41) zur Bereitstellung des Ausgangsgasstroms (43) und dem Zeitpunkt des Einleitens der Nachlaufbetriebsphase (203) eingeleitet wird, wobei die Verzögerung bevorzugt eine Zeitdauer von höchstens zehn Minuten, besonders bevorzugt eine Zeitdauer von höchstens fünf Minuten, aufweist.

4. Verfahren nach einem der Ansprüche 1 bis 3, **dadurch gekennzeichnet, dass** in dem Regenerationsbereich (103) keine oder im Wesentlichen keine Regeneration des Adsorptionsmaterials (123; 2123) erfolgt, während das Fördern des Gasstroms (41) zur Bereitstellung des Ausgangsgasstroms (43) zumindest zeitweilig unterbrochen oder beendet ist.

5. Verfahren nach einem der vorstehenden Ansprüche, **dadurch gekennzeichnet, dass** die Adsorptionsvorrichtung (16; 2016) derart eingerichtet ist, dass relativ zu einer Umgebung, in der die Adsorptionsvorrichtung (16; 2016) betrieben wird, der Arbeitsbereich (102) und der Regenerationsbereich (103) stillstehend und das Adsorptionsmaterial (123) bewegbar vorgesehen sind.

6. Verfahren nach einem der vorstehenden Ansprüche, **dadurch gekennzeichnet, dass** während des Förderns des Gasstroms (41) zur Bereitstellung des Ausgangsgasstroms (43) der Gasstrom (41) durch einen der Adsorptionsvorrichtung (16; 2016) eingangsseitig vorgeschalteten Eingangskompressor (1; 2001) verdichtet wird.

7. Verfahren nach einem der vorstehenden Ansprüche, **dadurch gekennzeichnet, dass** während des Förderns des Gasstroms (41) zur Bereitstellung des Ausgangsgasstroms (43) die Regeneration in der Weise erfolgt, dass ein Regenerationsgasstrom (42) in dem Regenerationsbereich (103) mit dem Adsorptionsmaterial (123; 2123) in Kontakt gebracht wird.

8. Verfahren nach Anspruch 7, **dadurch gekennzeichnet, dass** während des Förderns des Gasstroms (41) zur Bereitstellung des Ausgangsgasstroms (43) eine Vollstromregeneration des Adsorptionsmaterials (123) erfolgt und dass hierzu der Gasstrom (41) als Vollstrom den Regenerationsgasstrom (42) bildet, der Regenerationsgasstrom (42) nach einem Verlassen des Regenerationsbereichs (103) für sich separat oder vereinigt mit einem weiteren Gasstrom (44; 2044) dem Arbeitsbereich (102) zugeführt wird und dort zum zumindest teilweisen Entfernen der Komponente mit dem Adsorptionsmaterial (123) in Kontakt gelangt.

9. Verfahren nach Anspruch 7 oder 8, **dadurch gekennzeichnet, dass** während des Förderns des Gasstroms (41) zur Bereitstellung des Ausgangsgasstroms (43) der Regenerationsgasstrom (42), nachdem er den Regenerationsbereich (103) verlassen hat und bevor er in den Arbeitsbereich (102) eintritt, für sich separat oder vereinigt mit einem weiteren Gasstrom (44; 2044) mittels eines Kühlers (3) abgekühlt und die Komponente zumindest teilweise kondensiert und als Kondensat abgeschieden wird.

10. Verfahren nach einem der Ansprüche 7 bis 9, **dadurch gekennzeichnet, dass** der Druck des Regenerationsgasstroms (42), für sich separat oder vereinigt mit einem weiteren Gasstrom (44; 2044), mittels einer Druckerhöhungseinrichtung (18; 2018), insbesondere mittels eines Verdichters oder eines Gebläses oder einer Pumpe, angehoben wird, bevor der Regenerationsgasstrom (42) in den Arbeitsbereich (102) eintritt.

11. Verfahren nach einem der vorstehenden Ansprüche, **dadurch gekennzeichnet, dass** bei einem Beginn oder einer Wiederaufnahme des Förderns des Gasstroms (41) zur Bereitstellung des Ausgangsgasstroms (43) die Adsorptionsvorrichtung (16) zunächst in einer Warmlaufbetriebsphase (201) betrieben wird, während der der Gasstrom (41) zur Bereitstellung des Ausgangsgasstroms (43) gefördert wird und das Adsorptionsmaterial (123; 2123) relativ zu dem Arbeitsbereich (102) und dem Regenerationsbereich (103) stillsteht.

12. Verfahren nach Anspruch 11, **dadurch gekennzeichnet, dass** im Anschluss an die Warmlaufbetriebsphase (201) eine Lastbetriebsphase (202), während der aufeinanderfolgende Teilbereiche (410; 510) des Adsorptionsmaterials (123; 2123) kontinuierlich in wiederkehrender Weise relativ zu dem Arbeitsbereich (102) und dem Regenerationsbereich (103) durch den Arbeitsbereich (102) und den Regenerationsbereich (103) hindurchbewegt werden, eingeleitet wird.

13. Verfahren nach Anspruch 12, **dadurch gekennzeichnet, dass** die Zeitdauer der Warmlaufbetriebsphase (201), genommen von dem Beginn oder der Wiederaufnahme des Förderns des Gasstroms (41) zur Bereitstellung des Ausgangsgasstroms (43) bis zum Einleiten der Lastbetriebsphase (202), variabel ist.

14. Verfahren nach Anspruch 12 oder 13, **dadurch gekennzeichnet, dass** die Zeitdauer der Warmlaufbetriebsphase (201), genommen von dem Beginn oder der Wiederaufnahme des Förderns des Gasstroms (41) zur Bereitstellung des Ausgangsgasstroms (43) bis zum Einleiten der Lastbetriebsphase (202),
unter Berücksichtigung von Betriebsdaten der Adsorptionsvorrichtung (16; 2016), die einer laufenden Betriebsphase (201-203) und/oder einer vorangegangenen Betriebsphase (201-203) und/oder Betriebspause (204) oder mehreren vorangegangenen Betriebsphasen (201-203) und/oder Betriebspausen (204) der Adsorptionsvorrichtung (16; 2016) zugeordnet sind und/oder
unter Berücksichtigung von Betriebsdaten einer Anlage (1000; 2000), in welcher die Adsorptionsvorrichtung (16; 2016) verwendet wird und/oder
unter Berücksichtigung einer Zeitdauer einer oder mehrerer vorangegangener Betriebsphasen (201-203) und/oder Betriebspausen (204) der Adsorptionsvorrichtung (16; 2016) und/oder
unter Berücksichtigung eines oder mehrerer vorbestimmter Parameter (β, γ, δ) der Adsorptionsvorrichtung (16; 2016) und/oder des Adsorptionsmaterials (123; 2123) bestimmt wird.

15. Verfahren nach Anspruch 1 in Verbindung mit Anspruch 10, **dadurch gekennzeichnet, dass** die Druckerhöhungseinrichtung (18) die steuerbare Einrichtung bildet und dass der Kühlgasstrom (44) während der Nachlaufbetriebsphase (203) mittels der Druckerhöhungseinrichtung (18) herbeigeführt wird, wobei vorzugsweise eine Förderleistung der Druckerhöhungseinrichtung (18) bei der Einleitung der Nachlaufbetriebsphase (203) oder während der Nachlaufbetriebsphase (203) auf ein für die Herbeiführung eines hinreichenden Kühlgasstroms (44) geeignetes Maß eingestellt wird, insbesondere gegenüber der Förderleistung in der vorangehenden Lastbetriebsphase (202) verringert wird.

16. Verfahren nach einem der vorstehenden Ansprüche, **dadurch gekennzeichnet, dass** eine Größe (θ₀, θ₁) des während der Nachlaufbetriebsphase (203) aus dem Regenerationsbereich (103) herausbewegten Teilbereichs (550, 551) des Adsorptionsmaterials (123; 2123) nicht mehr als zwei Drittel einer Größe (β) des Regenerationsbereichs (103) beträgt.

17. Verfahren nach einem der vorstehenden Ansprüche, **dadurch gekennzeichnet, dass** eine Zeitdauer der Nachlaufbetriebsphase (203) und/oder eine Größe (θ₀, θ₁) des in der Nachlaufbetriebsphase (203) aus dem Regenerationsbereich (103) herauszubewegenden Teilbereichs (550, 551) des Adsorptionsmaterials (123; 2123) fest eingestellt ist oder
in Abhängigkeit von Betriebsdaten der Adsorptionsvorrichtung (16; 2016), die einer oder mehreren Betriebsphasen (201-203) und/oder Betriebspausen (204) der Adsorptionsvorrichtung (16; 2016) zugeordnet sind und/oder
in Abhängigkeit von Betriebsdaten einer Anlage (1000; 2000), in welcher die Adsorptionsvorrichtung (16; 2016) verwendet wird und/oder
in Abhängigkeit von der Dauer einer oder mehrerer Betriebsphasen (201-203) und/oder Betriebspausen (204) der Adsorptionsvorrichtung (16; 2016) und/oder
in Abhängigkeit von einem oder mehreren vorbestimmten Parametern (β, γ, δ) der Adsorptionsvorrichtung (16; 2016) und/oder des Adsorptionsmaterials (123; 2123) bestimmt wird.

18. Verfahren nach einem der vorstehenden Ansprüche in Verbindung mit Anspruch 11, **dadurch gekennzeichnet, dass** bei der Bestimmung einer Zeitdauer der Nachlaufbetriebsphase (203) und/oder einer Größe (θ₀, θ₁) des in der Nachlaufbetriebsphase (203) aus dem Regenerationsbereich (103) herauszubewegenden Teilbereichs (550, 551) des Adsorptionsmaterials (123; 2123) ein Maß für die Bewegung, die das Adsorptionsmaterial (123; 2123) während der Zeitdauer der Warmlaufbetriebsphase (201), insbesondere der letzten der Nachlaufbetriebsphase (203) vorangegangenen Warmlaufbetriebsphase (201), relativ zu dem Arbeitsbereich (102) und dem Regenerationsbereich (103) ausgeführt hätte, wenn die Adsorptionsvorrichtung (16; 2016) statt in der Warmlaufbetriebsphase (201) in einer Lastbetriebsphase (202) betrieben worden wäre, berücksichtigt wird.

19. Steuerungseinrichtung (S2), welche dafür ausgebildet ist, eine Adsorptionsvorrichtung (16; 2016) zum zumindest teilweisen Entfernen einer adsorbierbaren und/oder kondensierbaren Komponente aus einem Gasstrom (41) für einen Betrieb gemäß einem Verfahren nach einem der Ansprüche 1 bis 18 zu steuern,
wobei die zu steuernde Adsorptionsvorrichtung (16; 2016) ein Adsorptionsmaterial (123; 2123) beinhaltet und derart eingerichtet ist,
dass das Adsorptionsmaterial (123; 2123) in einem Arbeitsbereich (102) der Adsorptionsvorrichtung (16; 2016) zum Entfernen der Komponente mit dem Gasstrom in Kontakt gebracht werden kann und
dass das Adsorptionsmaterial (123; 2123) in einem Regenerationsbereich (103) der Adsorptionsvorrichtung (16; 2016) durch Desorption der Komponente regeneriert werden kann, und
dass hierzu in einer Lastbetriebsphase (202) der Adsorptionsvorrichtung (16) aufeinanderfolgende Teilbereiche (410; 510) des Adsorptionsmaterials (123; 2123) kontinuierlich in wiederkehrender Weise relativ zu dem Arbeitsbereich (102) und dem Regenerationsbereich (103) durch den Arbeitsbereich (102) und den Regenerationsbereich (103) hindurchbewegt werden können;
wobei die Steuerungseinrichtung (S2) Steuerungsmittel (S23, S13)
zum Einleiten einer Nachlaufbetriebsphase (203) der Adsorptionsvorrichtung (16; 2016) und
zum Ansteuern der Adsorptionsvorrichtung (16; 2016) derart, dass während der Nachlaufbetriebsphase (203) ein Teilbereich (550, 551) des Adsorptionsmaterials (123; 2123) durch eine Bewegung relativ zu dem Regenerationsbereich (103) aus dem Regenerationsbereich (103) herausbewegt wird, wenn ein Fördern des Gasstroms (41) durch die Adsorptionsvorrichtung (16; 2016) in der Weise, dass die Komponente zumindest teilweise aus dem Gasstrom (41) entfernt und ein Ausgangsgasstrom (43), aus dem die Komponente zumindest teilweise entfernt ist, bereitgestellt wird, zumindest zeitweilig unterbrochen oder beendet wird,
aufweist.

## Claims

1. Method for operating an adsorption apparatus (16; 2016) for removing an adsorbable and/or condensable component from a gas flow (41) at least in part,
the adsorption apparatus (16; 2016) containing an adsorption material (123; 2123) and being set up in such a way
that the adsorption material (123; 2123) can be brought into contact with the gas flow in a working region (102) of the adsorption apparatus (16; 2016) to remove the component; and
that the adsorption material (123; 2123) can be regenerated in a regeneration region (103) of the adsorption apparatus (16; 2016) by desorption of the component; and
that for this purpose, in a load operating phase (202) of the adsorption apparatus (16), successive sub-regions (410; 510) of the adsorption material (123; 2123) can be moved through the working region (102) and the regeneration region (103) continuously in a periodic manner relative to the working region (102) and the regeneration region (103),
wherein the method has the following method steps:
- conveying the gas flow (41) through the adsorption apparatus (16; 2016) in such a way that the component is removed at least in part from the gas flow (41) and an output gas flow (43) from which the component has been removed at least in part is provided; and
- in the event of an at least temporary interruption to or termination of the conveyance of the gas flow (41) for providing the output gas flow (43), initiating a post-operating phase (203) of the adsorption apparatus (16; 2016) is initiated, during which a sub-region (550, 551) of the adsorption material (123; 2123) is moved out of the regeneration region (103) by a movement relative to the regeneration region (103),
**characterized in that**
in addition to the working region (102) and the regeneration region (103), a cooling region (119) is provided, and the adsorption apparatus (16; 2016) is formed in such a way that in the load operating phase (202), regenerated adsorption material (123; 2123), after moving out of the regeneration region (103) and before moving into the working region (102) again, can be cooled to a temperature suitable for at least partially removing the component from the gas flow, the sub-region (550, 551) of the adsorption material (123) which is moved out of the regeneration region (102) during the post-operating phase (203) being moved into the cooling region (119) and/or moved at least in part through the cooling region (119) by a movement of the adsorption material (123) relative to the cooling region (119), and being cooled therein, during the post-operating phase (203), and that
the cooling in the post-operating phase (203) takes place in such a way that during the post-operating phase (203) a cooling gas flow (44; 2044) is guided past by means of a device (18; 2020) which is controllable independently of the conveyance of the gas flow (41) for providing the output gas flow (43), in particular by means of a compressor or a fan or a pump or a controllable valve, the cooling gas flow (44; 2044) being brought into contact with the adsorption material (123; 2123) in the cooling region to cool it.

2. Method according to claim 1, **characterised in that** the initiation of the post-operating phase (203) takes place
as a function of operating data of the adsorption apparatus (16; 2016), which are assigned to one or more operating phases (201, 202, 203) and/or operating pauses (204) of the adsorption apparatus (16; 2016), and/or
as a function of operating data of a system (1000; 2000) in which the adsorption apparatus (16; 2016) is being used, and/or
as a function of a duration of one or more operating phases (201, 202, 203) and/or operating pauses (204) of the adsorption apparatus (16; 2016), and/or
as a function of one or more predetermined parameters (β, γ, δ) of the adsorption apparatus (16; 2016) and/or the adsorption material (123; 2123).

3. Method according to either claim 1 or claim 2, **characterised**
**in that** the post-operating phase (203) is initiated directly subsequent to the at least temporary interruption to or termination of the conveyance of the gas flow (41) for providing the output gas flow (43), or
**in that** the post-operating phase (203) is initiated with a delay between the time of the at least temporary interruption to or termination of the conveyance of the gas flow (41) for providing the output gas flow (43) and the time of the initiation of the post-operating phase (203), the delay preferably having a duration of at most ten minutes, particularly preferably a duration of at most five minutes.

4. Method according to any of claims 1 to 3, **characterised in that** in the regeneration region (103) no or substantially no regeneration of the adsorption material (123; 2123) takes place while the conveyance of the gas flow (41) for providing the output gas flow (43) is at least temporarily interrupted or terminated.

5. Method according to any of the preceding claims, **characterised in that** the adsorption apparatus (16; 2016) is set up in such a way that the working region (102) and the regeneration region (103) are provided stationary and the adsorption material (123) is provided movable relative to an environment in which the adsorption apparatus (16; 2016) is operated.

6. Method according to any of the preceding claims, **characterised in that** during the conveyance of the gas flow (41) for providing the output gas flow (43) the gas flow (41) is compressed by an input compressor (1; 2001) connected upstream from the adsorption apparatus (16; 2016) at the input side.

7. Method according to any of the preceding claims, **characterised in that** during the conveyance of the gas flow (41) for providing the output gas flow (43) the regeneration takes place in such a way that a regeneration gas flow (42) is brought into contact with the adsorption material (123; 2123) in the regeneration region (103).

8. Method according to claim 7, **characterised in that** during the conveyance of the gas flow (41) for providing the output gas flow (43) a full flow regeneration of the adsorption material (123) takes place, and **in that** for this purpose the gas flow (41), as a full flow, forms the regeneration gas flow (42), and the regeneration gas flow (42), after leaving the regeneration region (103), is supplied separately in its own right or in combination with a further gas flow (44; 2044) to the working region (102), where it comes into contact with the adsorption material (123) to remove the component at least in part.

9. Method according to either claim 7 or claim 8, **characterised in that** during the conveyance of the gas flow (41) for providing the output gas flow (43) the regeneration gas flow (42), after leaving the regeneration region (103) and before entering the working region (102), is cooled separately in its own right or in combination with a further gas flow (44; 2044) by means of a cooler (3), and the component is condensed and deposited as a condensate at least in part.

10. Method according to any of claims 7 to 9, **characterised in that** the pressure of the regeneration gas flow (42), separately in its own right or in combination with a further gas flow (44; 2044), is raised by means of a pressure increasing device (18; 2018), in particular by means of a compressor or a fan or a pump, before the regeneration gas flow (42) enters the working region (102) .

11. Method according to any of the preceding claims, **characterised in that** when conveyance of the gas flow (41) for providing the output gas flow (43) is started or resumed, the adsorption apparatus (16) is initially operated in a warm operating phase (201), during which the gas flow (41) for providing the output gas flow (43) is conveyed and the adsorption material (123; 2123) is stationary relative to the working region (102) and the regeneration region (103).

12. Method according to claim 11, **characterised in that** subsequent to the warm operating phase (201) a load operating phase (202) is initiated, during which successive sub-regions (410; 510) of the adsorption material (123; 2123) are moved through the working region (102) and the regeneration region (102) in a circulating manner with respect to the working region (102) and the regeneration region (103).

13. Method according to claim 12, **characterised in that** the period of the warm operating phase (201), taken from the start or resumption of the conveyance of the gas flow (41) for providing the output gas flow (43) until the initiation of the load operating phase (20), is variable.

14. Method according to either claim 12 or claim 13, **characterised in that** the duration of the warm operating phase (201), taken from the start or resumption of the conveyance of the gas flow (41) for providing the output gas flow (43) until the initiation of the load operating phase (202), is determined
while taking into account operating data of the adsorption apparatus (16; 2016) which are assigned to a continuous operating phase (201-203) and/or a preceding operating phase (201-203) and/or operating pause (204) or a plurality of preceding operating phases (201-203) and/or operating pauses (204) of the adsorption apparatus (16; 2016), and/or
while taking into account operating data of a system (1000, 2000) in which the adsorption device (16; 2016) is used, and/or
while taking into account a duration of one or more preceding operating phases (201-203) and/or operating pauses (204) of the adsorption apparatus (16; 2016), and/or
while taking into account one or more predetermined parameters (β, γ, δ) of the adsorption apparatus (16; 2016) and/or of the adsorption material (123; 2123).

15. Method according to claim 1 in connection with claim 10, **characterised in that** the pressure increasing device (18) forms the controllable device and **in that** the cooling gas flow (44) is guided past by means of the pressure increasing device (18) during the post-operating phase (203), a conveying power of the pressure increasing device (18) preferably being set, when the post-operating phase (203) is initiated or during the post-operating phase (203), to a measure suitable for guiding a sufficient cooling gas flow (44) past, in particular being reduced by comparison with the conveying power in the preceding load operating phase (202).

16. Method according to any of the preceding claims, **characterised in that** a size (θ₀, θ₁) of the sub-region (550, 551) of the adsorption material (123; 2123) which is moved out of the regeneration region (103) during the post-operating phase (203) is not more than two thirds of a size (β) of the regeneration region (103).

17. Method according to any of the preceding claims, **characterised in that** a duration of the post-operating phase (203) and/or a size (θ₀, θ₁) of the sub-region (550, 551) of the adsorption material (123; 2123) which is to be moved out of the regeneration region (103) in the post-operating phase (203)
is fixedly set or is determined
as a function of operating data of the adsorption apparatus (16; 2016), which are assigned to one or more operating phases (201-203) and/or operating pauses (204) of the adsorption apparatus (16; 2016), and/or
as a function of operating data of a system (1000; 2000) in which the adsorption apparatus (16; 2016) is being used, and/or
as a function of a duration of one or more operating phases (201-203) and/or operating pauses (204) of the adsorption apparatus (16; 2016), and/or
as a function of one or more predetermined parameters (β, γ, δ) of the adsorption apparatus (16; 2016) and/or the adsorption material (123; 2123).

18. Method according to any of the preceding claims in connection with claim 11, **characterised in that**, when a duration of the post-operating phase (203) and/or a size (θ₀, θ₁) of the sub-region (550, 551) of the adsorption material (123; 2123) which is to be moved out of the regeneration region (103) in the post-operating phase (203) is being determined, a measure, of the movement which the adsorption material (123; 2123) would have performed relative to the working region (102) and the regeneration region (103) during the duration of the warm operating phase (201), in particular the last warm operating phase (201) preceding the post-operating phase (203), if the adsorption apparatus (16; 2016) had been operated in a load operating phase (202) instead of in the warm operating phase (201), is taken into account.

19. Control device (S2), which is formed to control an adsorption apparatus (16; 2016) for removing an adsorbable and/or condensable component from a gas flow (41) at least in part, for an operation in accordance with a method according to any of claims 1 to 18,
the adsorption apparatus (16; 2016) to be controlled containing an adsorption material (123; 2123) and being set up in such a way
that the adsorption material (123; 2123) can be brought into contact with the gas flow in a working region (102) of the adsorption apparatus (16; 2016) to remove the component, and
that the adsorption material (123; 2123) can be regenerated in a regeneration region (103) of the adsorption apparatus (16; 2016) by desorption of the component, and
that for this purpose, in a load operating phase (202) of the adsorption apparatus (16), successive sub-regions (410; 510) of the adsorption material (123; 2123) can be moved through the working region (102) and the regeneration region (103) continuously in a periodic manner relative to the working region (102) and the regeneration region (103);
the control device (S2) having control means (S23, S13)
for initiating a post-operating phase (203) of the adsorption apparatus (16; 2016) and
for actuating the adsorption apparatus (16; 2016) in such a way that during the post-operating phase (203) a sub-region (550, 551) of the adsorption material (123; 2123) is moved out of the regeneration region (103) by way of a movement relative to the regeneration region (103) when conveyance of the gas flow (41) through the adsorption apparatus (16; 2016), in such a way that the component is removed from the gas flow (41) at least in part and an output gas flow (43) from which the component has been removed at least in part is provided, is interrupted or terminated at least temporarily.

## Revendications

1. Procédé de fonctionnement d'un dispositif d'adsorption (16 ; 2016) destiné à soustraire au moins partiellement un composant adsorbable et/ou condensable d'un flux de gaz (41),
dans lequel le dispositif d'adsorption (16 ; 2016) contient une matière d'adsorption (123 ; 2123) et est configuré de manière à ce
que la matière d'adsorption (123 ; 2123), dans une zone de travail (102) du dispositif d'adsorption (16; 2016), puisse être mise en contact avec le flux de gaz pour soustraire le composant, et
que la matière d'adsorption (123 ; 2123), dans une zone de régénération (103) du dispositif d'adsorption (16 ; 2016), puisse être régénérée par désorption du composant ; et
qu'à cet effet, dans une phase de fonctionnement en charge (202) du dispositif d'adsorption (16), des zones partielles (410 ; 510) successives de la matière d'adsorption (123 ; 2123) puissent être déplacées à travers la zone de travail (102) et la zone de régénération (103), en continu de manière répétitive, par rapport à la zone de travail (102) et à la zone de régénération (103),
le procédé présentant les étapes de procédé suivantes :
- refoulement du flux de gaz (41) à travers le dispositif d'adsorption (16 ; 2016) de manière à ce que le composant soit soustrait au moins en partie du flux de gaz (41) et à ce qu'un flux de gaz de sortie (43), duquel le composant est soustrait au moins en partie, soit fourni ; et
- initialisation d'une phase de fonctionnement de poursuite (203) du dispositif d'adsorption (16 ; 2016), pendant laquelle une zone partielle (550, 551) de la matière d'adsorption (123 ; 2123), en raison d'un mouvement par rapport à la zone de régénération (103), est sortie de la zone de régénération (103), avec une interruption au moins temporaire ou l'achèvement du refoulement du flux de gaz (41) pour la fourniture du flux de gaz de sortie (43),
**caractérisé en ce qu'**en
plus de la zone de travail (102) et de la zone de régénération (103), une zone de refroidissement (119) est ménagée, et **en ce que** le dispositif d'adsorption (16 ; 2016) est réalisé de manière à ce que pendant la phase de fonctionnement en charge (202), de la matière d'adsorption (123 ; 2123) régénérée, après le déplacement hors de la zone de régénération (103) et avant une nouvelle entrée dans la zone de travail (102), puisse être refroidie à une température apte à soustraire au moins partiellement le composant du flux de gaz, dans lequel procédé, pendant la phase de fonctionnement de poursuite (203), la zone partielle (550, 551) de la matière d'adsorption (123), sortie de la zone de régénération (203) pendant la phase de fonctionnement de poursuite (203), est rentrée dans la zone de refroidissement (119) en raison d'un mouvement de la matière d'adsorption (123) par rapport à la zone de refroidissement (119) et/ou est passée au moins en partie à travers la zone de refroidissement (119) et y est refroidie, et que
le refroidissement pendant la phase de fonctionnement de poursuite (203) est réalisé de manière à ce que pendant la phase de fonctionnement de poursuite (203), un flux de gaz refroidi (44 ; 2044) soit entraîné au moyen d'un dispositif (18 ; 2020) commandable indépendamment du refoulement du flux de gaz (41) pour la fourniture du flux de gaz de sortie (43) , notamment au moyen d'un compresseur ou d'un ventilateur ou d'une pompe ou d'une vanne commandable, le flux de gaz refroidi (44 ; 2044) étant mis en contact avec la matière d'adsorption (123 ; 2123) dans la zone de refroidissement (119) pour le refroidissement de celle-ci.

2. Procédé selon la revendication 1, **caractérisé en ce que** l'initialisation de la phase de fonctionnement de poursuite (203) est réalisée
en fonction de données d'exploitation du dispositif d'adsorption (16 ; 2016), lesquelles sont affectées à une ou à plusieurs phases de fonctionnement (201, 202, 203) et/ou périodes d'arrêt de fonctionnement (204) du dispositif d'adsorption (16 ; 2016), et/ou
en fonction de données d'exploitation d'une installation (1000 ; 2000) dans laquelle le dispositif d'adsorption (16 ; 2016) est utilisé, et/ou
en fonction d'une durée d'une ou de plusieurs phases de fonctionnement (201, 202, 203) et/ou de périodes d'arrêt de fonctionnement (204) du dispositif d'adsorption (16 ; 2016), et/ou
en fonction d'un ou de plusieurs paramètres (β, y, δ) du dispositif d'adsorption (16 ; 2016) et/ou de la matière d'adsorption (123 ; 2123).

3. Procédé selon la revendication 1 ou 2, **caractérisé en ce que** la phase de fonctionnement de poursuite (203) est initialisée directement après l'interruption au moins temporaire ou l'achèvement du refoulement du flux de gaz (41) pour la fourniture du flux de gaz de sortie (43) ou en ce que la phase de fonctionnement de poursuite (203) est initialisée avec un retard entre le moment de l'au moins une interruption au moins temporaire ou de l'achèvement du refoulement du flux de gaz (41) pour la fourniture du flux de gaz de sortie (43) et le moment de l'initialisation de la phase de fonctionnement de poursuite (203), le retard présentant de préférence une durée au plus de dix minutes, de manière particulièrement préférée au plus de cinq minutes.

4. Procédé selon l'une quelconque des revendications 1 à 3, **caractérisé en ce qu'**aucune ou essentiellement aucune régénération de la matière d'adsorption (103) n'a lieu dans la zone de régénération (103) pendant que le refoulement du flux de gaz (41) pour la fourniture du flux de gaz de sortie (43) est interrompu au moins temporairement ou est achevé.

5. Procédé selon l'une quelconque des revendications précédentes, **caractérisé en ce que** le dispositif d'adsorption (16 ; 2016) est configuré de manière à ce que, par rapport à un environnement dans lequel le dispositif d'adsorption (16 ; 2016) est exploité, la zone de travail (102) et la zone de régénération (103) soient ménagées de manière immobile et que la matière d'adsorption (123) soit ménagée de manière déplaçable.

6. Procédé selon l'une quelconque des revendications précédentes, **caractérisé en ce que** pendant le refoulement du flux de gaz (41) pour la fourniture du flux de gaz de sortie (43), le flux de gaz (41) est comprimé par un compresseur d'entrée (1 ; 2001) installé en amont, côté entrée, du dispositif d'adsorption (16 ; 2016).

7. Procédé selon l'une quelconque des revendications précédentes, **caractérisé en ce que** pendant le refoulement du flux de gaz (41) pour la fourniture du flux de gaz de sortie (43), la régénération est réalisée de manière à ce que dans la zone de régénération (103), un flux de gaz de régénération (42) soit mis en contact avec la matière d'adsorption (123 ; 2123).

8. Procédé selon la revendication 7, **caractérisé en ce que** pendant le refoulement du flux de gaz (41) pour la fourniture du flux de gaz de sortie (43), une régénération de flux total de la matière d'adsorption (123) est réalisée et **en ce qu'**à cet effet, le flux de gaz (41), en tant que flux total, forme le flux de gaz de régénération (42), **en ce que** le flux de gaz de régénération (42), après une sortie de la zone de régénération (103), est amené à la zone de travail (102) de manière séparée ou combinée à un flux de gaz supplémentaire (44 ; 2044) et y est mis en contact avec la matière d'adsorption (123) pour soustraire le composant au moins partiellement.

9. Procédé selon la revendication 7 ou 8, **caractérisé en ce que** pendant le refoulement du flux de gaz (41) pour la fourniture du flux de gaz de sortie (43), le flux de gaz de régénération (42), après avoir quitté la zone de régénération (103) et avant d'entrer dans la zone de travail (102), est refroidi, seul ou en étant combiné à un flux de gaz supplémentaire (44 ; 2044), au moyen d'un refroidisseur (3), et **en ce que** le composant est condensé au moins en partie ou est séparé en tant que condensat.

10. Procédé selon l'une quelconque des revendications 7 à 9, **caractérisé en ce que** la pression du flux de gaz de régénération (42), seul ou combiné à un flux de gaz supplémentaire (44 ; 2044), est augmentée au moyen d'un dispositif d'augmentation de pression (18 ; 2018), notamment au moyen d'un compresseur ou d'un ventilateur ou d'une pompe, avant que le flux de gaz de régénération (42) n'arrive dans la zone de travail (102).

11. Procédé selon l'une quelconque des revendications précédentes, **caractérisé en ce que**, lors d'un début ou d'une reprise du refoulement du flux de gaz (41) pour la fourniture du flux de gaz de sortie (43), le dispositif d'adsorption (16) fonctionne d'abord dans une phase de fonctionnement en marche à chaud (201) pendant que le flux de gaz (41) pour la fourniture du flux de gaz de sortie (43) est refoulé, et **en ce que** la matière d'adsorption (123 ; 2123) est immobile par rapport à la zone de travail (102) et à la zone de régénération (103).

12. Procédé selon la revendication 11, **caractérisé en ce qu'** après la phase de fonctionnement à chaud (201), une phase de fonctionnement en charge (202) est initialisée pendant que les zones partielles (410 ; 510) successives de la matière d'adsorption (123 ; 2123) sont déplacées à travers la zone de travail (102) et la zone de régénération (103), en continu de manière répétitive, par rapport à la zone de travail (102) et à la zone de régénération (103).

13. Procédé selon la revendication 12, **caractérisé en ce que** la durée de la phase de fonctionnement en marche à chaud (201), prise du début ou de la reprise du refoulement du flux de gaz (41) pour la fourniture du flux de gaz de sortie (43) jusqu'à l'initialisation de la phase de fonctionnement en charge (202), est variable.

14. Procédé selon la revendication 12 ou 13, **caractérisé en ce que** la durée de la phase de fonctionnement en marche à chaud (201), prise du début ou de la reprise du refoulement du flux de gaz (41) pour la fourniture du flux de gaz de sortie (43) jusqu'à l'initialisation de la phase de fonctionnement en charge (202) (202), est déterminée
en tenant compte de données d'exploitation du dispositif d'adsorption (16 ; 2016), lesquelles sont affectées à une phase de fonctionnement en cours (201 - 203) et/ou à une phase de fonctionnement précédente (201 - 203) et/ou à une période d'arrêt de fonctionnement (204) ou à plusieurs phases de fonctionnement précédentes (201 - 203) et/ou périodes d'arrêt de fonctionnement du dispositif d'adsorption (16 ; 2016), et/ou
en tenant compte de données d'exploitation d'une installation (1000 ; 2000) dans laquelle le dispositif d'adsorption (16 ; 2016) est utilisé, et/ou
en tenant compte d'une durée d'une ou de plusieurs phases de fonctionnement précédentes (201 - 203) et/ou de périodes d'arrêt de fonctionnement (204) du dispositif d'adsorption (16 ; 2016), et/ou
en tenant compte d'un ou de plusieurs paramètres (β, γ, δ) du dispositif d'adsorption (16 ; 2016) et/ou de la matière d'adsorption (123 ; 2123).

15. Procédé selon la revendication 1 en relation avec la revendication 10, **caractérisé en ce que** le dispositif d'augmentation de pression (18) forme le dispositif commandable, et **en ce que** le flux de gaz refroidi (44) est entraîné pendant la phase de fonctionnement de poursuite (2013) au moyen du dispositif d'augmentation de pression (18), un débit du dispositif d'augmentation de pression (18), lors de l'initialisation de la phase de fonctionnement de poursuite (203) ou pendant la phase de fonctionnement de poursuite (203), étant réglé sur une mesure apte à entraîner un flux de gaz refroidi (44) suffisant, notamment étant diminué par rapport au débit pendant la phase de fonctionnement en charge (202) précédente.

16. Procédé selon l'une quelconque des revendications précédentes, **caractérisé en ce qu'**une grandeur (θ₀, θ₁) de la zone partielle (550, 551) de la matière d'adsorption (123 ; 2123), sortie de la zone de régénération (103) pendant la phase de fonctionnement de poursuite (203), n'est pas plus de deux tiers d'une grandeur (β) de la zone de régénération (103).

17. Procédé selon l'une quelconque des revendications précédentes, **caractérisé en ce qu'**une durée de la phase de fonctionnement de poursuite (203) et/ou une grandeur (θ₀, θ₁) de la zone partielle (550, 551) de la matière d'adsorption (123 ; 2123), sortie de la zone de régénération (103) pendant la phase de fonctionnement de poursuite (203), sont réglées de manière fixe ou sont déterminées
en fonction de données d'exploitation du dispositif d'adsorption (16 ; 2016), lesquelles sont affectées à une ou à plusieurs phases de fonctionnement (201 - 203) et/ou périodes d'arrêt de fonctionnement (204) du dispositif d'adsorption (16 ; 2016), et/ou
en fonction de données d'exploitation d'une installation (1000 ; 2000) dans laquelle le dispositif d'adsorption (16 ; 2016) est utilisé, et/ou
en fonction de la durée d'une ou de plusieurs phases de fonctionnement (201 - 203) et/ou de périodes d'arrêt de fonctionnement (204) du dispositif d'adsorption (16 ; 2016), et/ou
en fonction d'un ou de plusieurs paramètres prédéterminés (β, γ, δ) du dispositif d'adsorption (16 ; 2016) et/ou de la matière d'adsorption (123 ; 2123).

18. Procédé selon l'une quelconque des revendications précédentes en relation avec la revendication 11, **caractérisé en ce que** lors de la détermination d'une durée de la phase de fonctionnement de poursuite (203) et/ou d'une grandeur (80, 81) de la zone partielle (550, 551) de la matière d'adsorption (123 ; 2123), à sortir de la zone de régénération (103) pendant la phase de fonctionnement de poursuite (203), une mesure pour le mouvement que la matière d'adsorption (123 ; 2123) aurait exécuté pendant la durée de la phase de fonctionnement à chaud (201), notamment de la dernière phase de fonctionnement à chaud (201) précédant la phase de fonctionnement de poursuite (203), par rapport à la zone de travail (102) et à la zone de régénération (103), si le dispositif d'adsorption (16 ; 2016) avait été exploité pendant une phase de fonctionnement en charge (202) au lieu de la phase de fonctionnement à chaud (201), est prise en compte.

19. Dispositif de commande (S2) qui est réalisé pour commander un dispositif d'adsorption (16 ; 2016) destiné à soustraire au moins partiellement un composant adsorbable et/ou condensable d'un flux de gaz (41) pour un fonctionnement suivant un procédé selon l'une quelconque des revendications 1 à 18,
le dispositif d'adsorption (16 ; 2016) à commander contenant une matière d'adsorption (123 ; 2123) et étant configuré de manière à ce que
que la matière d'adsorption (123 ; 2123), dans une zone de travail (102) du dispositif d'adsorption (16; 2016), puisse être mise en contact avec le flux de gaz pour soustraire le composant, et
que la matière d'adsorption (123 ; 2123), dans une zone de régénération (103) du dispositif d'adsorption (16 ; 2016), puisse être régénérée par désorption du composant ; et
qu'à cet effet, pendant une phase de fonctionnement en charge (202) du dispositif d'adsorption (16), des zones partielles (410 ; 510) successives de la matière d'adsorption (123 ; 2123) puissent être déplacées à travers la zone de travail (102) et la zone de régénération (103), en continu de manière répétitive, par rapport à la zone de travail (102) et à la zone de régénération (103 ;
le dispositif de commande (S2) présentant des moyens de commande (S23, S13)
destinés à initialiser une phase de fonctionnement de poursuite (203) du dispositif d'adsorption (16 ; 2016) et destinés à commander le dispositif d'adsorption (16 ; 2016) de manière à ce que pendant la phase de fonctionnement de poursuite (203), une zone partielle (550, 551) de la matière d'adsorption (123 ; 2123) soit sortie de la zone de régénération (103) en raison d'un mouvement par rapport à la zone de régénération (103) lorsqu'un refoulement du flux de gaz (41) à travers le dispositif d'adsorption (16 ; 2016) est interrompu au moins temporairement ou est achevé, de manière à ce que le composant soit soustrait au moins en partie du flux de gaz (41) et qu'un flux de gaz de sortie (43) soit fourni, duquel le composant est au moins soustrait.
